(19) Europäisches Patentamt

European Patent Office

Office européen des brevets

(11) **EP 1 014 273 A2**

(12) **EUROPEAN PATENT APPLICATION**

(43) Date of publication:
28.06.2000 Bulletin 2000/26

(51) Int. Cl.[7]: **G06F 13/42**

(21) Application number: 99124454.2

(22) Date of filing: 08.12.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 24.12.1998 JP 36620098

(71) Applicant: SMC Kabushiki Kaisha
Minato-ku, Tokyo 105-8659 (JP)

(72) Inventors:
• **Koichiro, Gemma,**
  **SMC K. K. Tsukuba Gijutsu Center**
  **Tsukuba-gun, Ibaraki-ken 300-2493 (JP)**
• **Katsuhisa, Endo,**
  **SMC K. K. Tsukuba Gijutsu Center**
  **Tsukuba-gun, Ibaraki-ken 300-2493 (JP)**

(74) Representative:
**KEIL & SCHAAFHAUSEN**
**Patentanwälte,**
**Cronstettenstrasse 66**
**60322 Frankfurt am Main (DE)**

(54) **Method of start/stop synchronous data transmission**

(57) A method of start/stop synchronous transmission allows stable start/stop synchronous communication with a clock signal generated by an oscillator which has a relatively low level of oscillation frequency accuracy. The start/stop synchronous data transmission is carried out between a master station having a high-accuracy oscillating circuit adapted to a baud rate matching transmission line characteristics and at least one slave station having a Low accuracy oscillating circuit. The master station sends a predetermined dummy message at a predetermined period. The slave station counts clock pulses from the Low accuracy oscillating circuit for a time interval between edges of a first bit frame of the dummy message. A baud rate clock signal is generated from the count of clock pulses according to a predetermined algorithm for start/stop synchronous communication.

FIG. 1

## Description

BACKGROUND OF THE INVENTION

Field of the Invention:

The present invention relates to a method of start/stop synchronous data transmission, and more particularly to a method of start/stop synchronous data transmission for data communications between data processors via a communications network, data communications between a host computer and various terminals, data communications between personal computers, and data communications between a personal computer and peripheral terminals.

The present invention is also concerned with a method of start/stop synchronous data transmission for use in a serial transmission bus system such as an industrial serial transmission bus system primarily for transmitting on/off signals, a serial transmission bus system for building management, a serial transmission bus system for use on automobiles, or a serial transmission bus system for home use.

Description of the Related Art:

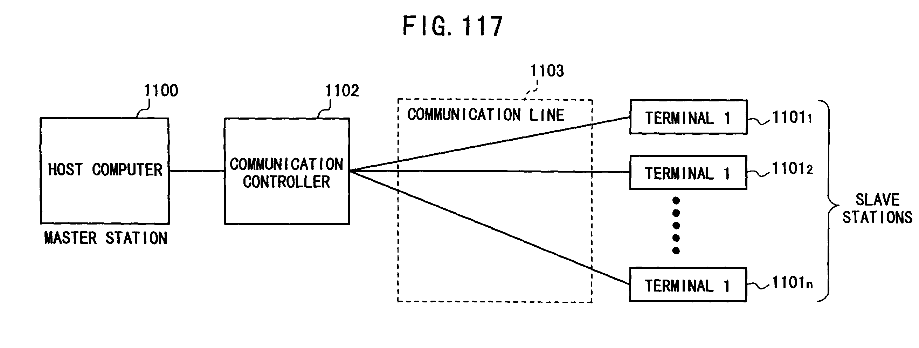

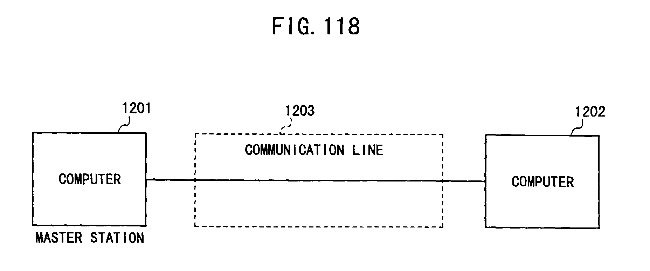

Data communications networks based on the conventional start/stop synchronous data transmission are generally of a network configuration according to the polling/selecting scheme as shown in FIG. 117 of the accompanying drawings and a network configuration according to the contention mode as shown in FIG. 118 of the accompanying drawings. Applicable communications protocols are binary synchronous communications (BSC) according to a basic procedure and a basic data transmission control procedure (JIS-X-5002) or its subset.

In FIG. 117, a host computer 1100 and a plurality of terminals $1101_1$ through $1101_n$ are controlled according to the polling/selecting process as a link control process. The host computer 1100 serves as a master station and the terminals $1101_1$ through $1101_n$ as slave stations. The host computer 1100 and the terminals $1101_1$ through $1101_n$, communicate with each other in a 1 : n topological configuration via a communication controller 1102 and communication links 1103.

In FIG. 118, a computer 1201 and a computer 1202 are interconnected in a 1 : 1 configuration (so-called point-to-point connection) via a communication link 1203 and controlled according to the contention process as a link control process. The computers 1201, 1202 carry out data communications on an equivalent basis with each other.

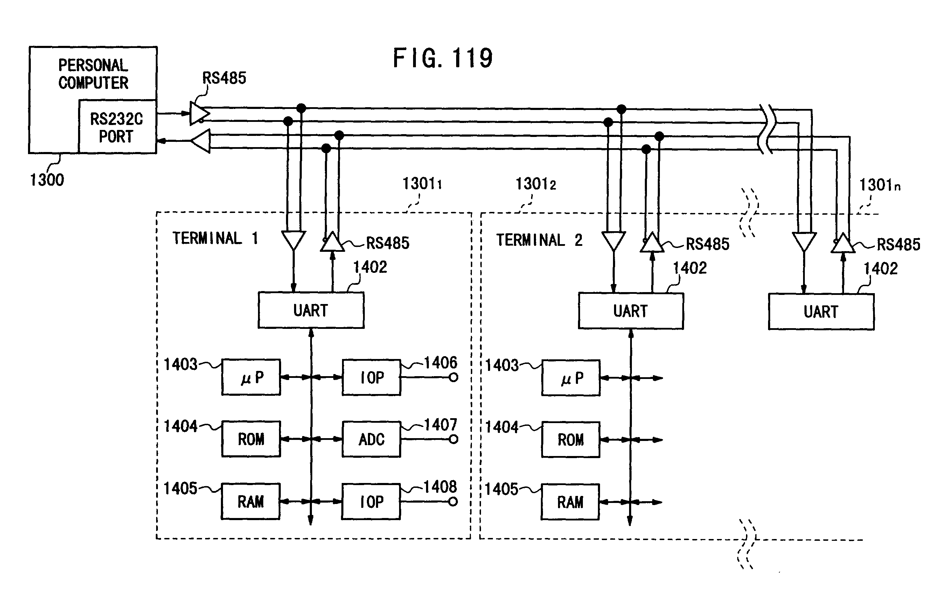

FIG. 119 of the accompanying drawings shows a network configuration which is basically the same as the network configuration shown in FIG. 117 in that it performs communications in a 1 : n topological configuration. However, the network configuration shown in FIG. 119 represents a simplified personal computer network having a personal computer 1300 as a master station and a plurality of terminals $1301_1$ through $1301_n$ as slave stations. The slave stations $1301_1$ through $1301_n$ incorporate respective microcomputers and are connected to the personal computer 1300 by full-duplex lines (uplinks and downlinks). The full-duplex lines comprise twisted-pair cables, and line transceivers are mostly RS-485 transceivers. The simplified personal computer network shown in FIG. 119 can have a total link length of several hundred meters.

Each of the slave stations $1301_1$ through $1301_n$ generally comprises a general-purpose asynchronous receiver/transmitter, e.g., an UART (Universal Asynchronous Receiver Transmitter) 1402 of integrated functional blocks (8251A manufactured by Intel), a microprocessor (μP) 1403, a read-only memory (ROM) 1404, a random-access memory (RAM) 1405, input and output functional blocks (IOP) 1406, 1408, and an A/D converter (ADC) 1407.

With the network configuration shown in FIG. 118, the terminal also often comprises a microcomputer and various devices connected thereto as described above with reference to FIG. 119.

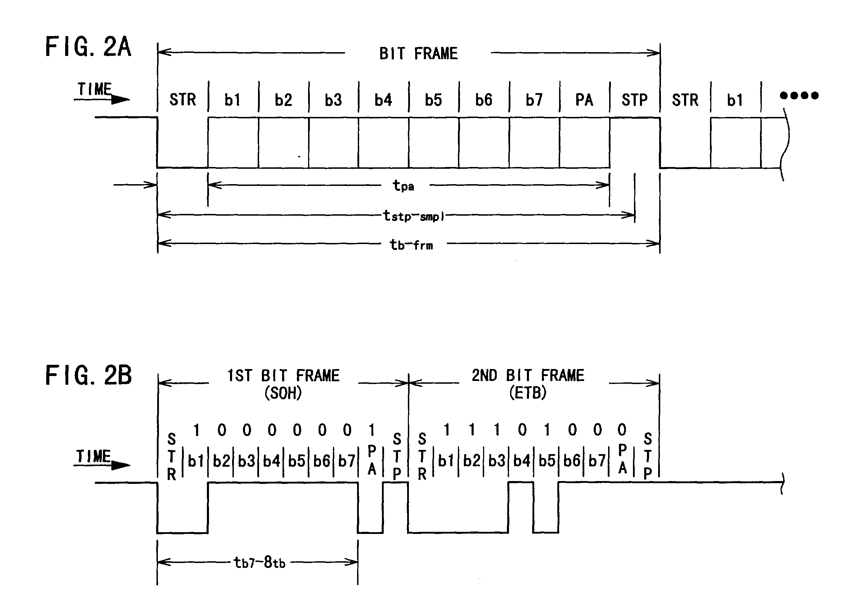

Bit frame structures for start/stop synchronous data transmission are shown in FIGS. 2A and 2B of the accompanying drawings.

The bit frame structures shown in FIGS. 2A and 2B have bits assigned as shown in FIGS. 120 and 121 of the accompanying drawings.

Data transmission is carried out by exchanging messages each comprising one or more characters each in the form of a seven-bit code.

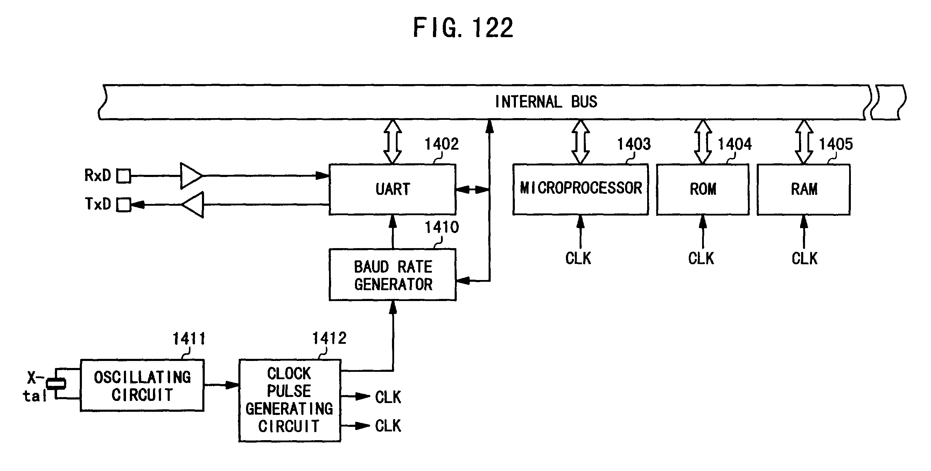

One general structure of a microcomputer including a general-purpose asynchronous receiver/transmitter is shown in FIG. 122 of the accompanying drawings. Operating the general-purpose asynchronous receiver/transmitter usually requires a multiple clock whose frequency is 16, 32, or 64 times the clock frequency of a given baud rate.

As shown in FIG. 122, the microcomputer has a baud rate generator 1410 for generating such a multiple clock. The baud rate generator 1410, which incorporates a programmable frequency divider, is supplied with an output signal from a clock pulse generating circuit 1412 which frequency-divides and shapes an oscillating signal from an oscillating circuit 1411. The baud rate generator 1410 generates a desired multiple clock by setting the frequency-division ratio of the frequency divider. For start/stop synchronous data transmission, a data transmission error occurs and no communications can be achieved unless the baud rate clocks of all stations connected in a network fall in a certain error range. Therefore, a quartz oscillator is connected to the oscillating circuit 1411 to operate it as a quartz oscillating circuit for lowering any clock errors.

Famous serial transmission networks for use in serial transmission bus systems such as industrial serial transmission bus systems primarily for transmitting on/off signals, serial transmission bus systems for building management, serial transmission bus systems for use on automobiles, and serial transmission bus systems for home use, include CAN (Control Area Network), DeviceNet, LONWOKS, PROFIBUS, INTERBUS-S, and AS (Actuator-Sensor)-interface.

CAN was initially developed as a serial transmission bus system for electronic control of vehicle components including an engine, a transmission, a brake, etc. on automobiles. The CAN employs a linear topology, and is capable of data transmission of a maximum of 8 bytes per frame. With the widespread use of CAN communications control integrated circuits, a microcomputer is connected to the network and programmed to add a higher-layer protocol for thereby expanding the serial transmission bus system into an industrial serial transmission bus system. One typical example of such an industrial serial transmission bus system is DeviceNet widely used in the U.S.A.

LONWOKS resides in that, as with the Ethernet, CSMA/CD is employed for bus access control and a microcomputer which incorporates a communications controller as a dedicated integrated circuit is programmed by higher-layer protocol software. LONWOKS has been widely spread mainly as serial transmission bus systems for building management because of the great freedom of a bus topology based on CSMA/CD.

PROFIBUS is of a linear bus topology and combines a token passing system and a master/slave system for bus access control. PROFIBUS has been widely spread as industrial serial transmission bus systems mainly in Germany.

INTERBUS-S employs a ring bus topology and has simplified bus access control into a time-division scanning system. INTERBUS-S is widely used in the European automobile industry as it is capable of high-speed transmission in a wide area and can be used in water-resistant and dust-resistant environments.

AS-interface is a serial transmission bus system that is limited to applications for high-speed data transmission of small bit input/output signals (on/off signals) between 1 through 4 slave terminals, and its purpose is to make slave integrated circuits inexpensive. AS-interface transmits serial signals at a high frequency over a DC 24 V power supply line for slaves. AS-interface is widely used in Europe, and is connected to PROFIBUS and INTERBUS-S via gateways for use as local buses thereof.

DeviceNet and AS-interface will be described as typical examples of serial transmission bus systems.

DeviceNet employs a linear bus as a circuit topology, and uses dedicated cables comprising two sets of twisted-pair wires as a line medium. One of the sets of twisted-pair wires is used as a bus for differentially sending and receiving line signals, and the remaining set of twisted-pair wires is used as a DC 24 V power supply line for slave terminals. RS-485 transceivers are used as line transceivers. CAN is employed in a physical layer and a data link layer.

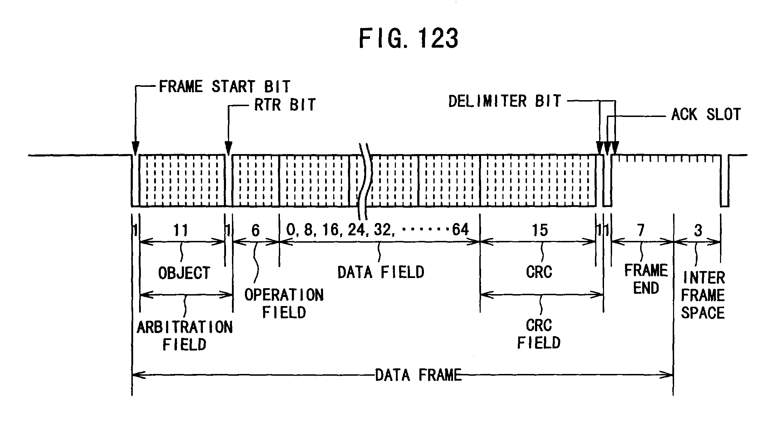

FIG. 123 of the accompanying drawings shows a data frame format for CAN. In FIG. 123, numerals represent bit time lengths. Frame synchronization is used, and CSMA/CD is employed for bus access control. A special process called bit-wise arbitration in an arbitration field at the leading end of a frame can arbitrate a conflict between simultaneous line accesses by a number of terminals without a loss in time. Data that can be transmitted in one frame can be selected in bytes ranging from zero byte to eight bytes (64 bits). Transmission errors are detected by a 15-bit CRC check process or any of various format check processes.

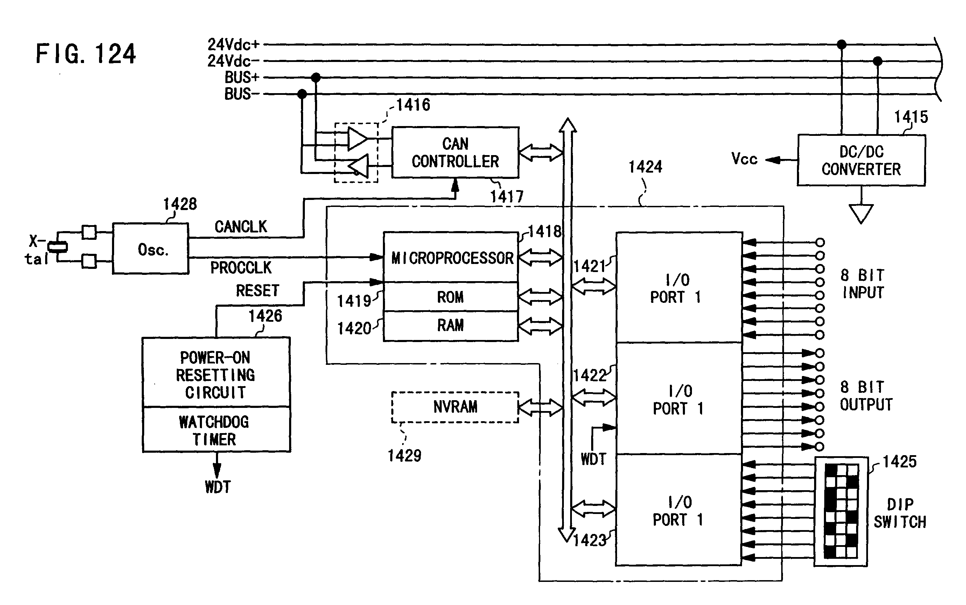

The structure of one typical slave terminal is shown in FIG. 124 of the accompanying drawings. In FIG. 124, a DC 24 V power is converted by a DC/DC converter 1415 into a 5 V power which is supplied to various logic circuits. Lines are connected to a transceiver 1416 such as an RS-485 transceiver, and differentially send and receive serial signals. The transceiver 1416 has input and output terminals connected to a CAN controller integrated circuit 1417 which controls the data link layer. A microcomputer 1424 having a microprocessor 1418, a ROM 1419, a ROM 1420, and three 8-bit I/O ports 1421 through 1423 is programmed by higher-layer communication protocol software of DeviceNet and individual input and output control software that are stored in the ROM 1419. The I/O ports 1421 through 1423 are used to input 8 bits, output 8 bits, and read terminal addresses and settings of a baud rate setting DIP switch 1425. A power-on resetting circuit 1426 and a watchdog timer integrated circuit (the watchdog timer is also referred to as WDT) 1427 generate an initializing signal for the microprocessor and a safety fallback output in bits upon a fatal circuit failure. It is necessary that the CAN controller 1417 be supplied with a highly accurate clock (CAN CLK) whose frequency is 16 times a bit rate for frame synchronization. Such a highly accurate clock and a processor clock (PRO CLK) are generated by an oscillating circuit 1428 equipped with a quartz oscillator.

If terminal addresses and baud rates are to be set remotely from a personal computer that is connected off-line to the circuit, then a non-volatile memory (also referred to as NVRAM) 1429 is added instead of the setting switch such as the DIP switch 1425, and settings are stored in the non-volatile memory 1429.

Since DeviceNet transmit data in bytes, slave terminals may include 8-, 16-, 24-, • • •, 64-point bit input/output devices, and devices which handle character and numeral data, such as analog input/output devices, bar-code readers, position controllers, temperature regulators, etc.

A master station of DeviceNet comprises a programmable logic controller (also referred to as PLC) or a personal computer which carries out discrete control on a ladder diagram.

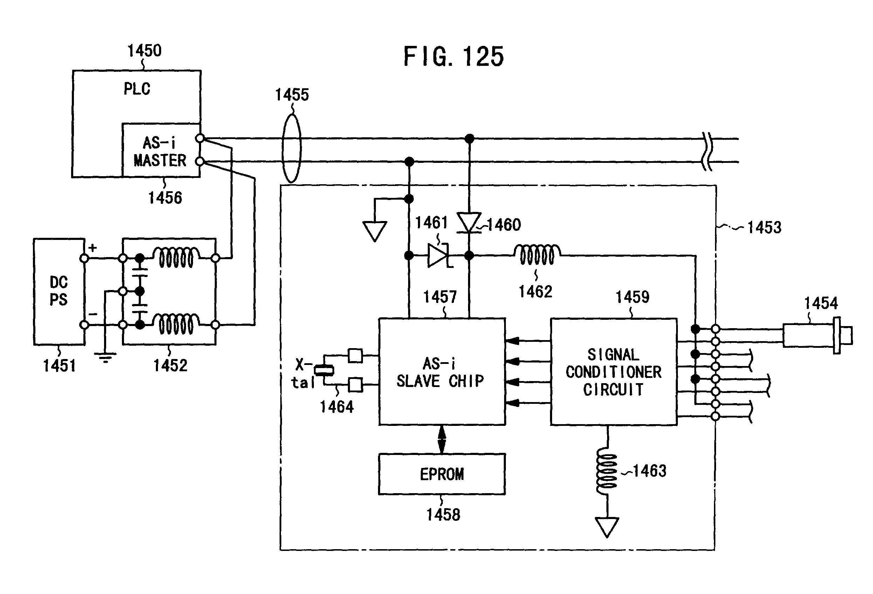

AS-interface is a low-cost serial transmission network that is installed in a decentralized arrangement of 1 through 4 points and limited to applications for transmission of bit input/output signals of binary sensors and actuators. This system resides in inexpensive dedicated slave chips. FIG. 125 of the accompanying drawings shows a system arrangement of AS-interface. For making the system inexpensive, AS-interface employs a cyclic transmission scheme using a single master and slaves which do not need microcomputers and communications protocol software. Required wiring is reduced because serial signals are transmitted at a high frequency over dedicated double-conductor cables which supply an operating power to sensors and actuators that are installed in a decentralized pattern. Operation of AS-interface will be described below with reference to FIG. 125.

In FIG. 125, the system arrangement includes a programmable logic controller (PLC) 1450, a DC 24 V power supply 1451, a high-frequency decoupler 1452, a 4-point input sensor interface slave unit 1453, a two-wire sensor 1454 such as a proximity switch, an AS-interface bus cable 1455, and an AS-interface master 1456 incorporated in the PLC 1450.

The AS-interface bus is a linear bus, but can be branched to allow for a total cable length up to 100 m. The dedicated bus cable comprises a parallel double-conductor flat cable, and can easily be connected to each slave by a pair of blades piercing the cable sheath. A current capacity up to 3 A is allowed for each branch. Output terminals of the DC power supply 1451 are connected through the high-frequency decoupler 1452 to the AS-interface master 1456 incorporated in the PLC 1450. The high-frequency decoupler 1452 is inserted to provide an increased impedance for high-frequency serial signals transmitted over the AS-interface bus cable, so that the signals will not be attenuated by the DC power supply 1451. The AS-interface master 1456 incorporated in the PLC 1450 exchanges bit input and output signals with the PLC 1450, and sends and receives 124-point bit input signals and 124-point bit output signals as high-frequency serial signals over the bus at cyclic time intervals of 5 ms. The number of slaves on the bus is at most 31.

The 4-point input sensor interface slave unit 1453 comprises an AS-interface slave chip 1457, an EEPROM 1458 for storing a terminal address setting, a signal conditioner circuit 1459 for sensor signals, and a quartz oscillator 1464 for generating an oscillating signal having a baud rate frequency. The 4-point input sensor interface slave unit 1453 is capable of being supplied with a maximum of 4-point signals and outputting a maximum of 4-point signals. In the illustrated example, the 4-point input sensor interface slave unit 1453 is supplied with 4-point signals. The 4-point input sensor interface slave unit 1453 also includes a protective diode 1460 for protecting the 4-point input sensor interface slave unit 1453 when the bus is inversely connected, an overvoltage protection zener diode 1461, and high-frequency decouplers 1462, 1463 for the sensors. The bus power supply is used to supply a power to the two-wire sensor 1454.

Slave devices that can be connected to the network include general-purpose 4-point input units, general-purpose 4-point output units, proximity switches (1-point input used) incorporating slave chips, photoelectric switches (1-point input used), and manifold solenoid-operated valves (4-point output used).

The conventional data communications networks for performing start/stop synchronous data transmission requires an externally connected quartz oscillator in order to maintain a desired level of accuracy of a multiple clock whose frequency is a multiple of the clock frequency of a given baud rate. The externally connected quartz oscillator which is required presents an obstacle to the realization of an inexpensive terminal for use in a simplified network including a personal computer, as shown in FIG. 119.

When a desired multiple clock is to be obtained, the oscillating frequency of the quartz oscillator is limited to a certain frequency because of limitations posed by the frequency-dividing function of the baud rate generator. Therefore, the data communications networks have to be designed for a frequency lower than the highest operating frequency of the microcomputer, i.e., the highest processing speed and interrupt response speed of the microcomputer and the DMA transfer speed cannot be achieved.

The industrial serial transmission bus systems, the serial transmission bus systems for building management, the serial transmission bus systems for use on automobiles, and the serial transmission bus systems for home use have a required main function to transmit bit (on/off signals) data. Particularly, the industrial serial transmission bus systems are required to transmit data at a high speed, i.e., a transmission period of 2 ms or less, and also need a function to transmit analog signals, characters, numerals, and simple figures as byte data. However, the number of channels necessary to transmit byte data is small, and a medium data transmission speed is sufficient.

The above serial transmission bus systems of CAN and DeviceNet are highly flexible as they can transmit bit input and output signals and also byte data. However, as serial transmission bus systems for discrete control, they suffer the following problems (a) through (n):

(a) The serial transmission bus systems require many electronic components including microcomputers, transceivers, DC/DC converters, quartz oscillating circuits, etc. other than communications control integrated circuits. The serial transmission bus systems need a large installation area for those electronic components, and are expensive because the individual electronic components are costly.

(b) Since the serial transmission bus systems transmit data in bytes, their component installation area and cost are kept in a reasonable range if they handle 8-point or 16-point input and output signals. However, the individual wires between these units and sensors/actuators positioned in a decentralized configuration are long, and hence are detrimental to the serial transmission bus systems which offer an advantage as a wire saver.

(c) If serial transmission circuits are to be incorporated in binary sensors and actuators for accomplishing the advantage as a wire saver, then since each of the sensors and actuators only requires a 1-point input signal and a 1-point output signal, all the pieces of hardware described above in (a) need to be incorporated, resulting in an increase in the cost per one point.

Proximity switches, photoelectric switches, and solenoid-operated valves which are typical binary sensors and actuators are made smaller in size to meet needs in the market for small-size industrial machines which incorporate those sensors and actuators and reduced installation cubics. If components of CAN and DeviceNet are to be incorporated in those sensors and actuators, then the increased installation cubics thereof poses a problem. If the components of CAN and DeviceNet are actually incorporated in those sensors and actuators, the sensors and actuators are necessarily increased in size, and their commercial values are impaired.

(d) Inasmuch as the serial transmission bus systems basically transmit data in bytes, if they are of a 1-point decentralized configuration, then the number of sensors and actuators that can be connected is greatly reduced because of the limited number of terminals on the bus (up to 64). Generally, discrete control systems of medium or larger scale require 80 through 200 input and output points, and hence need two buses. Moreover, a minimum of 8 bits is required in order to transfer a 1-bit input or output signal in the data frame shown in FIG. 123. Because the CAN standards demand the transmission of one bit using a 55-bit time, the transmission efficiency is lowered to an unduly poor level.

(e) The setting of terminal addresses is indispensable, and hence a setting process needs to be performed for all terminals in constructing and starting a bus system. Many means are necessary for performing such a setting process. A setting action is also indispensable when a terminal fails and needs to be replaced. The time required by such a setting action increases downtime, and the danger of erroneous settings is large. Terminal hardware necessitates either a mechanical switch and its interface circuit or a non-volatile memory, which results in an increased installation cubic or makes the bus system expensive.

(f) A disadvantage of the linear bus topology is that when a line cable disconnection, the site of the line cable disconnection can only be guessed from a spatial distribution of unresponsive terminals. When the serial transmission bus system suffers a failure such that a slave continuously drives a line actively, if an erroneous transmission detecting logic in each slave overlooks such a failure, then it may output erroneous information.

(g) The DC 24 V power supply capability over the bus cable is greatly lowered by a voltage drop caused by the DC resistance of the bus cable, and even when the total length of the bus cable ranges from 100 m to 200m, it can only be used for supplying the power to bus interface circuits with a low current consumption requirement. In view of the voltage drop, the DC/DC converter for the bus interface circuit power supply in each terminal must withstand voltage variations in a wide range from DC 10 V to DC 28 V, and hence is expensive.

AS-interface provides some solutions with respect to the cost and installation area by using a decentralized arrangement of 1 through 4 points. However, AS-interface still suffers the following problems (h) through (n):

(h) AS-interface slave chips do not need a microcomputer and software, but require indispensable external devices including a non-volatile memory and a quartz oscillator. Therefore, in addition to the chip cost, the cost of these additional components is incurred, and an installation cubic for the additional components is necessary. 4-bit input and output units are detrimental to an advantage offered as a wire saver as is the case with the problem (b) described above with respect to CAN and DeviceNet.

(i) For discrete control, it is sufficient for most sensors and actuators to have 1-point bit input and output signals. If AS-interface is combined with sensors and actuators in a 1-point decentralized configuration, then AS-interface may not be satisfactory with respect to cost and installation cubic. For example, if a conventional multipoint serial transmission interface unit is not to be added to a solenoid-operated valve manifold that is widely used for discrete control, but a serial transmission circuit is to be installed on a printed-circuit board which supports a reverse-electromotive-force protection diode near the solenoid coil and operation display LEDs, then the cost is high, and the printed-circuit board fails to provide an installation area.

(j) If all points are arranged in a 1-point decentralized configuration, only 31 slaves can be connected to the bus, then bit input and output capacity is reduced to 1/4. (e.g. $31/124\fallingdotseq1/4$, (4 points/slave*(31 slaves)=124 ) Therefore, if a control system has 80 through 200 input and output points, then it requires 3 through 7 buses.

(k) A process of setting terminal addresses is required. Therefore, the problem (e) described above with respect to CAN and DeviceNet remains to be solved.

(l) Inasmuch as serial transmission signals are sent over the DC power supply wires for sensors and actuators, the wiring is simplified, and the bus system serves as a wire saver. However, a high-voltage rating bipoler device fabrication process is required to manufacture slave chips. In addition, since linear circuits and small logic circuits are mixed with each other, the slave chips, even if mass-produced, are more expensive than would be if manufactured by an inexpensive CMOS logic circuit fabrication process which is currently mainly used.

(m) The problem (f) which is caused by line cable disconnection, as described above with respect to CAN and DeviceNet, also occurs.

(n) As with the problem (g) described above with respect to CAN and DeviceNet, if the number of bus branches is increased in order to provide many bus power supply loads, then the total cable length up to 100 m poses a significant limitation.

SUMMARY OF THE INVENTION

It is a major object of the present invention to provide a method of start/stop synchronous data transmission which is stable even with a CR oscillator chip clock produced at a low oscillating frequency accuracy level by a resistor and a capacitor that are externally connected, and which can be achieved at the highest operating frequency of a microcomputer without being limited by a desired baud rate even if a quartz oscillator is externally connected.

Another object of the present invention is to provide a method of start/stop synchronous data transmission which is achieved with inexpensive slave chips that are manufactured according to CMOS logic circuit fabrication process and do not require any externally connected components, and hence at a cost equal to or lower than the cost of the conventional parallel wiring even in a 1-point decentralized configuration, and which involves a minimum increase in installation cubic when combined with small-size sensors and actuators.

Still another object of the present invention is to provide a method of start/stop synchronous data transmission of 128/256 bit input points and 128/256 bit output points to a host controller in a period of 2/4 ms, for thereby accomplishing both a sufficient input and output capacity and high-speed transmission even for medium- and large-scale discrete control.

Yet another object of the present invention is to provide a method of start/stop synchronous data transmission of 1- through 4-point or 8-point bit input and output signals set per slave, with a maximum number of bit input and output signals being fully usable.

Yet still another object of the present invention is to provide a method of start/stop synchronous data transmission over 8 through 16 byte data transmission channels each at a rate of 9600 bps.

A further object of the present invention is to provide a method of start/stop synchronous data transmission with slaves whose terminal addresses can be set remotely by a master and simply by the support of the master, and which can be deleted or added and whose number of input and output signals can be changed also remotely by the master and simply by the support of the master, while the setting of terminal addresses is made unnecessary when a terminal suffering a failure is to be replaced, so that the time required to recover from the terminal failure will be shortened, and any danger due to an erroneous setting will be eliminated for increased safety.

A still further object of the present invention is to provide a method of start/stop synchronous data transmission over a bus cable to which slave power supply lines are added, such that the bus and the power supply can be connected only by connectors.

A yet further object of the present invention is to provide a method of start/stop synchronous data transmission while preventing erroneous information that is produced in the event of a transmission error from being propagated to a host controller input terminal and slave output terminals, and while detecting a transmission error not only by the slaves but also by the master, so that data will be transmitted only when no transmission error is detected by both the slaves and the master.

A yet still further object of the present invention is to provide a method of start/stop synchronous data transmission while performing a sophisticated transmission error detecting function, a sophisticated failure diagnosing function, and a fault location isolating function, so that the site of a bus cable disconnection can be identified 100 % without fail.

The above and other objects, features, and advantages of the present invention will become more apparent from the following description when taken in conjunction with the accompanying drawings in which preferred embodiments of the present invention are shown by way of illustrative example.

BRIEF DESCRIPTION OF THE DRAWINGS

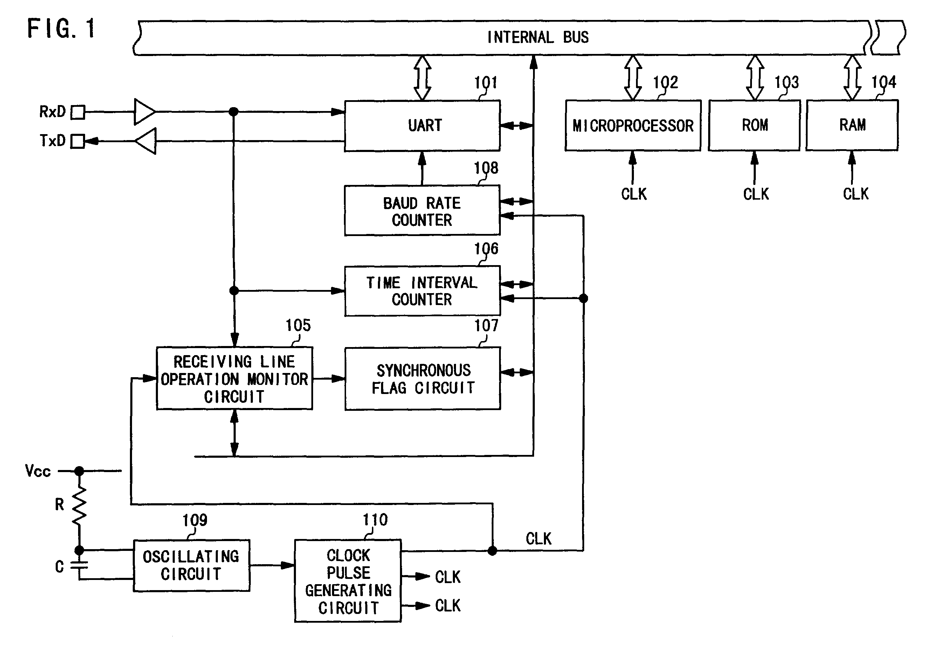

FIG. 1 is a block diagram of a terminal to which a method of start/stop synchronous data transmission according to the present invention is applied;
FIGS. 2A and 2B are diagrams showing bit frame structures for the method of start/stop synchronous data transmission according to the present invention;

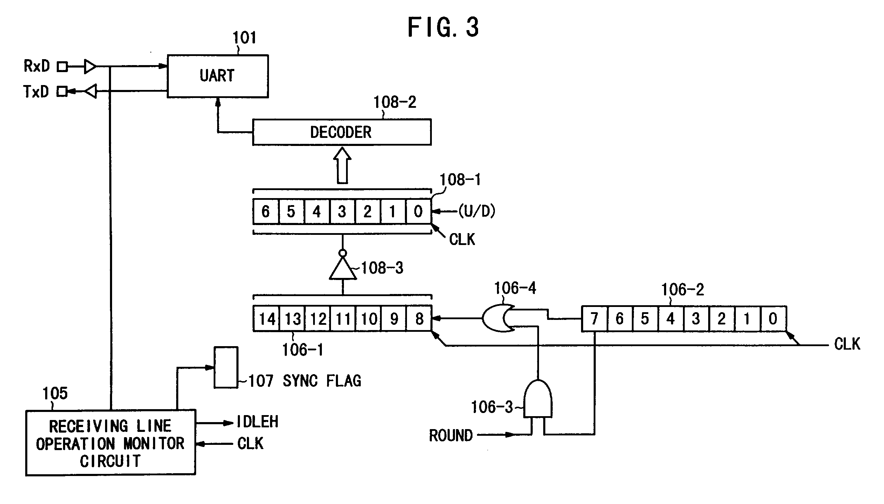

FIG. 3 is a block diagram of a baud rate generator which comprises a receiving line operation monitor circuit, a time interval counter, a synchronous flag circuit, and a baud rate counter in the terminal shown in FIG. 1;

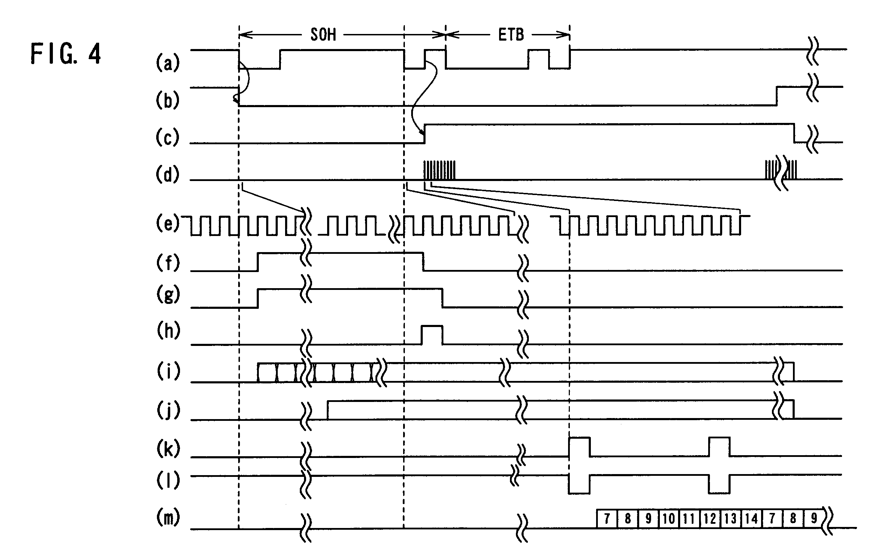

FIG. 4 is a timing diagram illustrative of operation of the baud rate generator shown in FIG. 3;

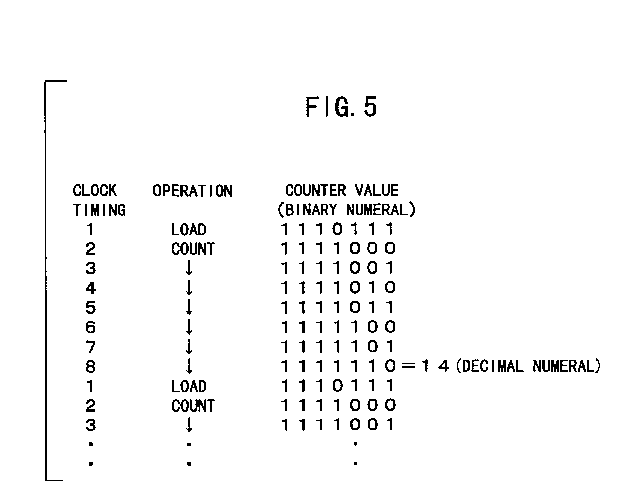

FIG. 5 is a diagram illustrative of a counting process of the baud rate counter in the terminal shown in FIG. 1;

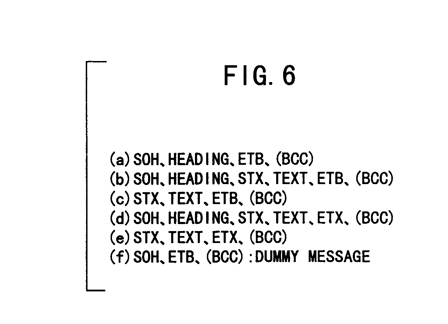

FIG. 6 is a diagram illustrative of an information message format in the method of start/stop synchronous data transmission according to the present invention;

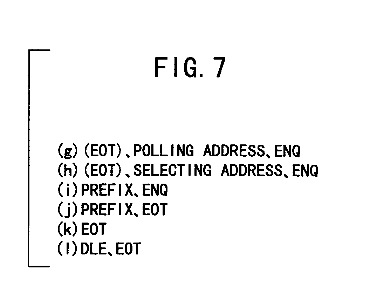

FIG. 7 is a diagram illustrative of a forward-direction monitoring sequence in the method of start/stop synchronous data transmission according to the present invention;

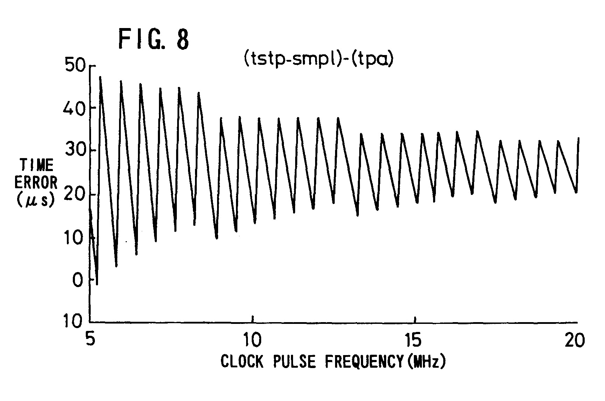

FIG. 8 is a diagram showing the relationship between a clock pulse frequency and a time error in the method of start/stop synchronous data transmission according to the present invention;

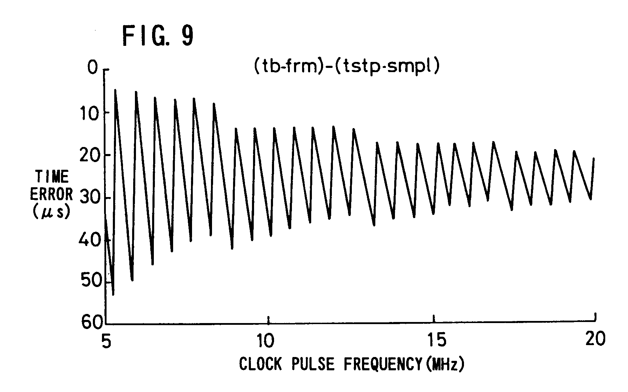

FIG. 9 is a diagram showing the relationship between a clock pulse frequency and a time error in the method of start/stop synchronous data transmission according to the present invention;

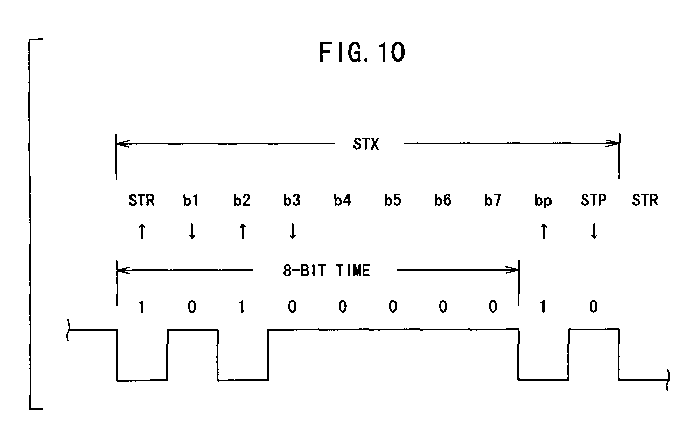

FIG. 10 is a diagram illustrative of a bit time of a dummy message in the method of start/stop synchronous data transmission according to the present invention;

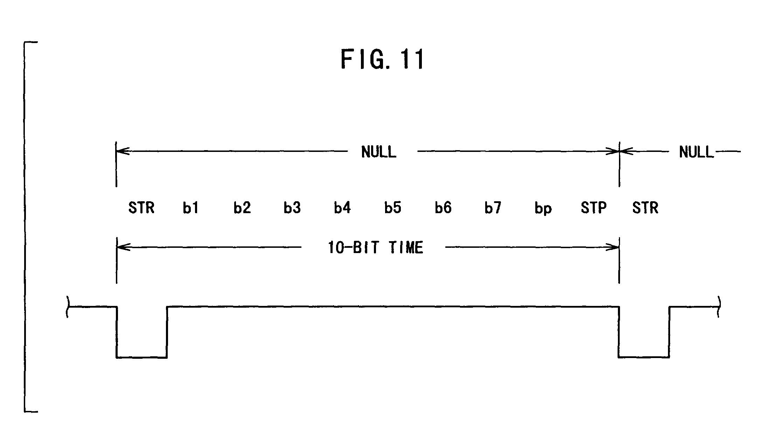

FIG. 11 is a diagram illustrative of a bit time of another dummy message (null) in the method of start/stop synchronous data transmission according to the present invention;

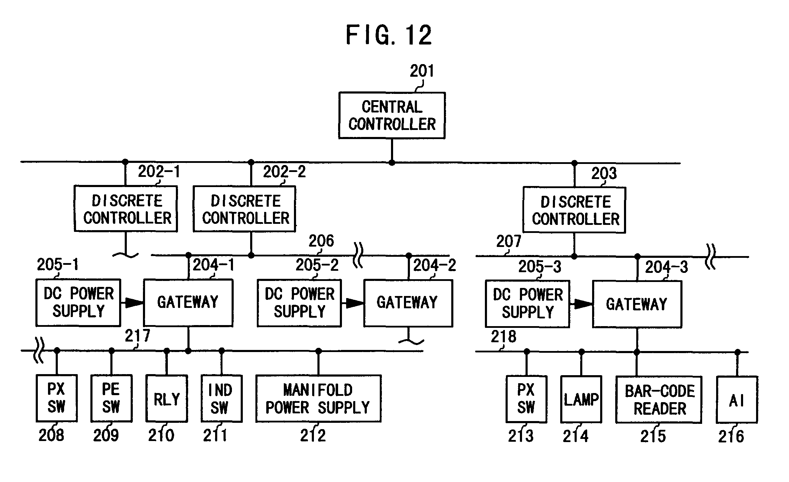

FIG. 12 is a block diagram of a serial transmission bus system which is used to carry out the method of start/stop synchronous data transmission according to the present invention;

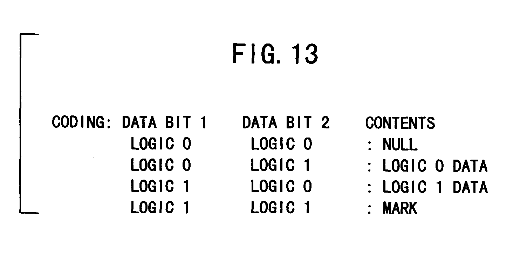

FIG. 13 is a diagram illustrative of a bit frame in the method of start/stop synchronous data transmission according to the present invention;

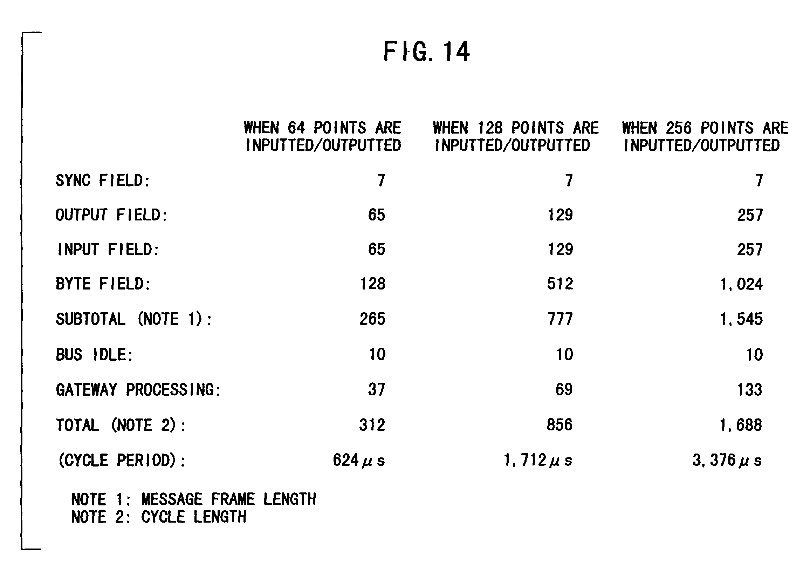

FIG. 14 is a diagram illustrative of a bit frame in the method of start/stop synchronous data transmission according to the present invention;

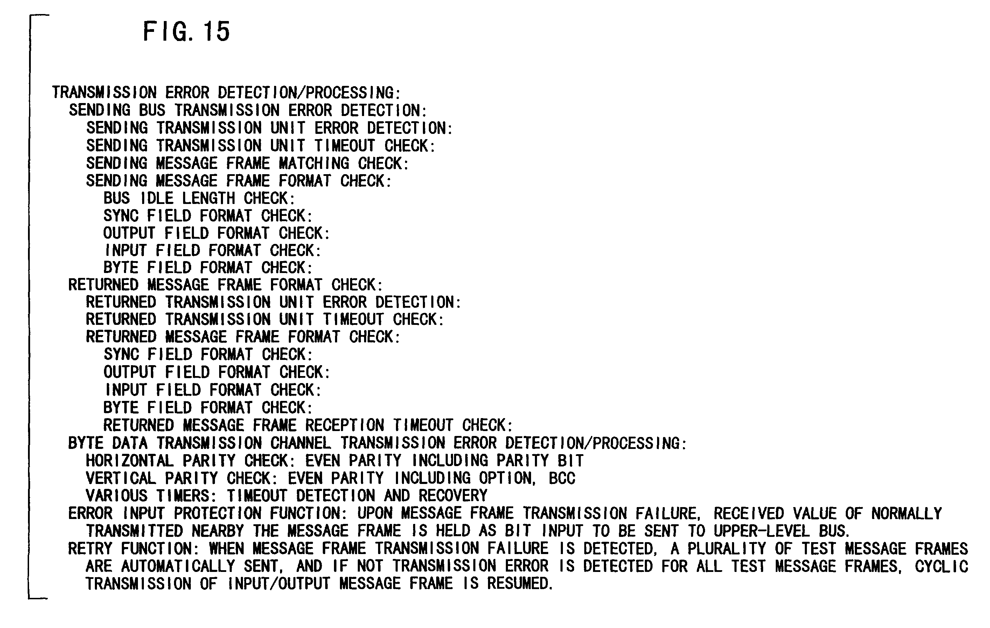

FIG. 15 is a diagram illustrative of a process of detecting and processing a transmission error in a gateway in the method of start/stop synchronous data transmission according to the present invention;

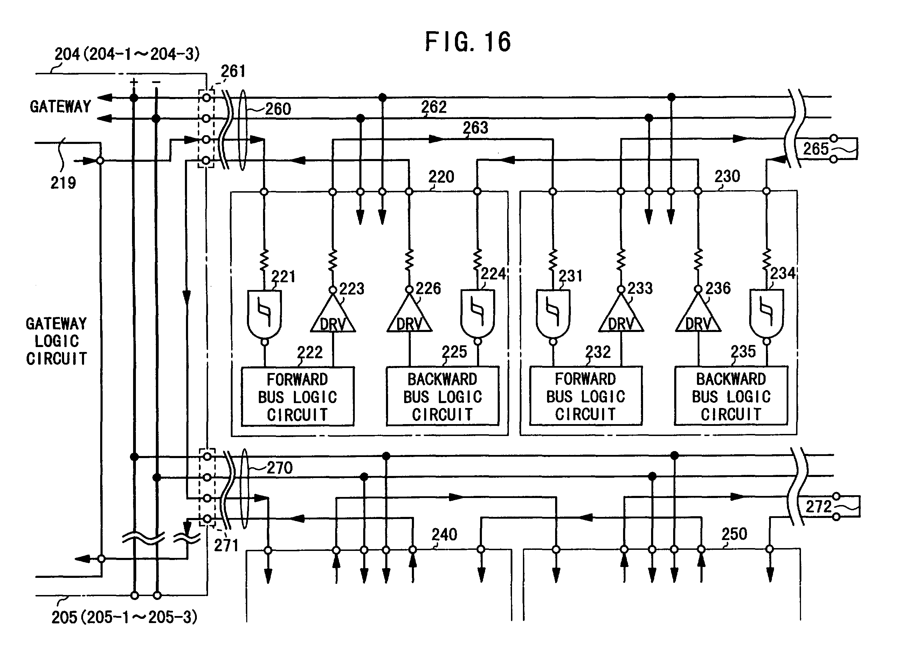

FIG. 16 is a block diagram of a bus wiring system used in the method of start/stop synchronous data transmission according to the present invention;

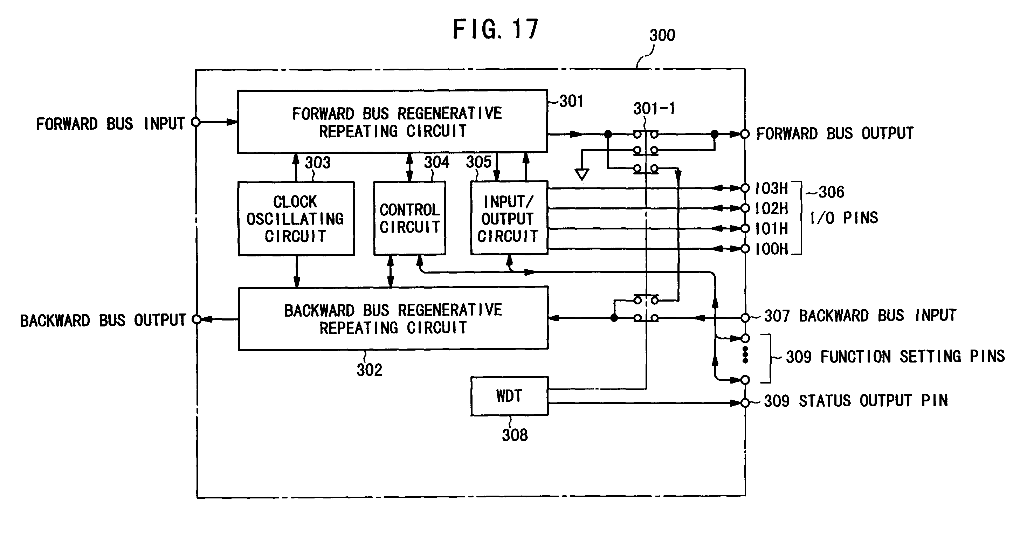

FIG. 17 is a block diagram of a slave chip used in the method of start/stop synchronous data transmission according to the present invention;

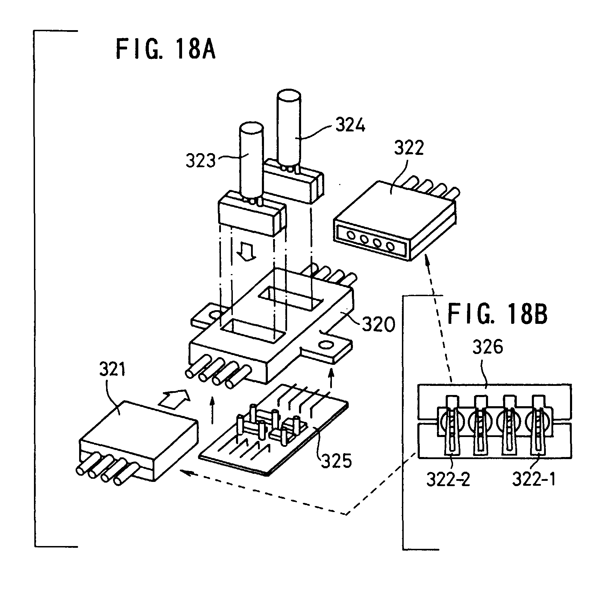

FIGS. 18A and 18B are an exploded perspective view and a plan view, respectively, of a serial interface unit for use between a serial transmission bus and a sensor in the method of start/stop synchronous data transmission according to the present invention;

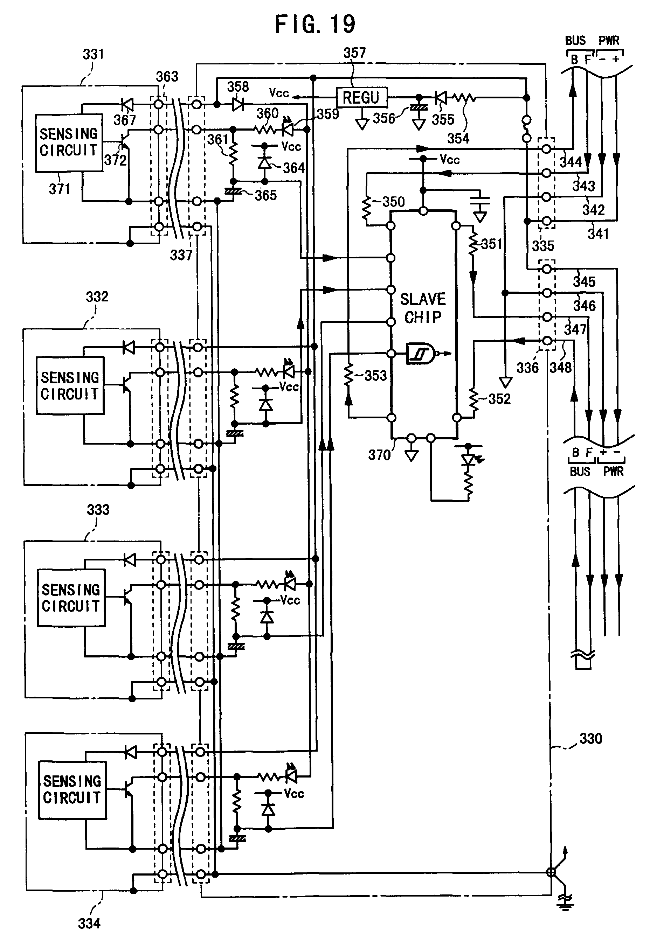

FIG. 19 is a block diagram of a sensor unit used in the method of start/stop synchronous data transmission according to the present invention;

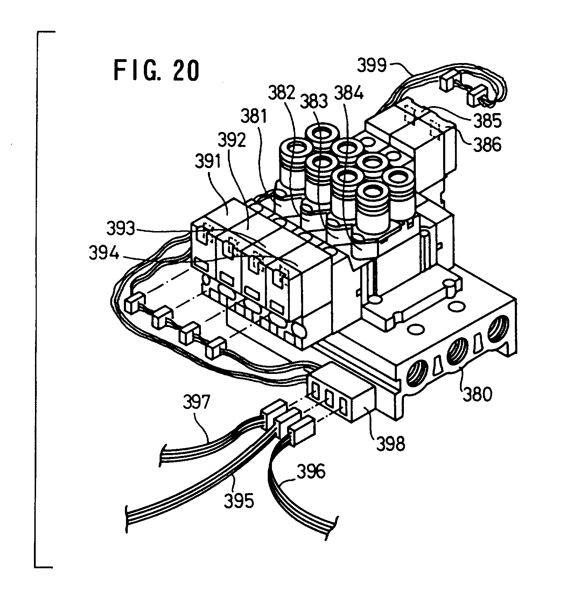

FIG. 20 is a perspective view of manifold solenoid-operated valves directly connected to the serial transmission bus used in the method of start/stop synchronous data transmission according to the present invention;

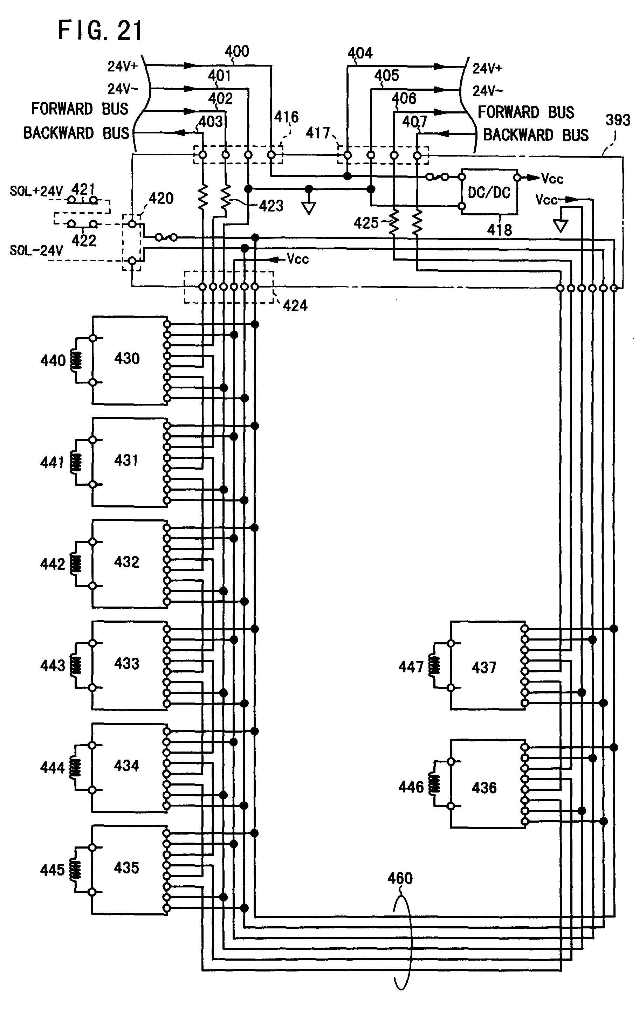

FIG. 21 is a diagram of a wiring arrangement in the manifold solenoid-operated valves directly connected to the serial transmission bus shown in FIG. 20;

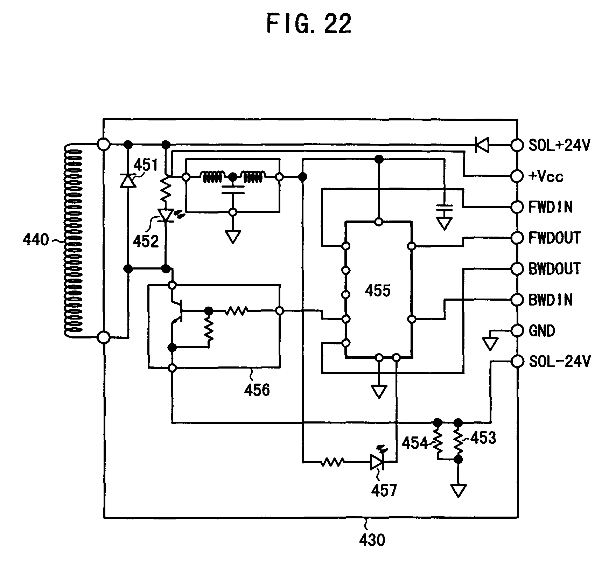

FIG. 22 is a diagram of a wiring arrangement around a slave chip in a manifold solenoid-operated valve directly connected to the serial transmission bus shown in FIG. 20;

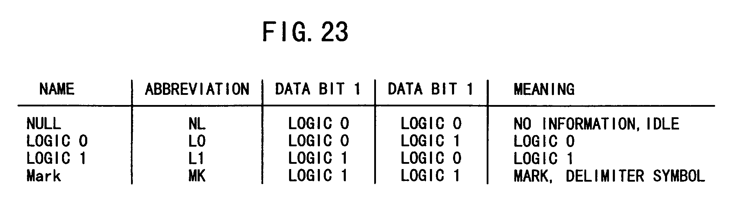

FIG. 23 is a diagram of data bits serving as transmission units in the method of start/stop synchronous data transmission according to the present invention;

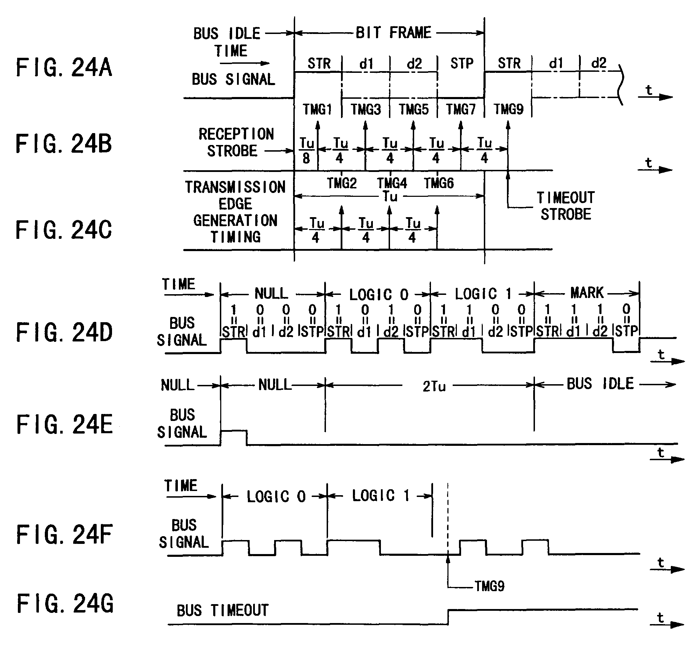

FIGS. 24A through 24G are diagrams showing a bit frame structure used in the method of start/stop synchronous data transmission according to the present invention;

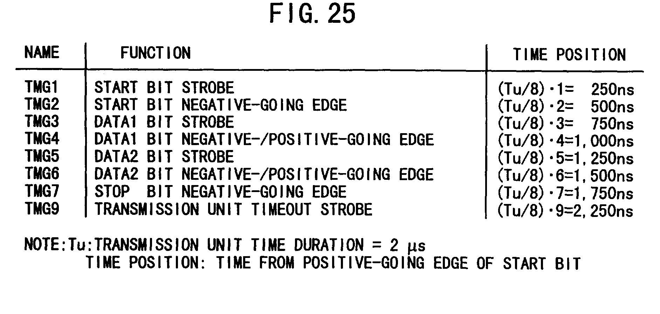

FIG. 25 is a diagram illustrative of the timing of transmission units used in the method of start/stop synchronous data transmission according to the present invention;

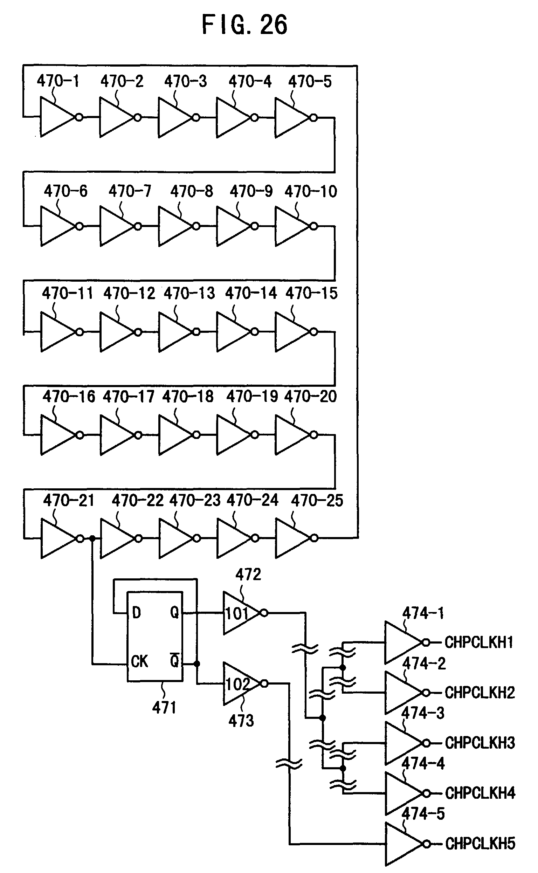

FIG. 26 is a block diagram of a ring oscillator used in the method of start/stop synchronous data transmission according to the present invention;

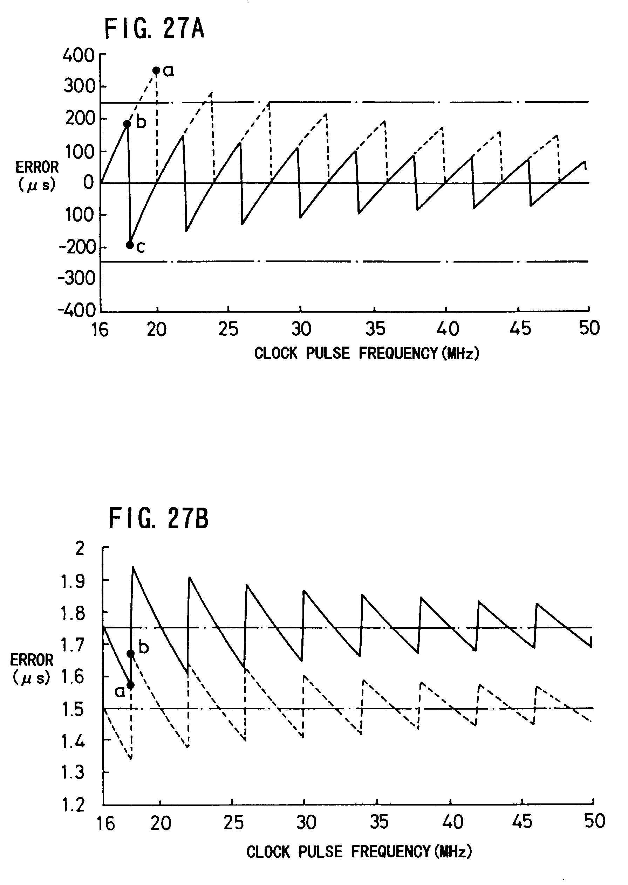

FIGS. 27A and 27B are diagrams showing timing errors when a baud rate is generated by the ring oscillator shown in FIG. 26;

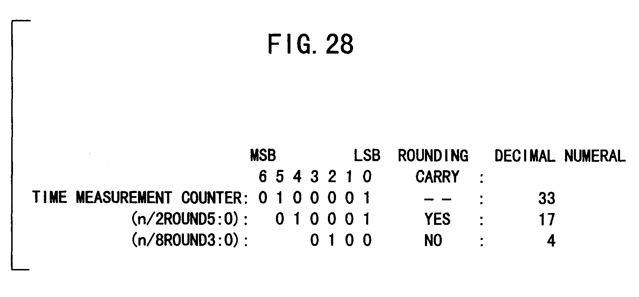

FIG. 28 is a diagram illustrative of timing generation when a baud rate is generated by the ring oscillator shown in FIG. 26;

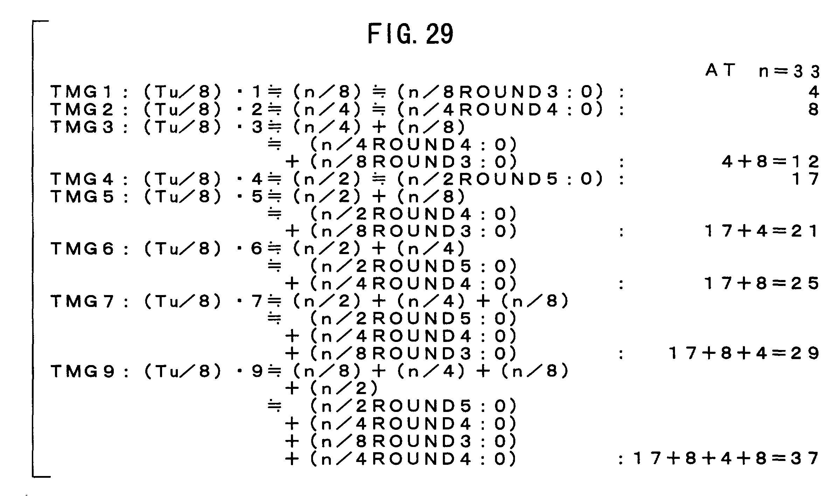

FIG. 29 is a diagram illustrative of timing generation when a baud rate is generated by the ring oscillator shown in FIG. 26;

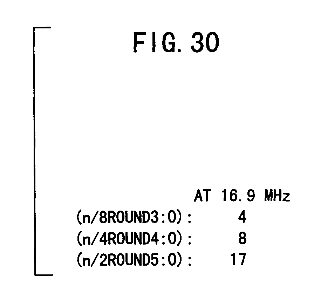

FIG. 30 is a diagram illustrative of timing generation when a baud rate is generated by the ring oscillator shown in FIG. 26;

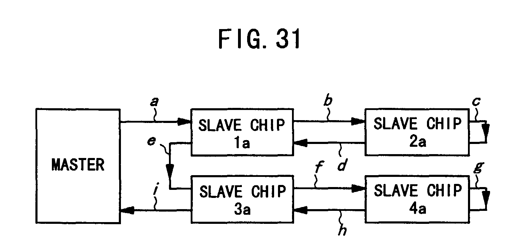

FIG. 31 is a block diagram of slave chips connected for reproducing and relaying data in the method of start/stop synchronous data transmission according to the present invention;

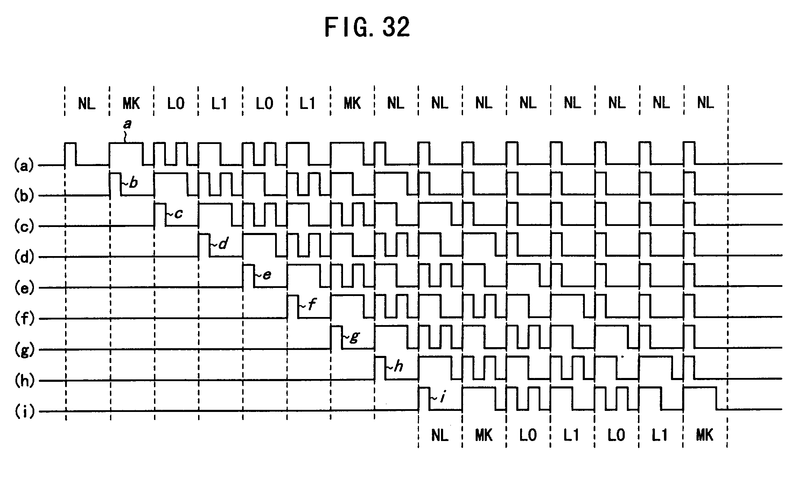

FIG. 32 is a diagram showing the waveforms of data reproduced and relayed by the slave chips shown in FIG. 31;

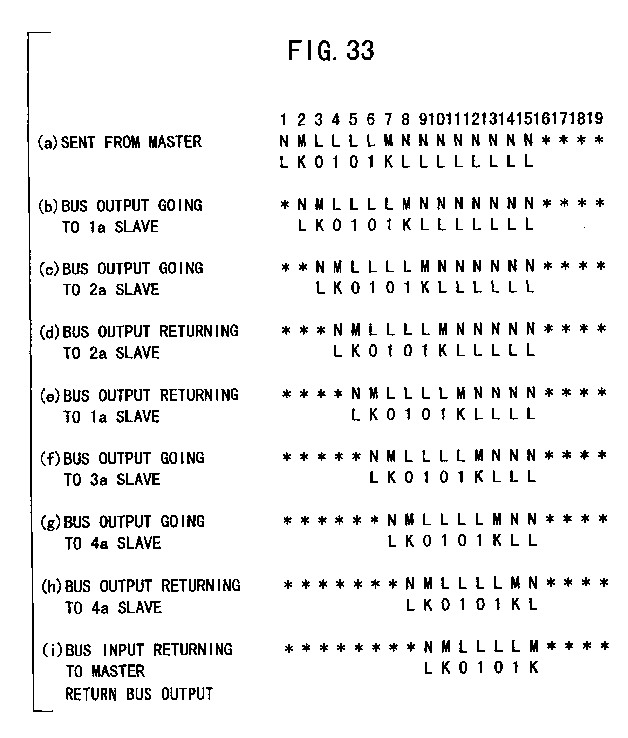

FIG. 33 is diagrams illustrative of a frame propagation in the method of start/stop synchronous data transmission according to the present invention;

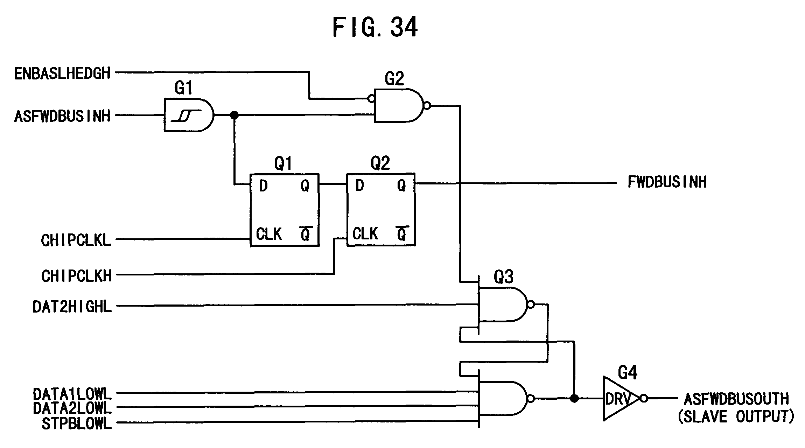

FIG. 34 is a block diagram of a logic circuit arrangement ranging from a bus input section to a bus output section in the method of start/stop synchronous data transmission according to the present invention;

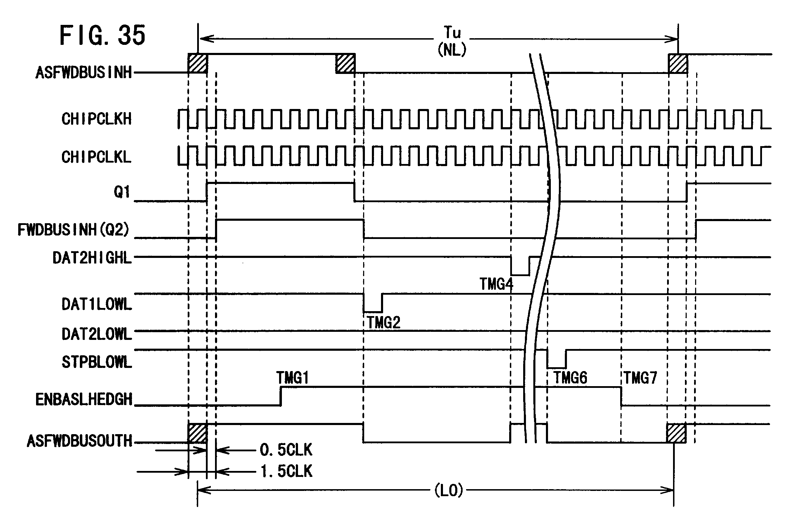

FIG. 35 is a timing chart illustrative of operation of the logic circuit arrangement shown in FIG. 34;

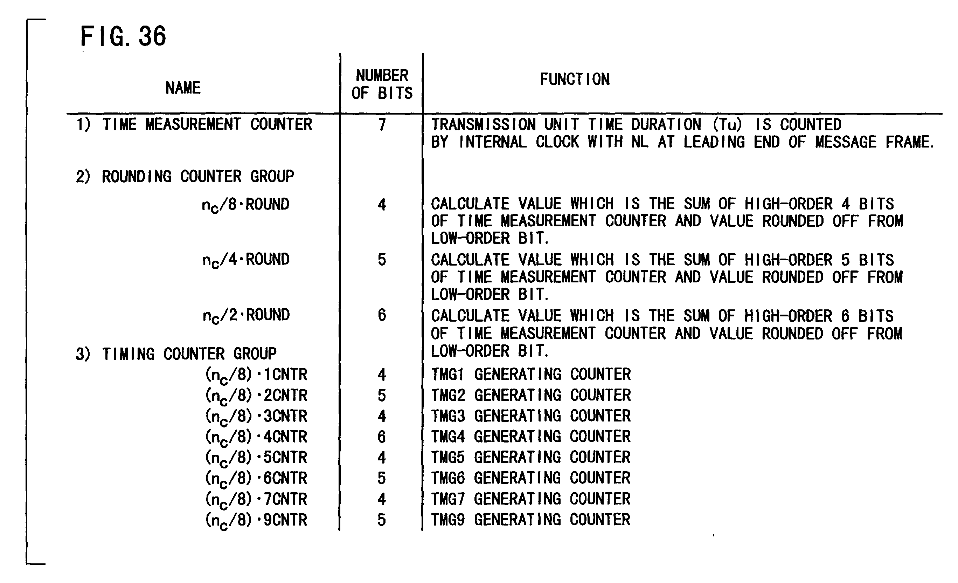

FIG. 36 is a diagram illustrative of a counter for timing generation in the method of start/stop synchronous data transmission according to the present invention;

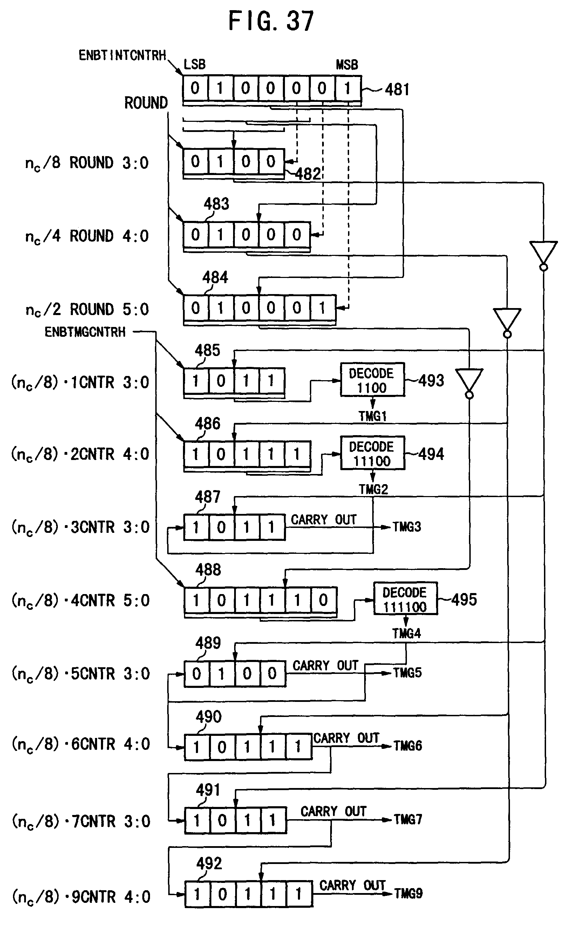

FIG. 37 is a block diagram of a timing generating circuit used in the method of start/stop synchronous data transmission according to the present invention;

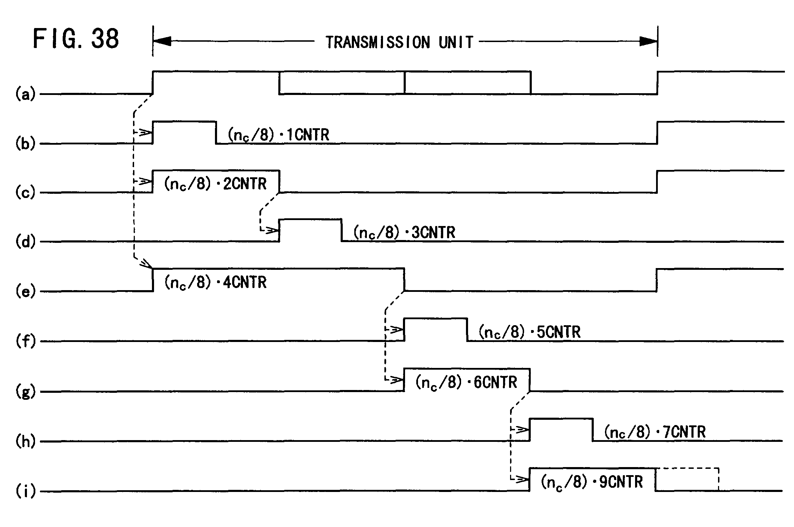

FIG. 38 is a timing diagram illustrative of operation of the timing generating circuit shown in FIG. 37;

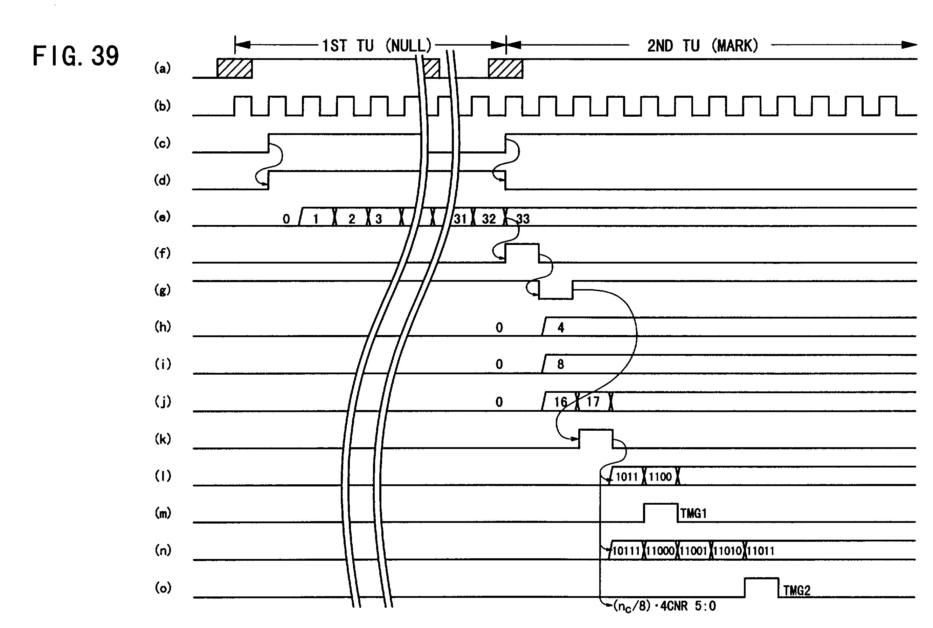

FIG. 39 is a timing chart illustrative of operation of the timing generating circuit shown in FIG. 37;

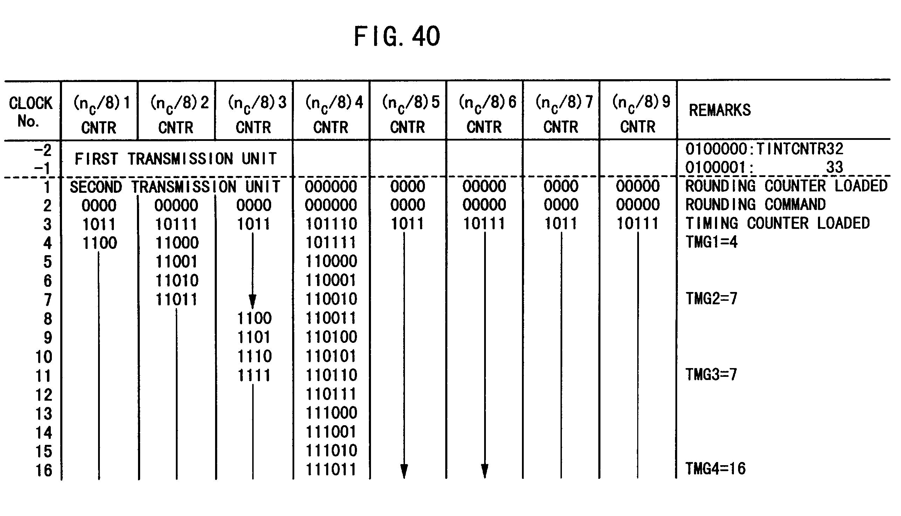

FIG. 40 is a diagram illustrative of operation of a timing counter of the timing generating circuit shown in FIG. 37;

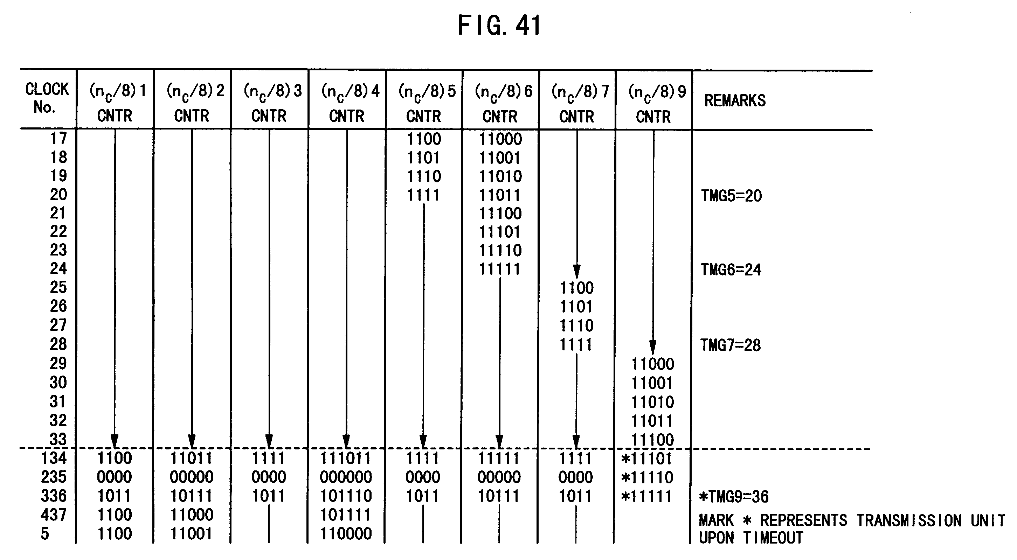

FIG. 41 is a diagram illustrative of operation of the timing counter of the timing generating circuit shown in FIG. 37;

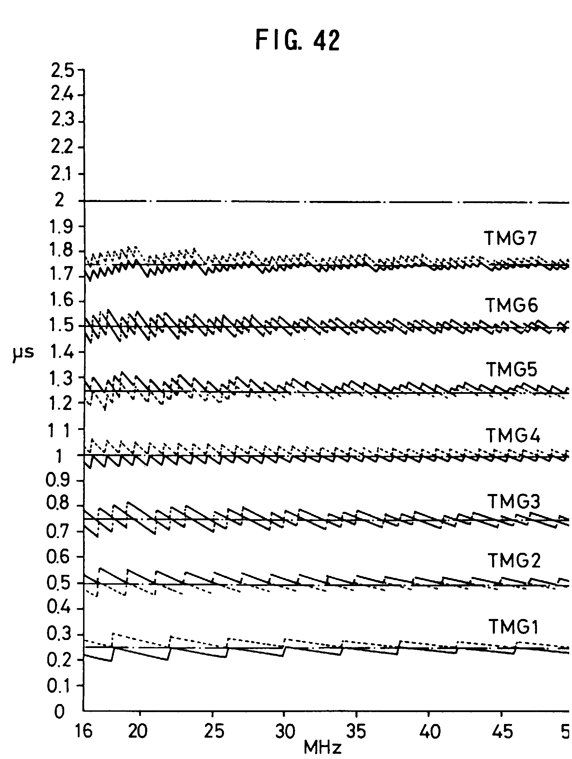

FIG. 42 is a diagram showing the relationship between a frequency and time at the time data is sent and received with clock pulses generated by the timing generating circuit shown in FIG. 37;

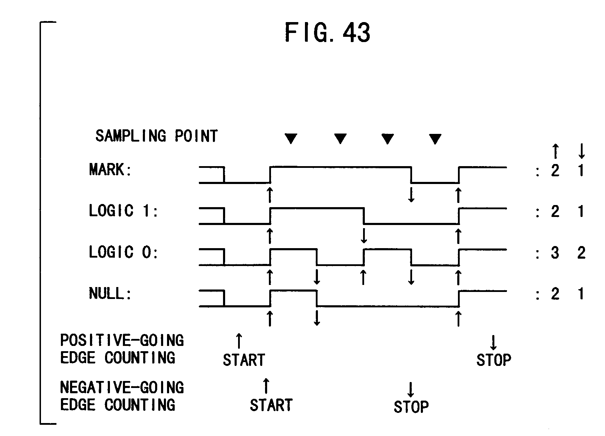

FIG. 43 is a diagram illustrative of a message frame used in the method of start/stop synchronous data transmission according to the present invention;

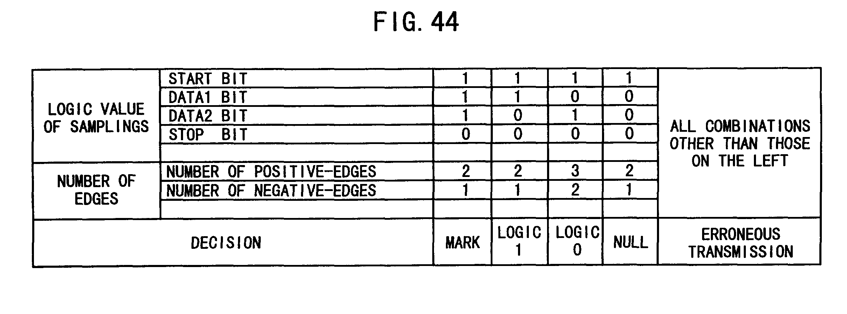

FIG. 44 is a diagram illustrative of a process of deciding whether a message frame is normal or abnormal in the method of start/stop synchronous data transmission according to the present invention;

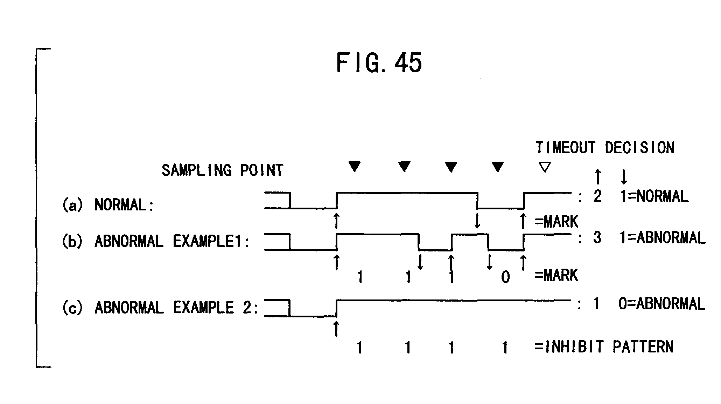

FIG. 45 is a diagram illustrative of a process of deciding whether a message frame is normal or abnormal in the method of start/stop synchronous data transmission according to the present invention;

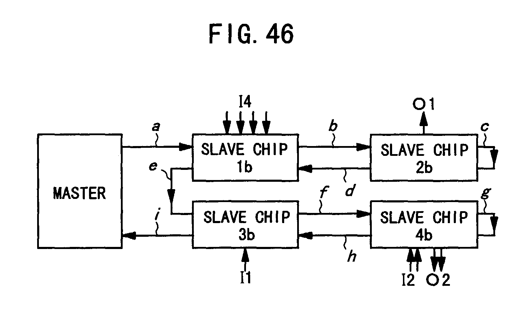

FIG. 46 is a block diagram of slave chips connected for reproducing and relaying data, the slave chips having bit input and output signals in the method of start/stop synchronous data transmission according to the present invention;

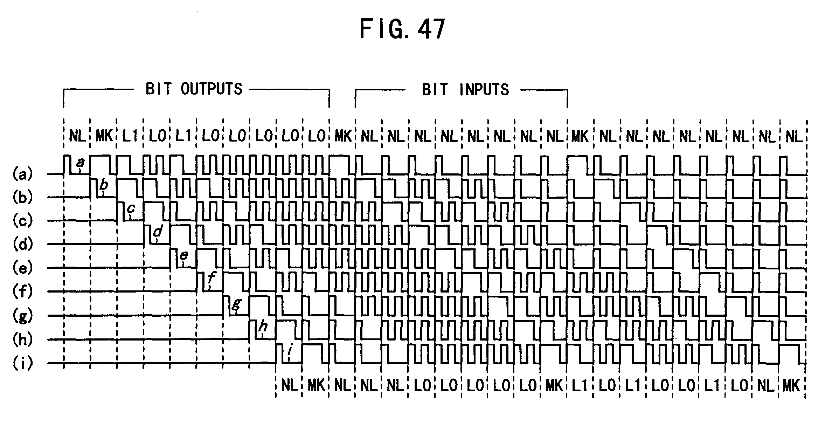

FIG. 47 is a diagram showing the waveforms of data reproduced and relayed by the slave chips shown in FIG. 46;

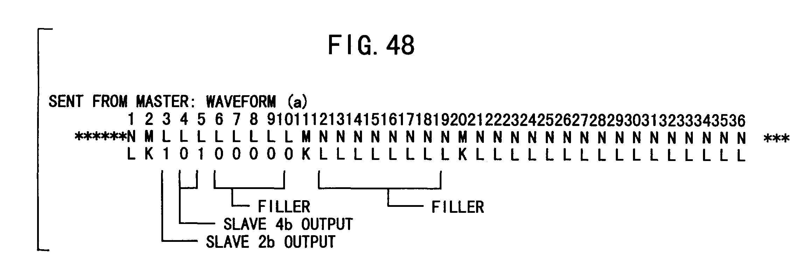

FIG. 48 is a diagram illustrative of a waveform sent by the master in the method of start/stop synchronous data transmission according to the present invention;

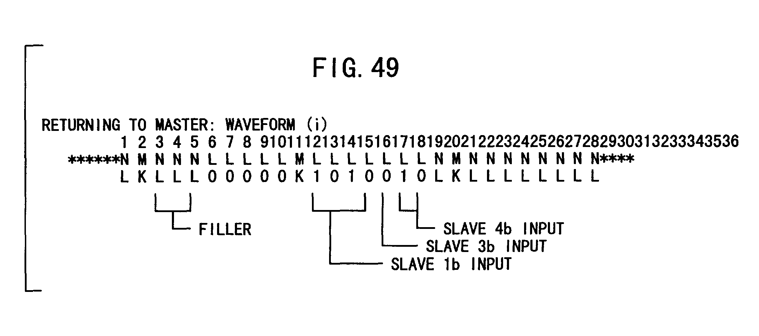

FIG. 49 is a diagram illustrative of a waveform returned to the master in the method of start/stop synchronous data transmission according to the present invention;

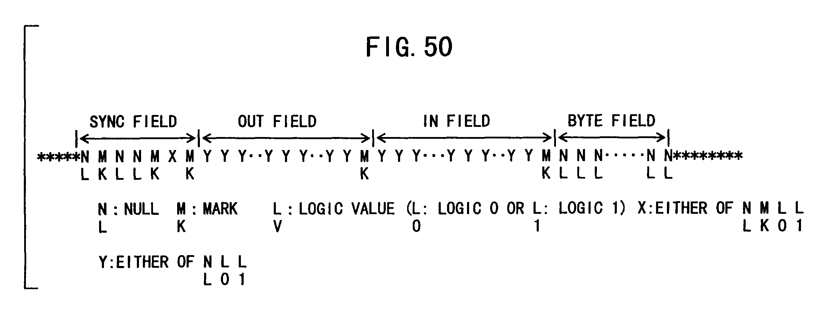

FIG. 50 is a diagram of a basic message frame structure used in the method of start/stop synchronous data transmission according to the present invention;

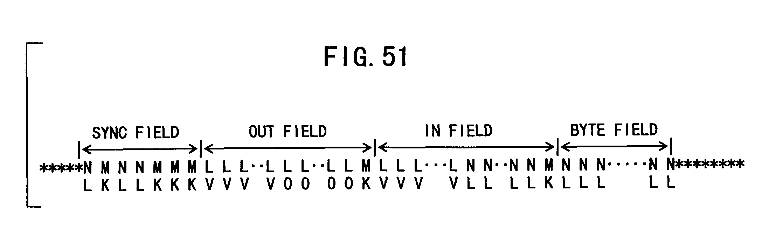

FIG. 51 is a diagram illustrative of the waveform of input and output message frames in the method of start/stop synchronous data transmission according to the present invention;

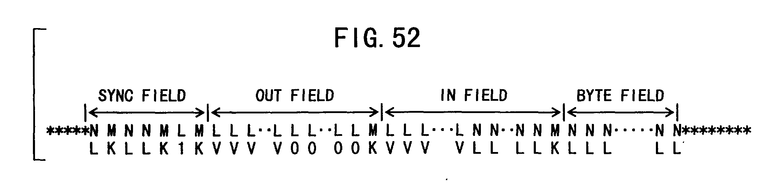

FIG. 52 is a diagram illustrative of the waveform of a test message frame in the method of start/stop synchronous data transmission according to the present invention;

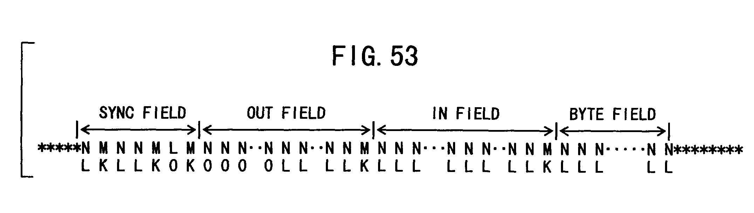

FIG. 53 is a diagram illustrative of the waveform of a status message frame in the method of start/stop synchronous data transmission according to the present invention;

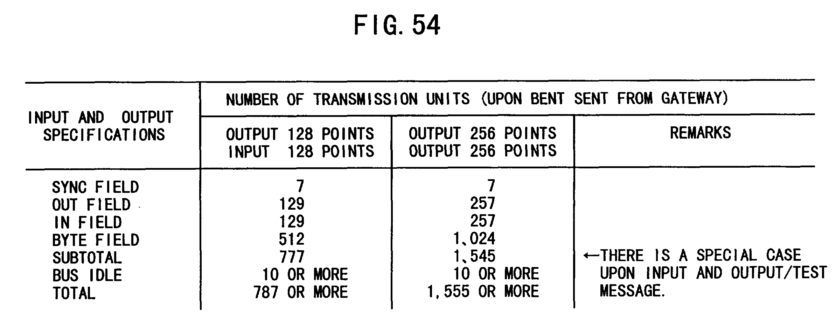

FIG. 54 is a diagram illustrative of a message length in the method of start/stop synchronous data transmission according to the present invention;

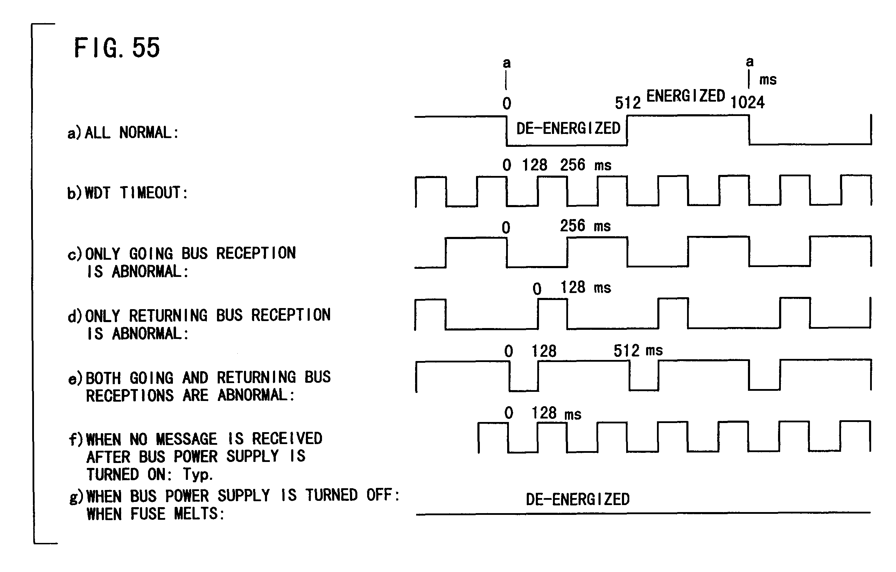

FIG. 55 is a diagram illustrative of patterns in which LEDs are turned on by a status signal in the method of start/stop synchronous data transmission according to the present invention;

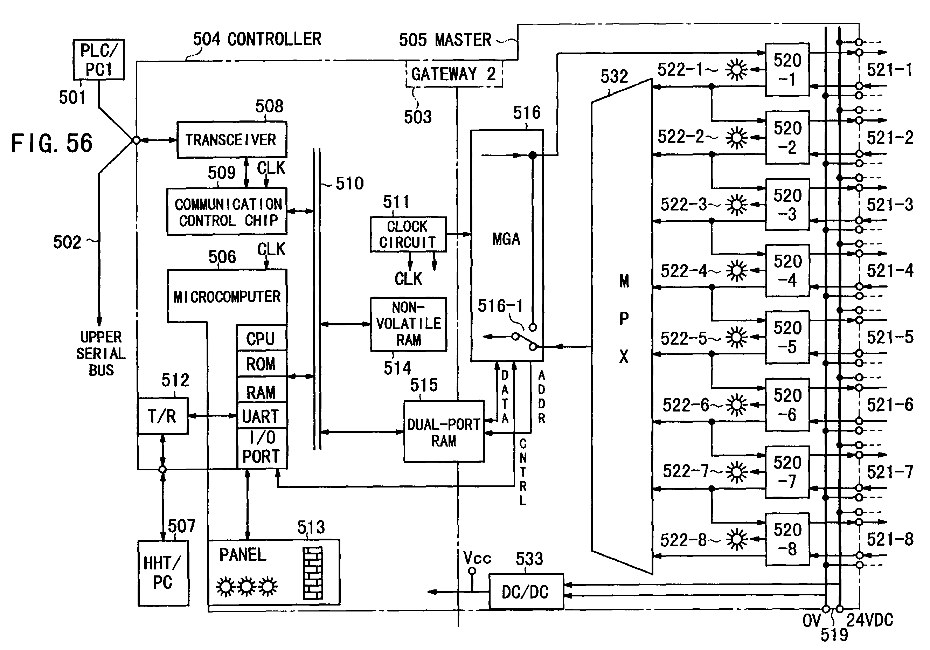

FIG. 56 is a block diagram of a structure of a gateway used in the method of start/stop synchronous data transmission according to the present invention;

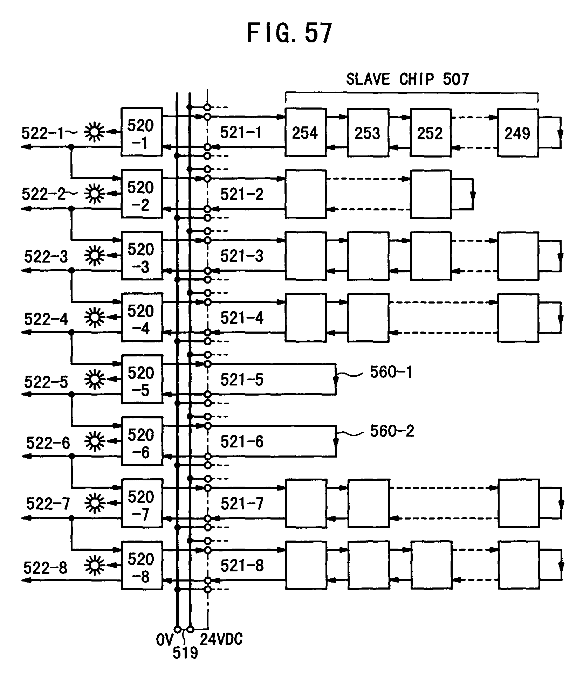

FIG. 57 is a block diagram of a structure of the gateway used in the method of start/stop synchronous data transmission according to the present invention;

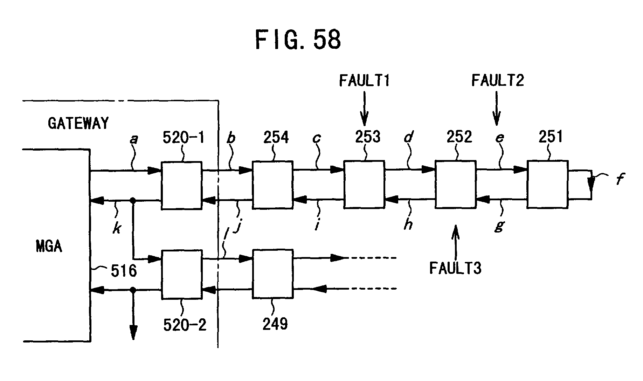

FIG. 58 is a block diagram of a connected arrangement of bit input and output slave chips used in the method of start/stop synchronous data transmission according to the present invention;

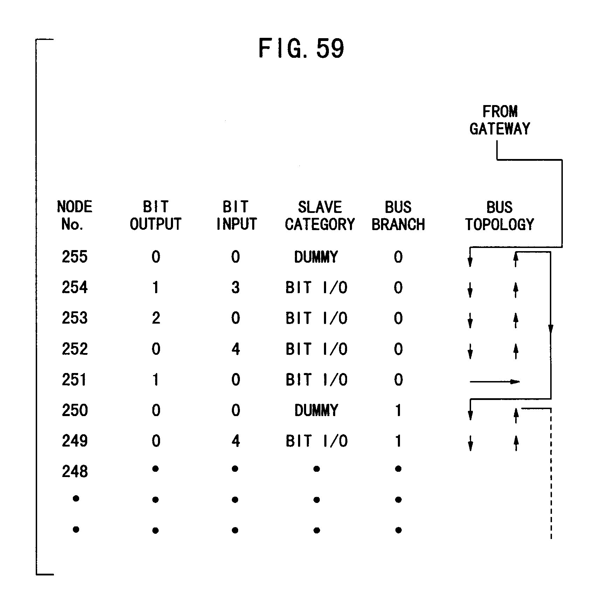

FIG. 59 is a diagram showing a bus topology list obtained by the connected arrangement shown in FIG. 58;

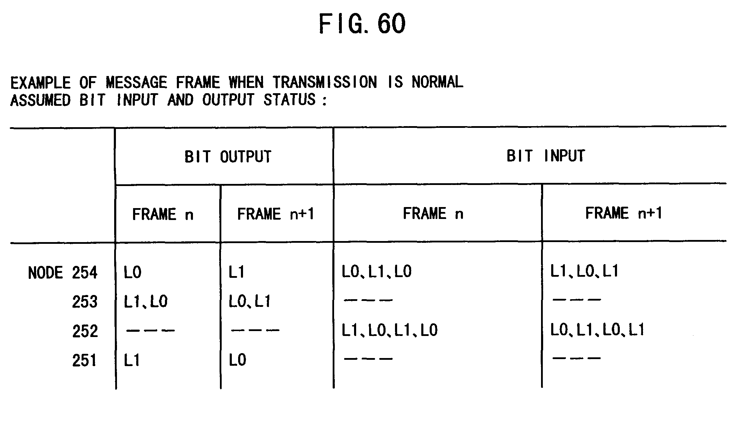

FIG. 60 is a diagram showing a message frame upon normal transmission in the method of start/stop synchronous data transmission according to the present invention;

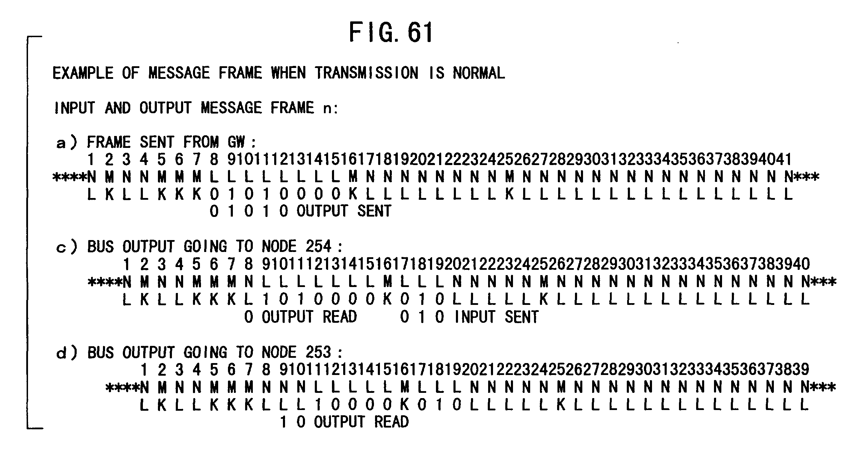

FIG. 61 is a diagram showing a input/output message frame upon normal transmission in the method of start/stop synchronous data transmission according to the present invention;

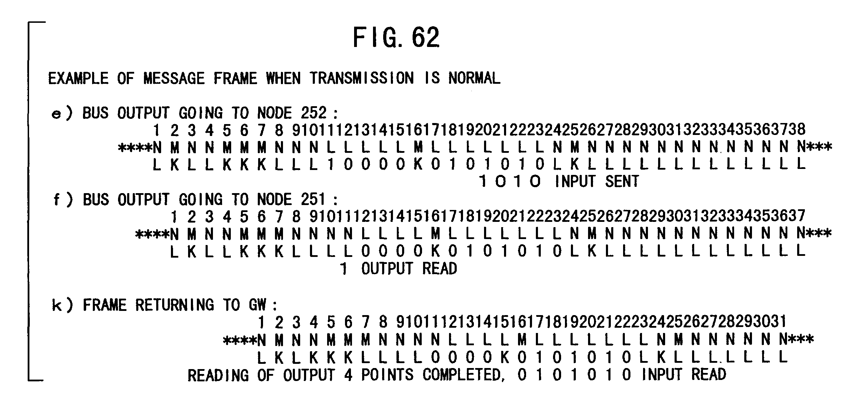

FIG. 62 is a diagram showing a message frame upon normal transmission in the method of start/stop synchronous data transmission according to the present invention;

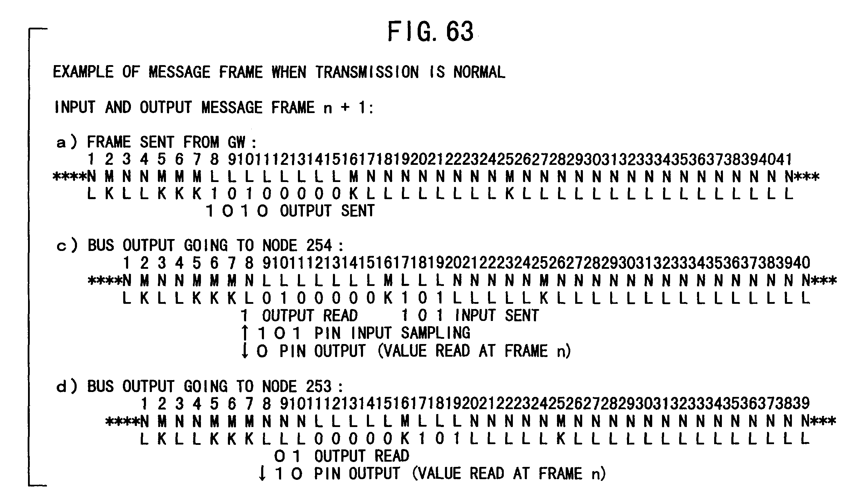

FIG. 63 is a diagram showing a message frame upon normal transmission in the method of start/stop synchronous data transmission according to the present invention;

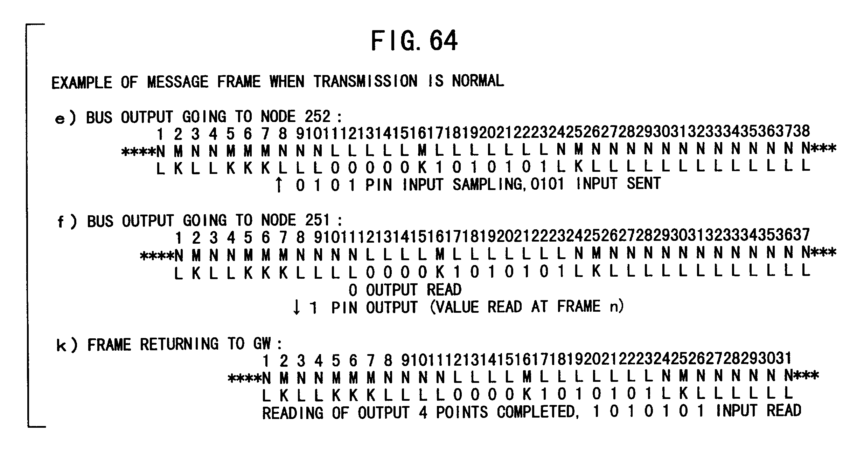

FIG. 64 is a diagram showing a message frame upon normal transmission in the method of start/stop synchronous data transmission according to the present invention;

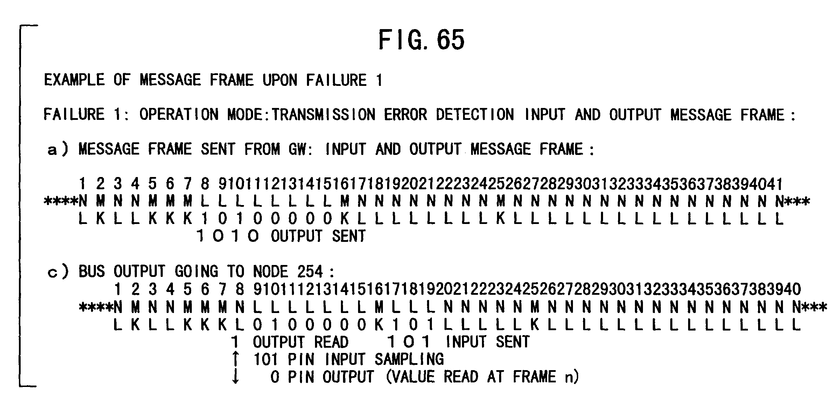

FIG. 65 is a diagram showing a message frame of "failure 1" in the method of start/stop synchronous data transmission according to the present invention;

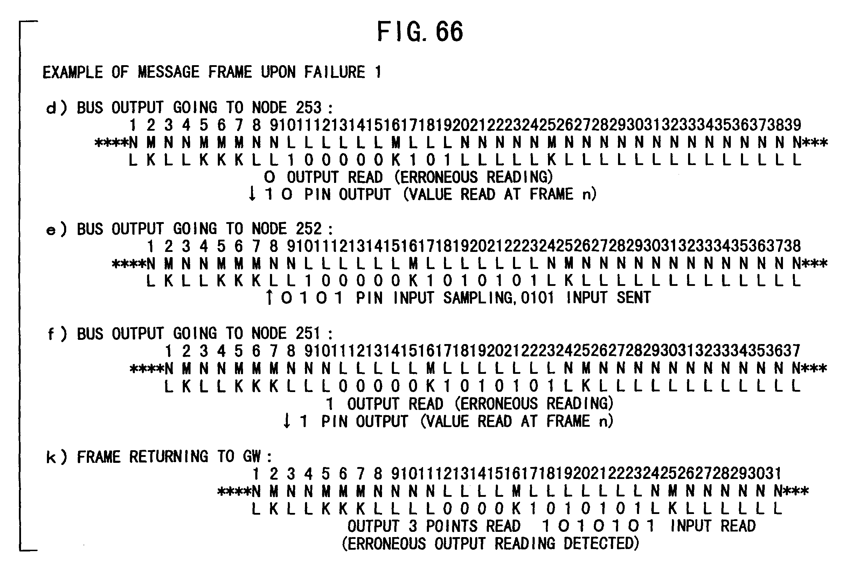

FIG. 66 is a diagram showing a message frame of "failure 1" in the method of start/stop synchronous data transmission according to the present invention;

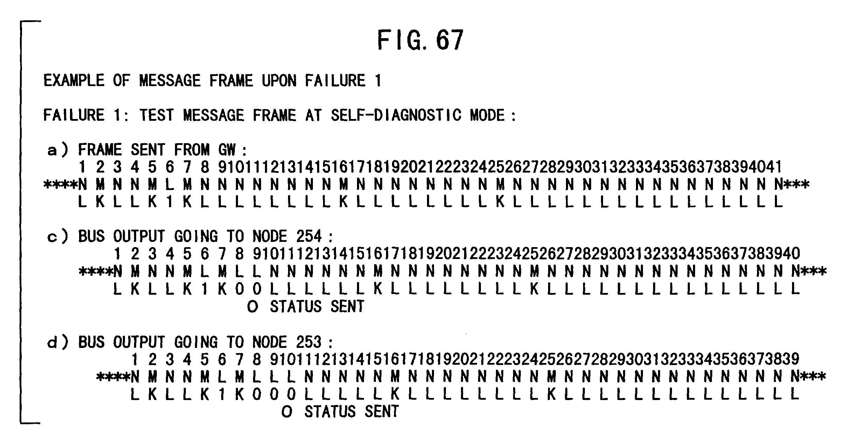

FIG. 67 is a diagram showing a message frame of "failure 1" in the method of start/stop synchronous data transmission according to the present invention;

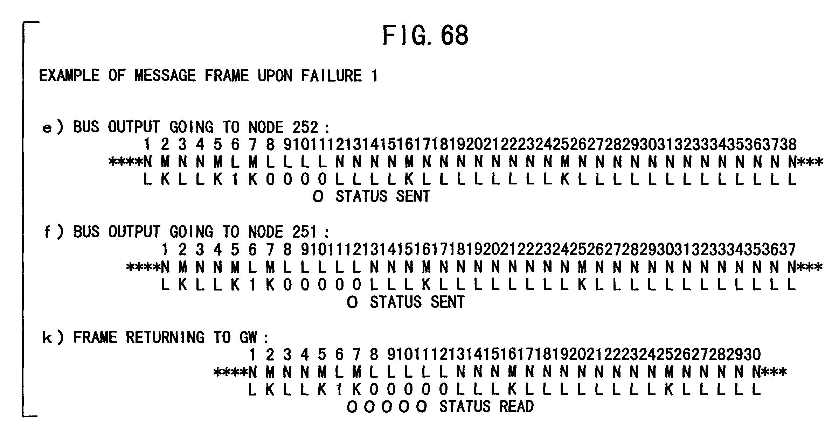

FIG. 68 is a diagram showing a message frame of "failure 1" in the method of start/stop synchronous data transmission according to the present invention;

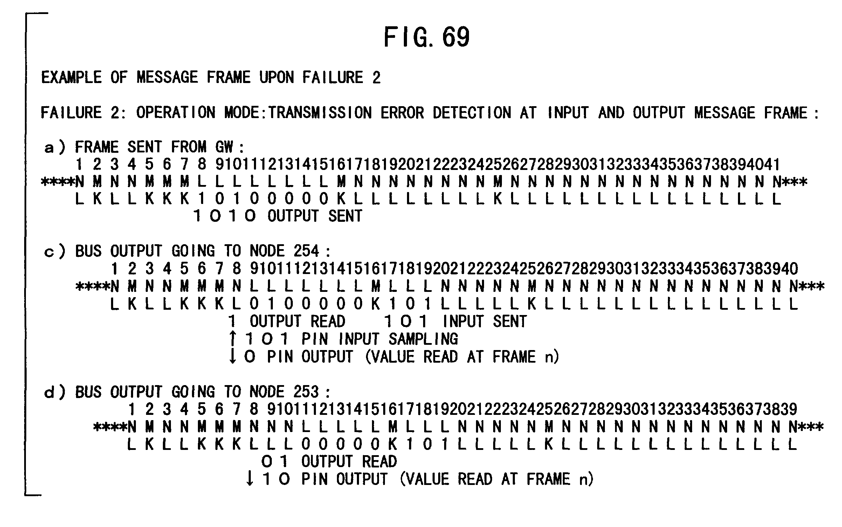

FIG. 69 is a diagram showing a message frame of "failure 2" in the method of start/stop synchronous data transmission according to the present invention;

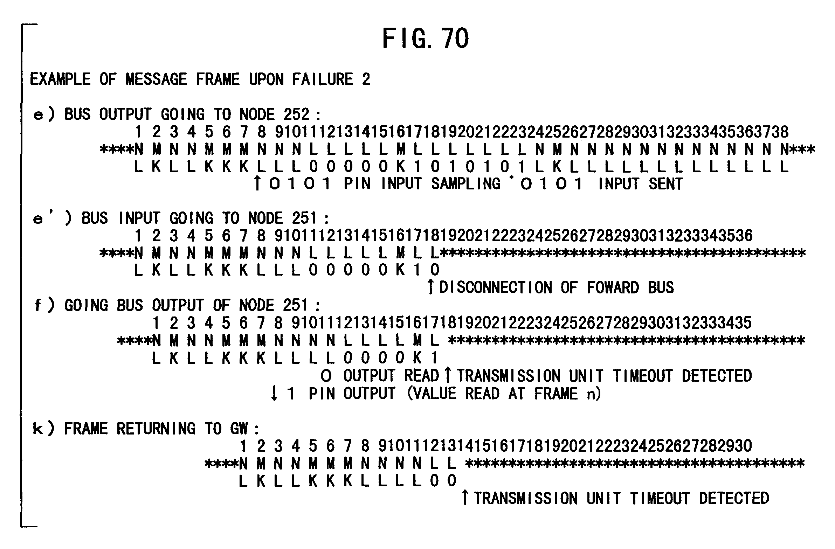

FIG. 70 is a diagram showing a message frame of "failure 2" in the method of start/stop synchronous data transmission according to the present invention;

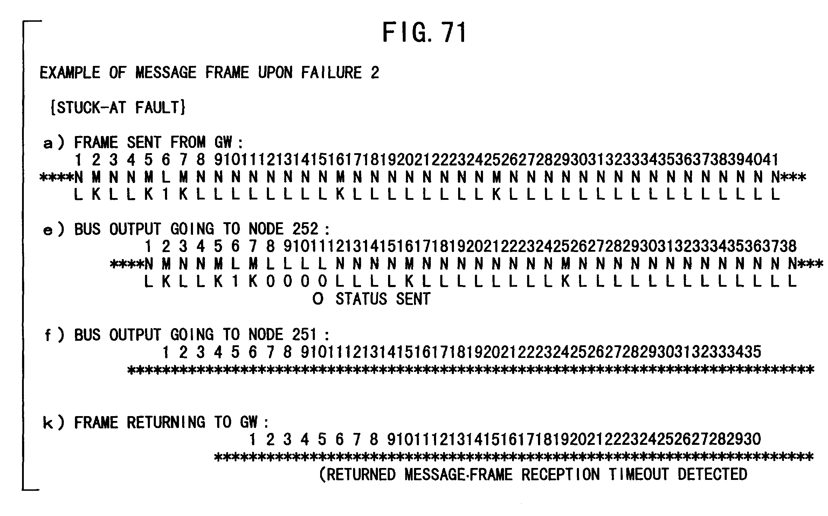

FIG. 71 is a diagram showing a message frame of "failure 2" in the method of start/stop synchronous data transmission according to the present invention;

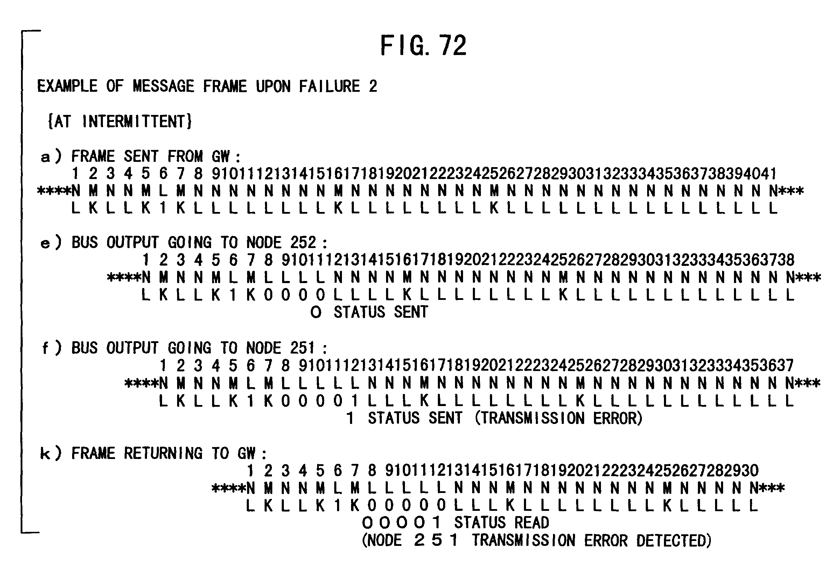

FIG. 72 is a diagram showing a message frame of "failure 2" in the method of start/stop synchronous data transmission according to the present invention;

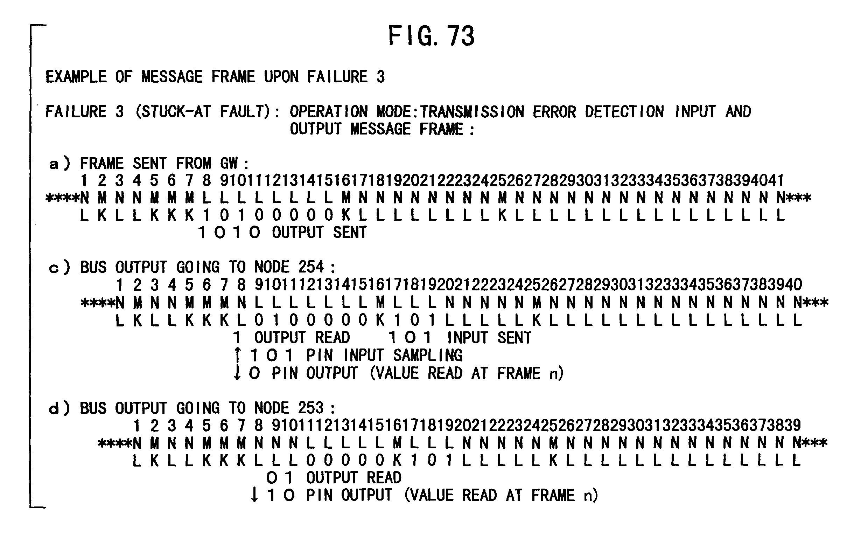

FIG. 73 is a diagram showing a message frame of "failure 3" in the method of start/stop synchronous data transmission according to the present invention;

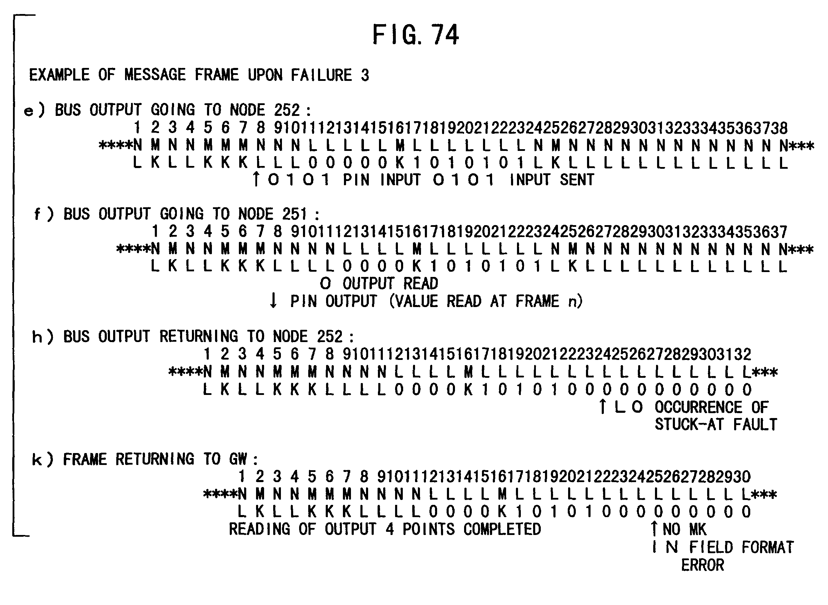

FIG. 74 is a diagram showing a message frame of "failure 3" in the method of start/stop synchronous data transmission according to the present invention;

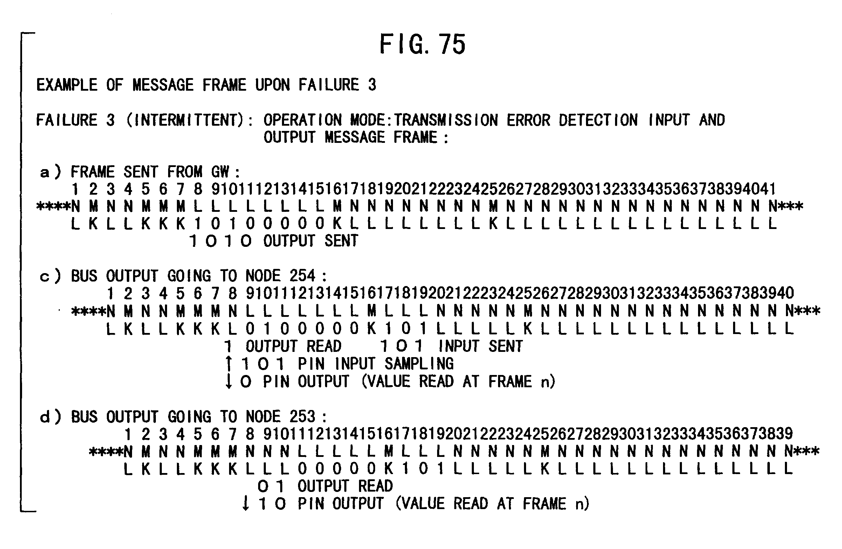

FIG. 75 is a diagram showing a message frame of "failure 3" in the method of start/stop synchronous data transmission according to the present invention;

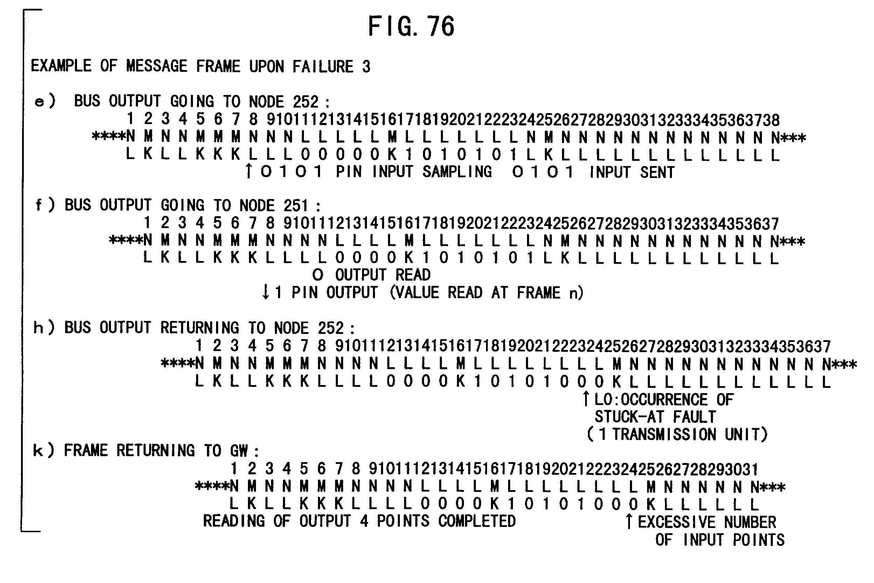

FIG. 76 is a diagram showing a message frame of "failure 3" in the method of start/stop synchronous data transmission according to the present invention;

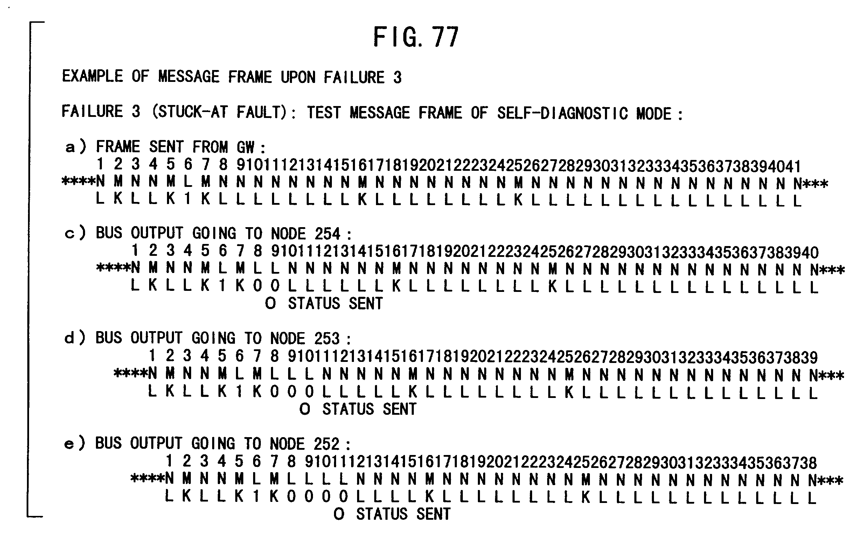

FIG. 77 is a diagram showing a message frame of "failure 3" in the method of start/stop synchronous data transmission according to the present invention;

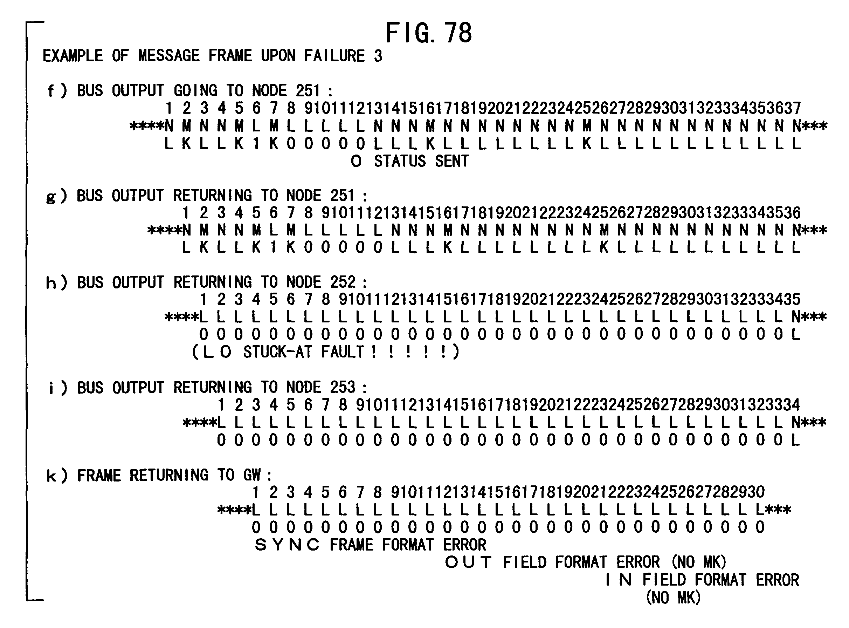

FIG. 78 is a diagram showing a message frame of "failure 3" in the method of start/stop synchronous data transmission according to the present invention;

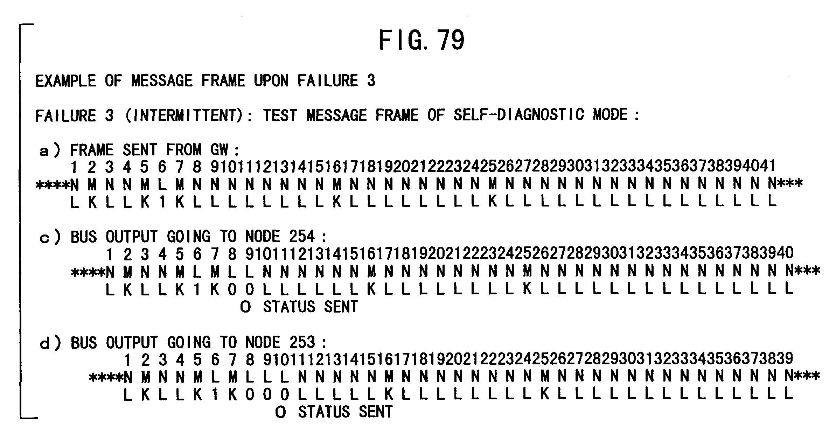

FIG. 79 is a diagram showing a message frame of "failure 3" in the method of start/stop synchronous data transmission according to the present invention;

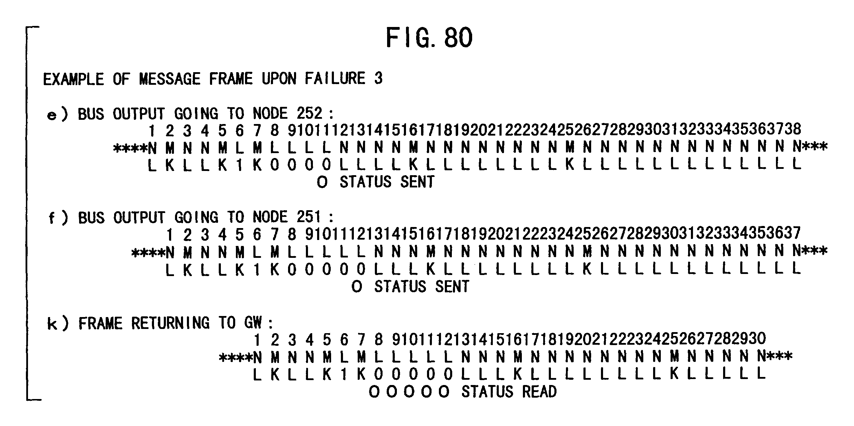

FIG. 80 is a diagram showing a message frame of "failure 3" in the method of start/stop synchronous data transmission according to the present invention;

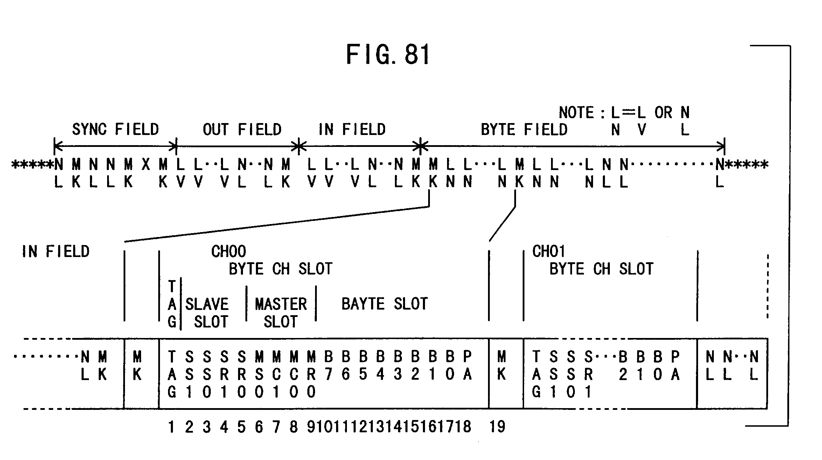

FIG. 81 is a diagram illustrative of the format of a byte field upon byte transmission in the method of start/stop synchronous data transmission according to the present invention;

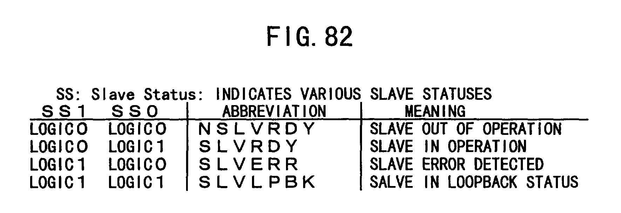

FIG. 82 is a diagram illustrative of a byte channel slot in the method of start/stop synchronous data transmission according to the present invention;

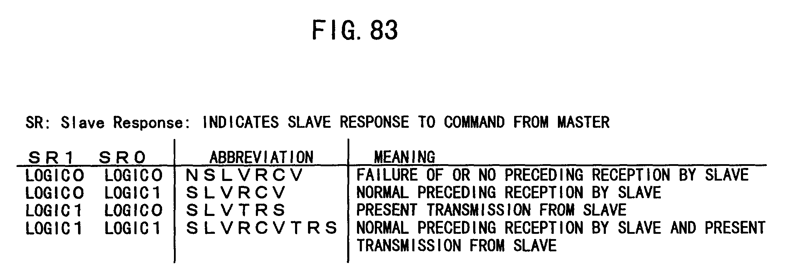

FIG. 83 is a diagram illustrative of a byte channel slot in the method of start/stop synchronous data transmission according to the present invention;

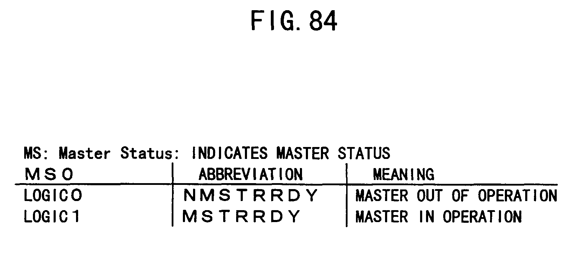

FIG. 84 is a diagram illustrative of a byte channel slot in the method of start/stop synchronous data transmission according to the present invention;

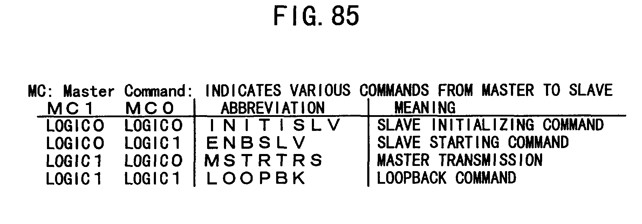

FIG. 85 is a diagram illustrative of a byte channel slot in the method of start/stop synchronous data transmission according to the present invention;

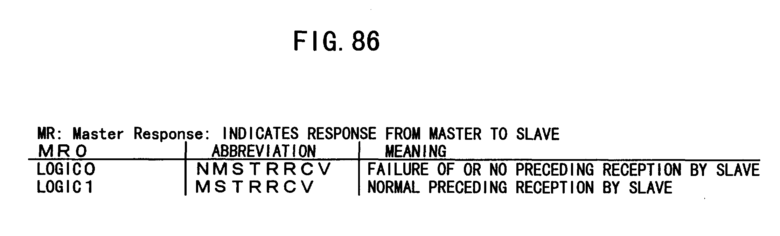

FIG. 86 is a diagram illustrative of a byte channel slot in the method of start/stop synchronous data transmission according to the present invention;

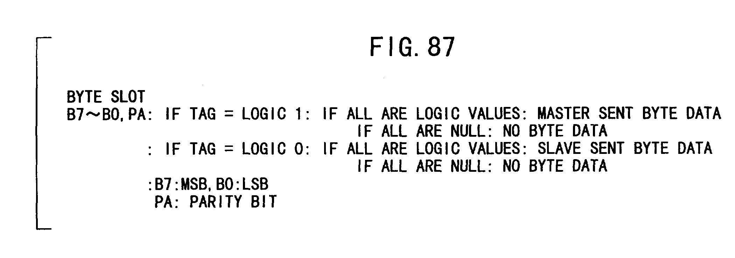

FIG. 87 is a diagram illustrative of a byte channel slot in the method of start/stop synchronous data transmission according to the present invention;

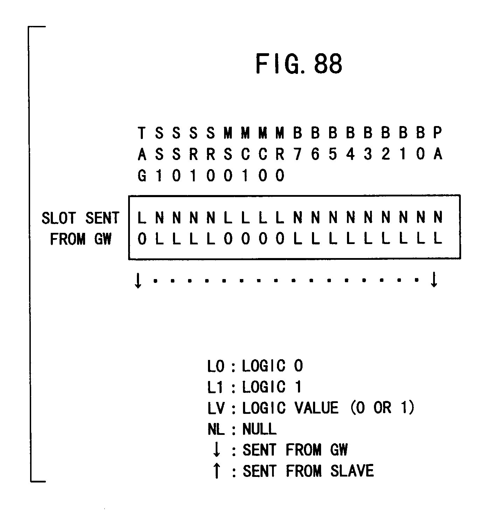

FIG. 88 is a diagram of the structure of a byte field in each message frame in the method of start/stop synchronous data transmission according to the present invention;

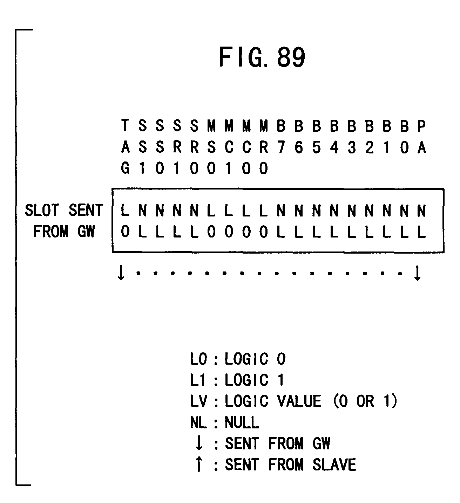

FIG. 89 is a diagram illustrative of a transmission protocol for a byte data transmission channel in the method of start/stop synchronous data transmission according to the present invention;

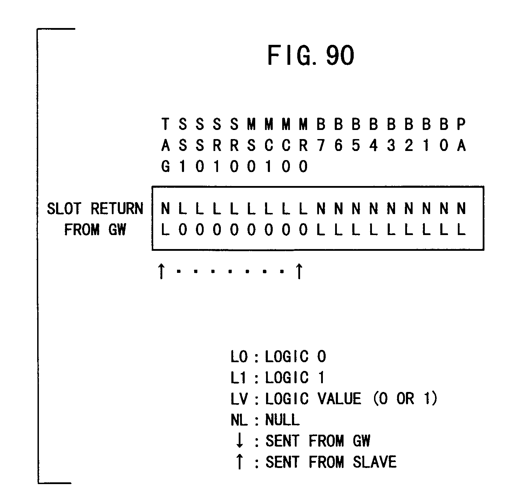

FIG. 90 is a diagram illustrative of a transmission protocol for a byte data transmission channel in the method of start/stop synchronous data transmission according to the present invention;

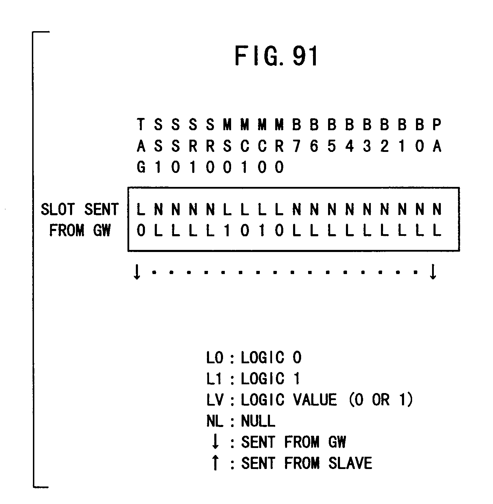

FIG. 91 is a diagram illustrative of a transmission protocol for a byte data transmission channel in the method of start/stop synchronous data transmission according to the present invention;

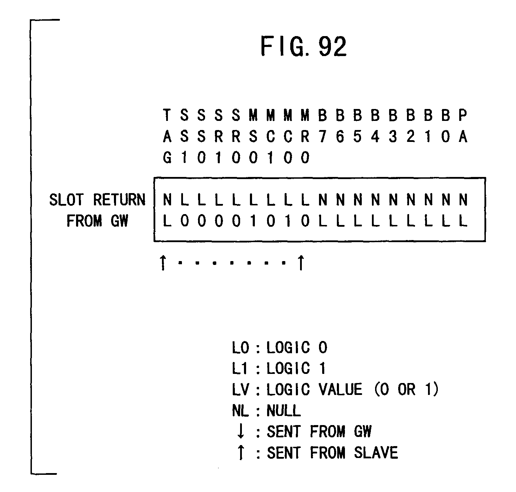

FIG. 92 is a diagram illustrative of a transmission protocol for a byte data transmission channel in the method of start/stop synchronous data transmission according to the present invention;

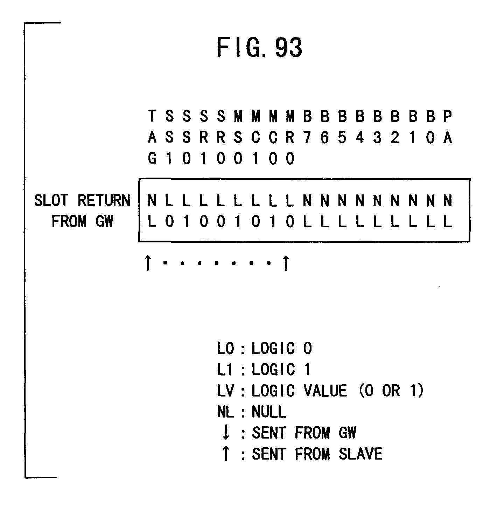

FIG. 93 is a diagram illustrative of a transmission protocol for a byte data transmission channel in the method of start/stop synchronous data transmission according to the present invention;

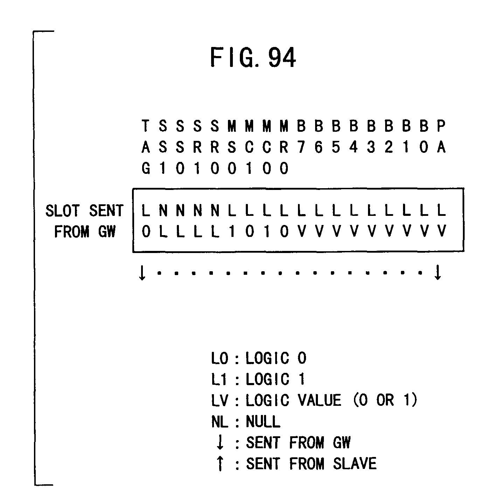

FIG. 94 is a diagram illustrative of a transmission protocol for a byte data transmission channel in the method of start/stop synchronous data transmission according to the present invention;

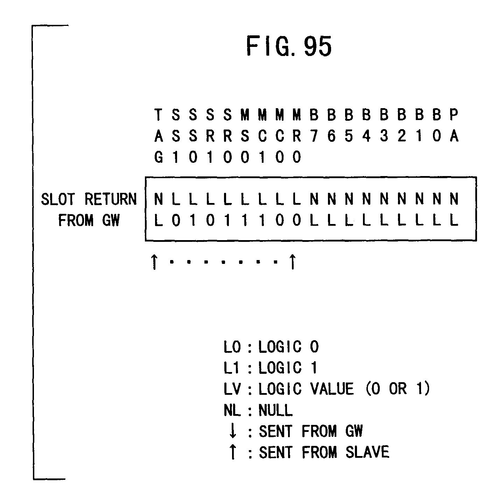

FIG. 95 is a diagram illustrative of a transmission protocol for a byte data transmission channel in the method of start/stop synchronous data transmission according to the present invention;

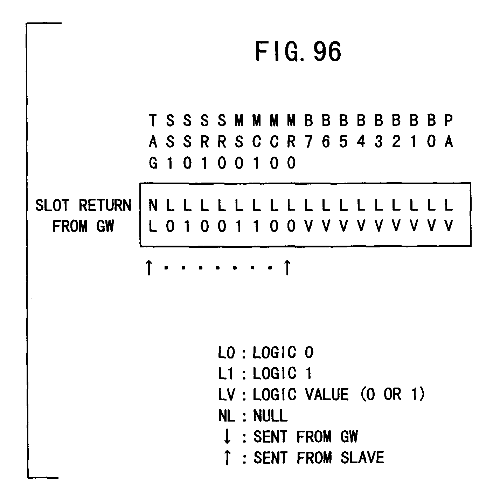

FIG. 96 is a diagram illustrative of a transmission protocol for a byte data transmission channel in the method of start/stop synchronous data transmission according to the present invention;

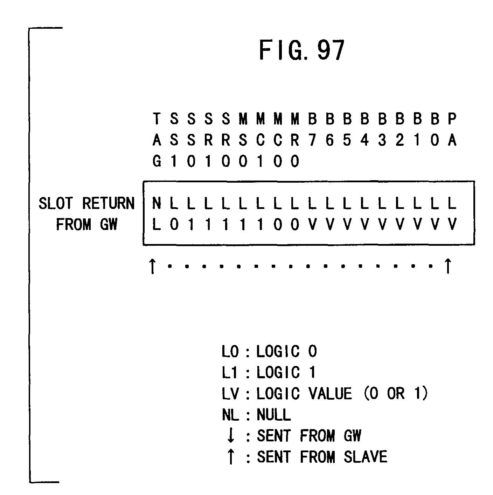

FIG. 97 is a diagram illustrative of a transmission protocol for a byte data transmission channel in the method of start/stop synchronous data transmission according to the present invention;

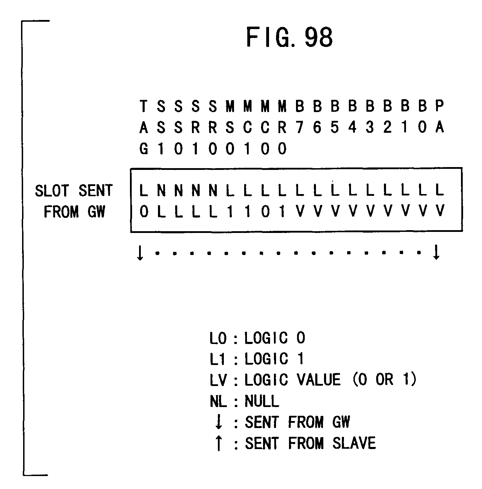

FIG. 98 is a diagram illustrative of a transmission protocol for a byte data transmission channel in the method of start/stop synchronous data transmission according to the present invention;

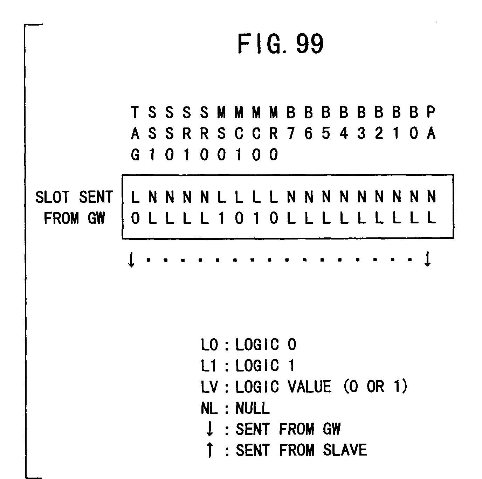

FIG. 99 is a diagram illustrative of a transmission protocol for a byte data transmission channel in the method of start/stop synchronous data transmission according to the present invention;

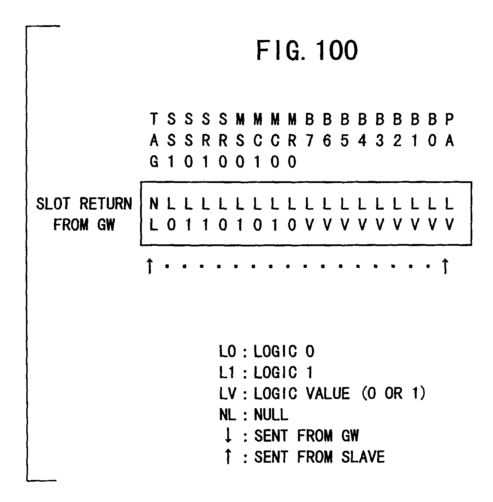

FIG. 100 is a diagram illustrative of a transmission protocol for a byte data transmission channel in the method of start/stop synchronous data transmission according to the present invention;

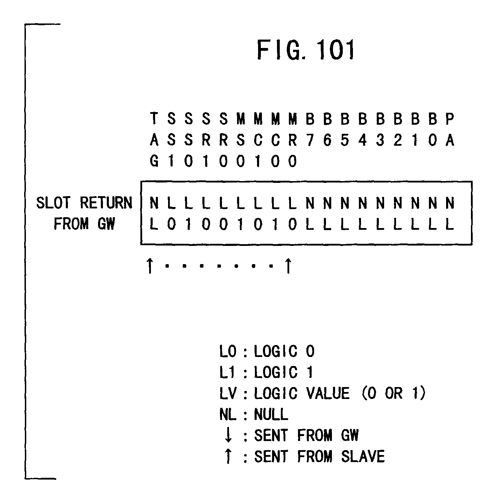

FIG. 101 is a diagram illustrative of a transmission protocol for a byte data transmission channel in the method of start/stop synchronous data transmission according to the present invention;

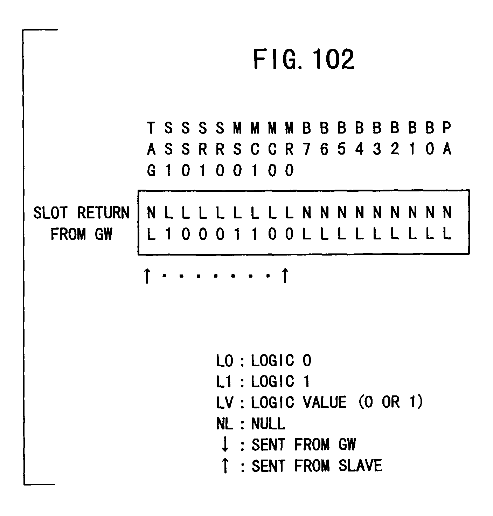

FIG. 102 is a diagram illustrative of a transmission protocol for a byte data transmission channel in the method of start/stop synchronous data transmission according to the present invention;

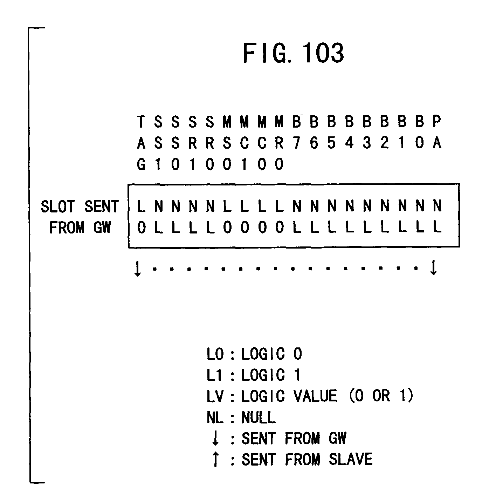

FIG. 103 is a diagram illustrative of a transmission protocol for a byte data transmission channel in the method of start/stop synchronous data transmission according to the present invention;

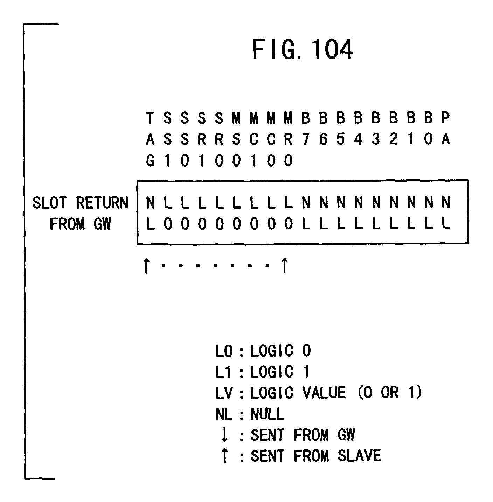

FIG. 104 is a diagram illustrative of a transmission protocol for a byte data transmission channel in the method of start/stop synchronous data transmission according to the present invention;

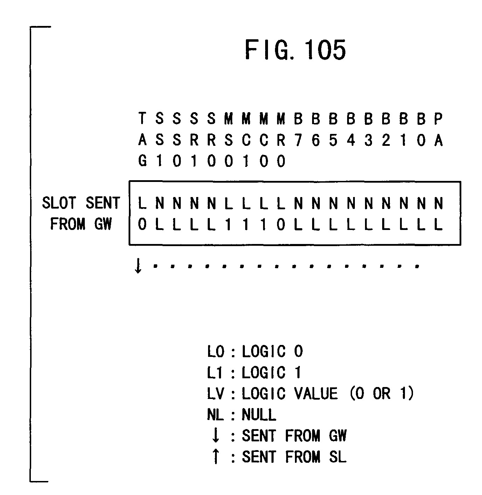

FIG. 105 is a diagram illustrative of a transmission protocol for a byte data transmission channel in the method of start/stop synchronous data transmission according to the present invention;

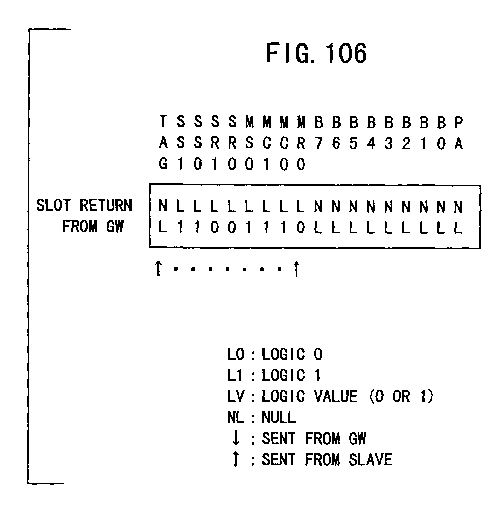

FIG. 106 is a diagram illustrative of a transmission protocol for a byte data transmission channel in the method of start/stop synchronous data transmission according to the present invention;

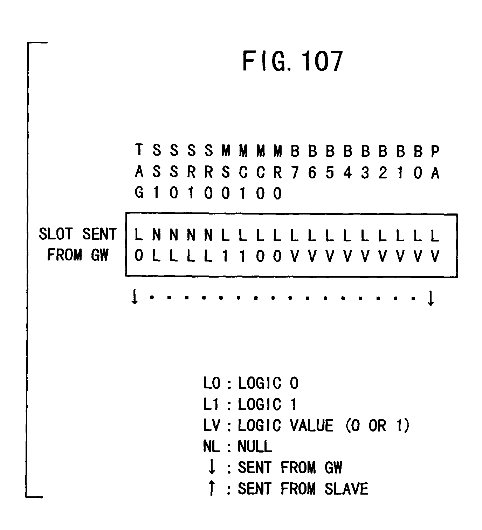

FIG. 107 is a diagram illustrative of a transmission protocol for a byte data transmission channel in the method of start/stop synchronous data transmission according to the present invention;

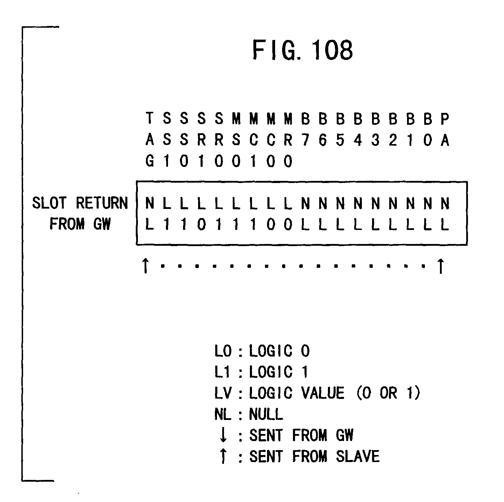

FIG. 108 is a diagram illustrative of a transmission protocol for a byte data transmission channel in the method of start/stop synchronous data transmission according to the present invention;

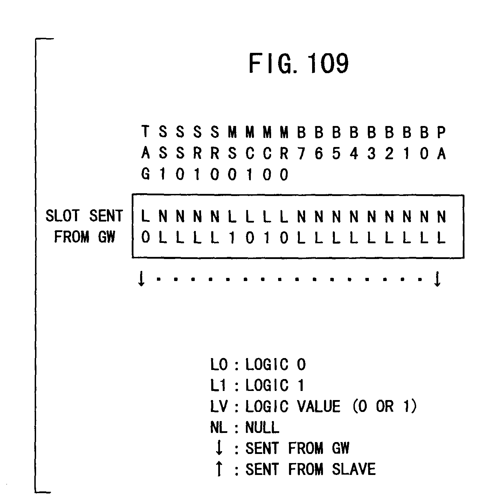

FIG. 109 is a diagram illustrative of a transmission protocol for a byte data transmission channel in the method of start/stop synchronous data transmission according to the present invention;

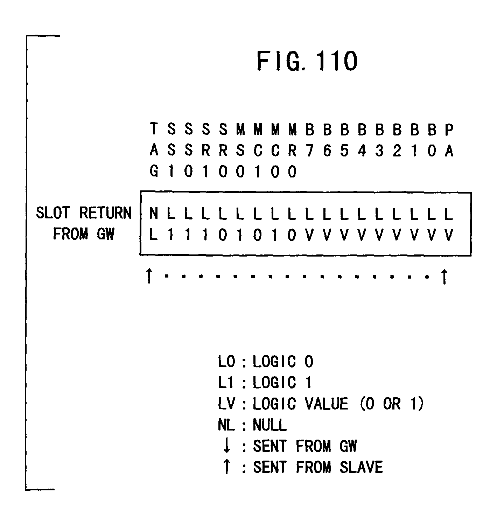

FIG. 110 is a diagram illustrative of a transmission protocol for a byte data transmission channel in the method of start/stop synchronous data transmission according to the present invention;

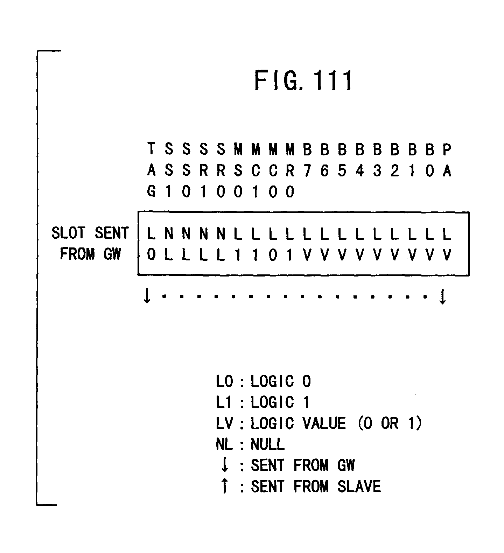

FIG. 111 is a diagram illustrative of a transmission protocol for a byte data transmission channel in the method of start/stop synchronous data transmission according to the present invention;

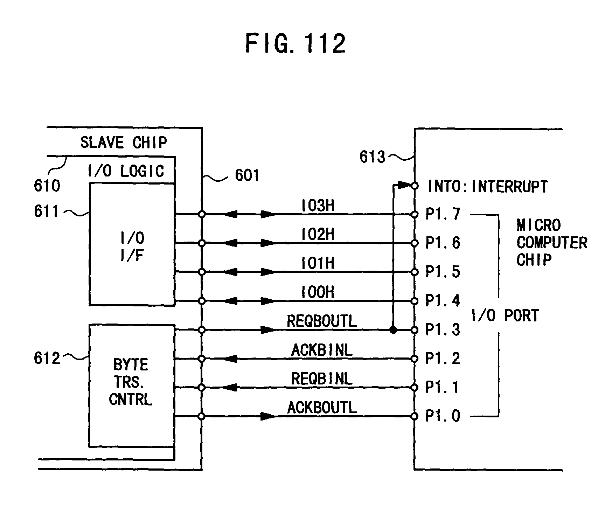

FIG. 112 is a block diagram showing an interface between a byte data transmission slave chip and an external circuit used in the method of start/stop synchronous data transmission according to the present invention;

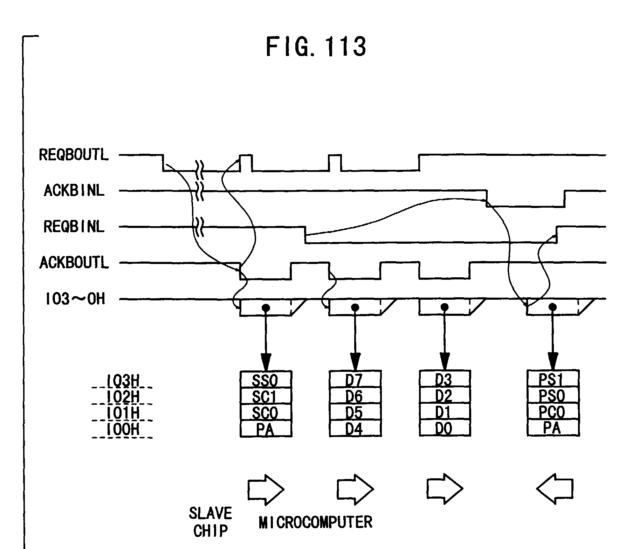

FIG. 113 is a timing diagram illustrative of operation of the interface shown in FIG. 112;

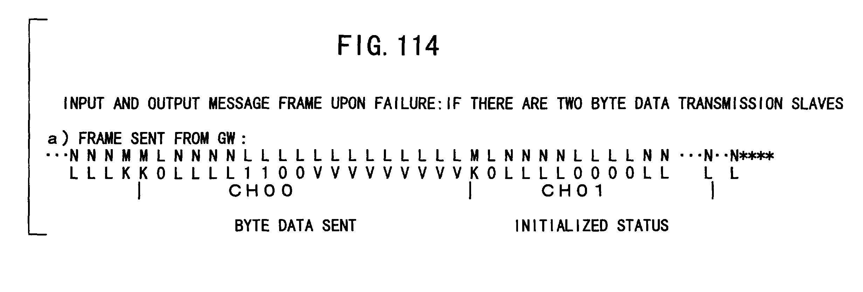

FIG. 114 is a diagram illustrative of a message frame upon a failure of a byte data transmission slave in the method of start/stop synchronous data transmission according to the present invention;

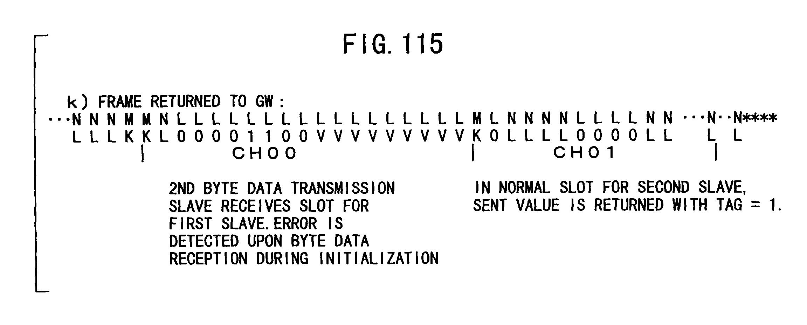

FIG. 115 is a diagram illustrative of a message frame upon a failure of a byte data transmission slave in the method of start/stop synchronous data transmission according to the present invention;

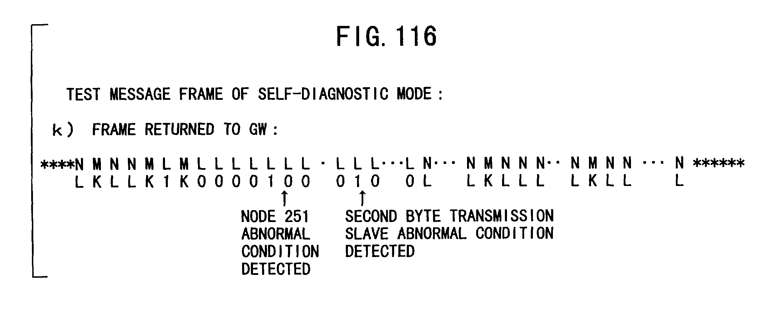

FIG. 116 is a diagram illustrative of a message frame upon a failure of a byte data transmission slave in the method of start/stop synchronous data transmission according to the present invention;

FIG. 117 is a block diagram of a conventional polling/selecting scheme for start/stop synchronous data transmission;

FIG. 118 is a block diagram of a conventional contention scheme for start/stop synchronous data transmission;

FIG. 119 is a block diagram of a simplified network for start/stop synchronous data transmission;

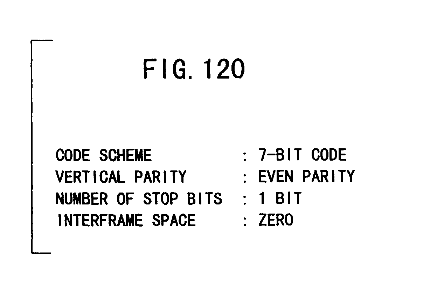

FIG. 120 is a diagram illustrative of a bit frame structure for start/stop synchronous data transmission;

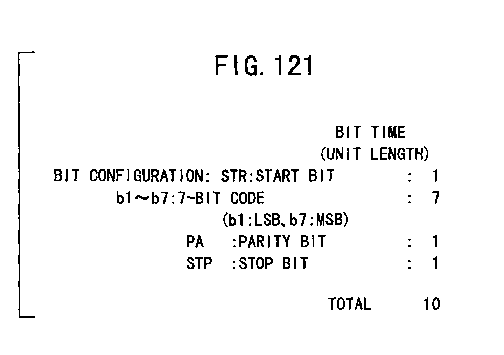

FIG. 121 is a diagram illustrative of a bit structure for start/stop synchronous data transmission;

FIG. 122 is a block diagram of a general arrangement of a microcomputer incorporating UART;

FIG. 123 is a diagram illustrative of a data frame format in CAN;

FIG. 124 is a block diagram of a DeviceNet slave node; and

FIG. 125 is a block diagram of an AS-interface system.

DESCRIPTION OF THE PREFERRED EMBODIMENTS

FIG. 1 shows in block form a terminal to which a method of start/stop synchronous data transmission according to the present invention is applied.

A communication network used in combination with the terminal shown in FIG. 1 is of the simplified network configuration shown in FIG. 119.

The terminal (slave station) used in the method of start/stop synchronous data transmission according to the present invention comprises a general-purpose asynchronous receiver/transmitter (UART) 101, a receiving line operation monitor circuit (hereinafter referred to as an idle detector) 105, a time interval counter 106, a synchronous flag (SYNCFLAG) circuit 107, a baud rate counter 108, an oscillating circuit 109, a clock pulse generating circuit 110, a microprocessor 102, a ROM 103, and a RAM 104. Functional blocks including I/O ports (not shown) are also added to the terminal.

The receiving line operation monitor circuit 105, the time interval counter 106, the synchronous flag circuit 107, and the baud rate counter 108 correspond to a baud rate generator of FIG. 122.

The clock pulse generating circuit 110 frequency-divides an oscillating output signal from the oscillating circuit 109 which cooperates with an externally connected resistor R and an externally connected capacitor C in operating as a CR oscillator, and supplies clock pulses to the microprocessor 102, the ROM 103, the RAM 104, the idle detector 105, the time interval counter 106, and the baud rate counter 108.

The microprocessor 102 cooperates with the ROM 103 and the RAM 104 in controlling the general-purpose asynchronous receiver/transmitter (UART) 101 via an internal bus.

Specifically, the receiving line operation monitor circuit 105, the time interval counter 106, the synchronous flag circuit 107, and the baud rate counter 108 are constructed as shown in FIG. 3.

The receiving line operation monitor circuit 105 has a 10-bit binary counter, for example, and receives a receiving line signal RxD and clock pulses. If the receiving line operation monitor circuit 105 detects when the receiving line signal RxD has not been received (high potential) for a certain period of time, i.e., if it reaches a full count (all logic 1), then the receiving line operation monitor circuit 105 stop counting clock pulses and makes an output idle signal low in potential (true). If the receiving line operation monitor circuit 105 detects when the receiving line signal RxD becomes low in potential, i.e., when a positive-going edge of the leading end of a bit frame is reached, the receiving line operation monitor circuit 105 is cleared, and makes an output idle signal high in potential (false).

The time interval counter 106 is a counter for counting clock pulses, and comprises a high-order 7-bit counter 106-1 and a low-order 8-bit counter 106-2 which are connected to each other by an OR gate 106-4, jointly making up a 15-bit synchronous counter. Within a range from the low to high potentials of the idle signal, the time interval counter 106 starts counting clock pulses from a negative-going edge of the receiving line signal RxD and counts clock pulses until a next negative-going edge of the receiving line signal RxD is reached, whereupon a carry from the low-order 8-bit counter 106-2 is supplied to the LSB of the high-order 7-bit counter 106-1. In this manner, the time interval counter 106 counts clock pulses as a 15-bit synchronous counter.

An AND gate 106-3 is opened by a rounding signal that is outputted when a counting process is completed at negative-going edge of the receiving line signal RxD, supplying the value of the MSB of the low-order 8-bit counter 106-2 to the LSB of the high-order 7-bit counter 106-1 for thereby rounding (rounding off) the count of the low-order 8-bit counter 106-2. Specifically, the supplying of the value of the 8th bit of the low-order 8-bit counter 106-2 with a load signal to the LSB of the high-order 7-bit counter 106-1 is equivalent to the addition of the value of the 8th bit of the low-order 8-bit counter 106-2, when it is of logic 1, to the LSB of the high-order 7-bit counter 106-1, thus rounding up the count of the low-order 8-bit counter 106-2. When the value of the 8th bit of the low-order 8-bit counter 106-2 is of logic 0, no logic 1 is added to the LSB of the high-order 7-bit counter 106-1, rounding down the count of the low-order 8-bit counter 106-2. Since the above process is the same as rounding off, it is referred to as either rounding off or rounding. The synchronous flag circuit 107 is set by a positive-going edge of the receiving line signal RxD after the completion of a counting process of the time interval counter 106. When the synchronous flag circuit 107 is set to a synchronous flag, any subsequent counting by the time interval counter 106 is inhibited. When a synchronization failure occurs, the synchronous flag circuit 107 is reset by software. When the synchronous flag circuit 107 is reset, the time interval counter 106 is cleared and brought into a standby state.

The baud rate counter 108 is a frequency-dividing counter for frequency-dividing clock pulses and detecting when the frequency of the frequency-divided clock pulses reaches a predetermined value. The baud rate counter 108 comprises a counter 108-1 and a decoder 108-2. A complement of the count "1" of the high-order 7-bit counter 106-1, which is produced by inverting, with an inverter 108-3, the count of the high-order 7-bit counter 106-1 which is generated when the count of the low-order 8-bit counter 106-2 is rounded by a first clock pulse, is loaded into the counter 108-1, which starts counting successive clock pulses. The decoder 108-2 detects when the count of the counter 108-1 reaches (the full count - 1, e.g., 1111110), and then repeats counting clock pulses when loaded with a rounded value again. The above operation is repeated insofar as the synchronous flag circuit 107 is set to the synchronous flag. The count of the baud rate counter 108 is used as a baud rate clock of the general-purpose asynchronous receiver/transmitter 101.

Operation of the terminal shown in FIGS. 1 and 3 will be described below with reference to a timing diagram of FIG. 4.

It is assumed that based on the communications protocol, a master station having a highly accurate baud rate clock produced by a quartz oscillator, for example, sends a certain meaningless message, i.e., a dummy message, at given cyclic intervals of 0.5 second, for example.

The dummy message is herein determined as a start-of-header SOH (start of heading character) and an end-of-block-data ETB (end of transmission block character)(BCC, block check character). The dummy message is shown in FIGS. 2A and 2B. Since the dummy message usually has no header, it is meaningless, and all terminals does not handle the dummy message as a message, but use the dummy message to generate a baud rate clock.

FIG. 4 shows the receiving line signal RxD at (a), an idle signal (IDLEH) at (b), the synchronous flag at (c), clock pulses (CLK) at (d), some clock pulses (CLK) in an enlarged scale at (e), an enable signal for the low-order 8-bit counter 106-2 at (f), an enable signal for the high-order 7-bit counter 106-1 at (g), the rounding signal at (h), a count of the low-order 8-bit counter 106-2 at (i), a count of the high-order 7-bit counter 106-1 at (j), loaded pulses of the counter 108-1 at (k), an enable signal for the counter 108-1 at (l), and a count of the counter 108-1 at (m).

The baud rate counter operates as described below at (A) through (E).

(A) When the receiving line signal RxD becomes low in level at a first negative-going edge of SOH, the time interval counter 106 that comprises the high-order 7-bit counter 106-1 and the low-order 8-bit counter 106-2 which are connected to each other starts counting clock pulses.

(B) The time interval counter 106 counts clock pulses until a next negative-going edge of the receiving line signal RxD. When the time interval counter 106 finishes the counting of clock pulses, if the MSB of the count of the low-order 8-bit counter 106-2 is of logic 1 because of the rounding signal ROUNDH, then the high-order 7-bit counter 106-1 is caused to count once, thus rounding the count from the low-order 8-bit counter 106-2. In FIG. 4, the count of the high-order 7-bit counter 106-1 is represented by a binary number "0001000".

(C) At a positive going edge of the receiving line signal RxD, the synchronous flag is set, and at the same time the ones complement (inverted logic value) of the count of the high-order 7-bit counter 106-1 is loaded into the counter 108-1, which starts counting clock pulses from a next clock pulse. In FIG. 4, the value loaded into the counter 108-1 is represented by a binary number "1110111".

(D) When the count of the counter 108-1 becomes a binary number "1111110", the decoder 108-2 detects this count, and the counter 108-1 stops counting subsequent clock pulses. Then, the same operation as described above in (C) is repeated, as shown in FIG. 5.

(E) The above repetitive operation is continued until the synchronous flag is reset by software.

Software-based control of the microprocessor 102 will be described below.

Transmission control software for the microprocessor 102 in the terminal is directed to an ordinary basic data transmission control process and also control processes (F) through (J) described below.

(F) Operation modes of the microprocessor 102 include a listening mode and an active mode. The ordinary basic data transmission control process such as a BSC (Binary Synchronous Communication) procedure is performed only in the active mode.

In the listening mode, the microprocessor 102 monitors a message sent from the master station to a terminal (slave station) over a receiving line, determines its own multiplied-frequency clock for UART, and starts to operate the communication circuit so as to be capable of start/stop synchronous data transmission. An information message shown in FIG. 6 is being flowing over the receiving line, and a forward-direction monitoring sequence shown in FIG. 7 is flowing over the receiving line.

(G) When the communication circuit starts to operate, the microprocessor 102 first enters the listening mode. First, the microprocessor 102 enables a receiver circuit of the UART 101 to receive data, and then resets the synchronous flag.

(H) When a character reception interrupt by the receiver circuit of the UART 101 occurs, the microprocessor 102 checks if the UART 101 has detected a framing overrun error (the stop bit is of logic 1) and a parity error. If the UART 101 has detected an error, then control goes back to the control process (G). The microprocessor 102 checks received characters, and if the received characters are ETB, then control goes to the control process (I) below. If the received characters are other than ETB, then control goes back to the control process (G).

(I) The microprocessor 102 receives following characters and sequentially checks if the received characters are a character string shown in FIG. 6 at (a) through FIG. 7 at (l). If the received characters do not correspond to the character string shown in FIG. 6 at (a) through FIG. 7 at (l), then control goes back to the control process (G). If information messages shown in FIG. 6 at (a) through (f) and information messages shown in FIG. 7 at (g) through (l) are normally received up to the final character, then control goes to the control process (J) below.

If the received characters contain BCC, then the received characters are normal when a horizontal parity check in BCC is normal. If the received characters do not contain BCC, then the received characters are normal when the final control character is a prescribed character. If the received characters are not normal, then control goes back to the control process (G).

(J) The microprocessor 102 continuously receives following characters. As with the control process (I) above, if the UART 101 has detected an error, then control goes back to the control process (G). The microprocessor 102 checks if the string of received characters corresponds to the information messages shown in FIG. 6 at (a) through (f) and the information messages shown in FIG. 7 at (g) through (l) and also if the string of received characters is normal, as with the control process (I) above. If the microprocessor 102 receives a message which is not normal, then control goes back to the control process (G). If the microprocessor 102 receives twice the dummy message indicated by the information message shown in FIG. 6 at (f), then the microprocessor 102 enters the active mode.

The microprocessor 102 enters the active mode as a result of the above control processes only if the message caught in the control process (G) is the dummy message. This is because only when the probability that the message which sets the synchronous flag is the dummy message is high, control goes to the control process (I), and the microprocessor 102 confirms the received characters in the control process (I), and confirms receiving the dummy message twice in the control process (J). Within a few seconds after the start of the control process (F), the synchronization using the dummy message of the frequency-divided clock frequency is completed.

Since the clock pulses of the microcomputer are generated by the CR oscillating circuit 109 and tend to be affected by changes in the ambient temperature and fluctuations in the power supply voltage, the microprocessor 102 may, if necessary, be forcibly brought into the listening mode at certain cyclic intervals of time (several minutes to several tens of minutes) for re-synchronization.

In the illustrated embodiment, the communication network employs full-duplex lines. If the communication network employs half-duplex lines, then since messages sent from slave stations other than the master station flow in a mixed manner over lines, when a message from a slave station is caught upon synchronization, the frequency-divided clock has its accuracy equalized to the accuracy of the baud rate of the slave station, resulting in a disadvantage. However, the communication network according to the illustrated embodiment does not suffer such a disadvantage because the microprocessor is synchronized only by the dummy message frame from the master station which has a high clock frequency accuracy.

The present invention is capable of coping with changes, which may range up to a ratio of 1 : 3, caused in the frequency of clock pulses due to the CR oscillating circuit 109, as described below. In an algorithm for calculating the frequency-divided clock, described below, n represents the count of the counter 108-1 of the baud rate counter 108, and tb represents a bit time.

Upon reception of SOH, since tb7 = 8 bit time length is measured as shown in FIGS. 2A and 2B,

$$tb7 = 8tb = n$$

Therefore, the following equation is satisfied:

$$tb = n/8$$

The counter 108-1 is set to the rounded-off count of the high-order 7-bit counter 106-1.

If the UART frequency-divided clock needs a frequency which is 32 times the frequency of the baud rate, then its frequency is required to be:

$$tb/32 = n/8/32 = n/256$$

For example, a clock frequency range from 5 MHz to 20 MHz is considered with respect to the baud rate of 19.2 kbps, and counts n at the frequencies of 5 MHz and 20 MHz at the respective ends of the clock frequency range will be calculated as follows:

$$tb = 1/19.2k(s) = 52.083333\mu s,$$

$$tb/32 = 1/19.2k/32 \ (s) = 1.6276041 \ \mu s,$$

$$tb7 = 8tb = 416.66666 \ \mu s.$$

When clock pulses of the clock frequency of 5 MHz are counted, the count n becomes n = 416.66666/0.20 = 2083, and when clock pulses of the clock frequency of 20 MHz are counted, the count n becomes n = 416.66666/0.05 = 8333.

The count of the counter is rounded down.

Therefore, the setting for the counter 108-1 is as follows:

When clock pulses of the clock frequency of 5 MHz are counted, the setting for the counter 108-1 is n/256 = 2083/256 = 8.136, and it is rounded off into 8, and when clock pulses of the clock frequency of 20 MHz are counted, the setting for the counter 108-1 is n/256 = 8333/256 = 32.550, and it is rounded off into 33.

In start/stop synchronous data transmission, an erroneous reception caused by a frequency-divided clock error occurs when the stop bit is sampled. Specifically, an erroneous reception is determined by an interval "(tstp ⁻ smpl) ⁻ tpa" and an interval "(tb ⁻ frm) ⁻ (tstp ⁻ smpl)" shown in FIG. 2A.

In FIG. 2A, if the interval "(tstp ⁻ smpl) ⁻ tpa" (the time difference between the trailing edge of the parity bit and the time of sampling the stop bit) is zero or negative, or the interval "(tb ‾ frm) ‾ (tstp ‾ smpl)" (the time difference between the negative-going edge of the start bit of a next bit frame and the time of sampling the stop bit) is negative or positive, then an erroneous reception occurs.

The time differences in the clock frequency range from 5 MHz to 20 MHz are shown in FIGS. 8 and 9. As shown in FIG. 8, the interval "(tstp ‾ smpl) ‾ tpa" is negative at 5.2 MHz, indicating that stable data reception is impossible. At clock frequencies other than 5.2 MHz, the interval "(tstp ‾smpl) ‾ tpa" is normal, indicating that stable data reception is possible. Actually, it is necessary to provide a margin in view of time jitter of the negative-going edge due to the oscillating circuit 109, the clock pulse generating circuit 110, the time interval counter 106, the UART 101, the transceiver, and the communication line cable. Usually, a margin of a few μs, at most 5 μs, is sufficient. It can be seen from FIGS. 8 and 9 that the time difference of 5 μs or more is ensured from 6 MHz to 20 MHz, and is also ensured at clock frequencies higher than 20 MHz.

At the baud rate of 19.2 kbps, one bit frame is received per about 500 μs. Therefore, an 8-bit microcomputer having a clock frequency ranging from 6 MHz to 30 MHz, for use in the terminal (slave station), needs an interval ranging from 20 to 60 μs in view of a reception interrupt time and a processing time for reading characters from a UART reception register, and the interval is in an appropriate range as a reception processing overhead. Therefore, the interval is sufficiently practical in the method of start/stop synchronous data transmission according to the present invention.

When data is sent, a maximum error occurs at a trailing edge of the parity bit. The maximum error is necessarily smaller than the error at the stop bit.

In the method of start/stop synchronous data transmission according to the present invention, the dummy message is represented by "SOH, ETB, (BCC)", but may comprise other characters.

For example, if "STX (start of text character), ETX (end of text character), (BCC)" are selected as the dummy message, then as shown in FIG. 10, when STX is used, the time interval of the same 8-bit time is measured by counting pulses from a first negative-going edge of the first character to a third negative-going edge thereof. When ETX is used, the time interval of the same 8-bit time is measured by counting pulses from a negative-going edge of the first character to a second negative-going edge thereof.

In another example, "NULL, NULL" may be used as the dummy message, where no interframe space is present.

Such an example is shown in FIG. 11 in which pulses from a first negative-going edge of the first character to a first negative-going edge of the next first character may be counted. Since the calculation of (÷ 10) is required in this example, a dividing process and a rounding process may be carried out by a microcomputer, and may be written into a frequency-divided clock counter.

A system arrangement will be described below.

FIG. 12 shows in block form a serial transmission bus system which is used to carry out the method of start/stop synchronous data transmission according to the present invention.

The serial transmission bus system shown in FIG. 12 has a central controller 201 comprising a central personal computer or a programmable logic controller for performing centralized discrete control, operation management, and data collection, discrete controllers 202-1, 202-2 each comprising a programmable logic controller for performing discrete control, and a discrete controller 203 comprising a personal computer or a board computer such as a VME board for performing discrete control and image processing.

The central controller 201 and the discrete controllers 202-1, 202-2, 203 are connected for high-speed data transmission by the Ethernet or a standard serial transmission bus predetermined in the data transmission industry for use between programmable logic controllers.

The serial transmission bus system also has gateways 204-1, 204-2, 204-3 which interconnect serial transmission buses 206, 207, such as DeviceNet, for example, that are used to connect the discrete controllers 202-1, 202-2, 203 and sensors and actuators via a small amount of wiring, and decentralized serial transmission buses 217, 218 for effecting protocol conversion between these serial transmission buses.

The serial transmission buses 206, 207 are connected between the gateways 204-1, 204-2, 204-3 that serve as masters and the sensors and actuators that are disposed in a decentralized pattern in industrial machines and apparatus. The sensors and actuators include proximity switches 208, 213, a photoelectric switch 209, an electromagnetic relay 210, an illuminated switch 211, a manifold solenoid-operated valve 212, an indicator 214, a bar-code reader 215, and an analog input unit 216.

The serial transmission bus system further has DC 24 V power supplies 205-1, 205-2 and 205-3 for supplying an operating power to communications terminals and the sensors and actuators via the buses.

Main specifications of the serial transmission bus system will be described below.

In the embodiment illustrated in FIG. 12, the serial transmission bus system employs a ring bus as its network topology, and also employs a cyclic transmission process using a single master and multiple slave masters for start/stop synchronous data transmission and a baseband transmission process for waveform transmission.

Main specifications of the decentralized serial transmission system will be described below.

a) System specifications:

The network topology is a ring topology with 128/256/512 nodes (including dummy chips) and bit input and output points (on/off input and output points) representing 64-point outputs, 64-point inputs/128-point outputs, 128-point inputs/256-point outputs, 256-point inputs.

The total length of the bus cable is a maximum of 200 m (without repeaters), the number of bus branches is 8, the total length of each branch bus is 25 m, the maximum internode distance is 10 m, and the ring can be branched by branch buses using ring branch connectors in a manner equivalent to T branches (return bus cables to the ring branch connectors are required).

The transmission medium comprises a four-conductor flat cable with two conductors (going and returning buses) assigned to signal lines and two conductors (+ DC 24 V, GND) assigned to power supply lines.

A bus transceiver is free of bus line insulation, a bus driver has a 74 HC series bus driver output (EIA/JEDEC standards), and a bus receiver has a 74 HC series Schmitt trigger gate input.

Transmission rates include a bearer rate of 2 Mbps and an effective transmission rate of about 500 kbps. The decentralized serial transmission system employs a start/stop synchronous data transmission process, a cyclic transmission process using a single master and multiple slave masters for communications, and a baseband transmission process for waveform transmission.

A bit frame structure comprises a total of four bits including one start bit, two data bits, and one stop bit, with the coding scheme being shown in FIG. 13.

A message frame structure has bit frames whose numbers are shown in FIG. 14.

A field structure includes a SYNC field for synchronization and message type designation, an output field for transmitting bit outputs, an input field for transmitting bit inputs, a byte field for timing positive-going edges at the leading ends of bit frames for reproducing and relaying data in slave chips and also for transmitting byte data, and a bus idling period which is free of information (successive low levels) between message frames.

The types of message frames include an input and output message frame for inputting and outputting bits and transmitting byte data, a test message frame which performs the same operation as the input and output message frame except that no bit is outputted out of the chip, for self-diagnosis, and a status message frame for all slave chips to send their own transmission failure detection status for retrieving self-diagnosis information.

For byte data transmission, the number of byte data transmission channels is 8/16 per bus, a full-duplex communication process is used for transparent transmission, transmission information is 8 bits + a parity bit, and transmission rates per channel is about 500 bytes/s for uplink transmission and about 500 bytes/s for downlink transmission.

b) Slave chip specifications:

The fabrication process for slave chips is a CMOS logic circuit fabrication process. The pins include 16 main pins (only the main pins are used when a bit input and output function is used with 128-point inputs and outputs) and 5 auxiliary pins (the auxiliary pins are used when a dummy chip and a byte data transmitting function, other than the 128-point inputs and outputs, are used). Address setting for each node is not needed, a bus transceiver is incorporated, and a built-in clock generator comprises a oscillating circuit for generating a clock signal ranging from 16 to 50 MHz.

With respect to a reproducing and relaying/input and output function, a going bus and returning bus reproducing and relaying circuit is incorporated in a slave chip, and the built-in clock generator is used to measure a baud rate with a bit frame at the leading end of a message frame. Three R (reclocking, retiming, and reshaping) functions for reproducing and relaying subsequent bit frames are performed using a special arithmetic algorithm based on the above measured value, with respect to leading edges of but output bit frames using leading edges of but input bit frames. The going bus sends and receives bit frame data assigned thereto depending on the type of message frames.

The bit input and output function uses four I/O pins, and can select one of eight combinations of one through four bit inputs and outputs including one input point and one output point, four input points and four output points, and two input points and two output points.

An output pin circuit has a 74 HC series bus driver output, and an input pin circuit has a 74 HC series Schmitt trigger gate input. For output reversal transmission, the logic value of received bit data is reversed by designating a setting pin, and can be outputted to a pin. For input reversal transmission, the logic value of an input is reversed by designating a setting pin, and can be outputted to a bus. An output strobe pulse output function is set such that there is a strobe pulse output for bit output. A byte data transmitting function can be designated by a function setting pin, and a transmission capacity is one channel/chip. When byte data is transmitted, an interface external to the chip uses I/O pins as a bidirectional nibble bus in a time-division fashion, and performs a handshaking interfacing process. An I/O pin circuit has an open drain bus driver output with a pull-up resistor.

A dummy chip function can be designated by a function setting pin, and only reproduces and relays data without inputting and outputting data at all. With respect to transmission error detection, transmission unit error detection is carried out per bit frame, with a start bit being set to a logic 1 for start bit checking and a stop bit being set to a logic 0 for stop bit checking.

The numbers of positive-going edges and negative-going edges are checked by a transmission unit timeout check for detecting the timeout of a positive-going edge at the leading end of a next bit frame. The foregoing process is effected on both going and returning bus inputs.

A SYNC field format check, an output field format check, an input field format check, and a byte channel slot check are carried out on returning bus inputs.

An error output protecting function is performed at the leading end of a bit frame next to preceding normally transmitted data. A WDT function is performed by a built-in watchdog timer with a timeout time of about 20 ms., the watchdog timer being reset by normal transmission of a message frame. An output fallback function allows a pin output to be set by a setting pin to either output holding upon immediately near normal transmission or logic 0 output (clear) upon WDT timeout.

A status indicator output is in the form of an LED indicator drive output which flickers at a cyclic period of 1 s. for normal transmission and flickers at a cyclic period ranging from 0.26 s. to 0.5 s. for detected transmission failure or WDT timeout. Upon WDT timeout, a loop-back switch is tuned on to loop a going bus output back to a returning bus input (a going bus output externally from the chip is held as bus idling).

c) Gateway specifications:

A higher-layer controller interface is compatible with various industrial serial transmission buses and the Ethernet, and a byte data transmission interface is via RS232C/RS422 if the industrial serial transmission bus has only a bit input and output function, with the configuration being provided by a HH (hand-held terminal) or a PC (personal computer) with dedicated software which is connected to a dedicated RS232C channel.

A byte data transmission channel transmission protocol is based on a basic-type data transmission procedure (JIS-X-5002)/a BSC procedure, has eight bus branches, and has operation modes including a setting mode, a standby mode, an operation mode, a self-diagnosis mode, and a maintenance mode.

An automatic bus wiring topology recognizing function serves to automatically recognize a wiring topology in the setting mode, stores an address allocation of higher-layer controller bit input and output points and an address allocation of highly decentralized bus bit input and output points in a non-volatile memory, and automatically maps the topology based on the stored address allocations upon normal operation. A transmission error detection process is shown in FIG. 15.

A self-diagnosis maintenance assisting function serves as a loop-back check function, and serves to effect a self-diagnosis by directly connecting a sending bus and a returning bus. A transmission failure detection log function serves to record information of various detected transmission failures of the gateway when a transmission error is detected, record a transmission failure detection status per slave which has been obtained by sending a status message immediately after the transmission error, and read the recorded status from the HH or the PC.

A fault location isolating and indicating function serves to estimate a fault isolation area from the above log information or failure information upon a retry when a transmission failure is detected, and displays the estimated fault isolation on the HH or the PC. The fault location isolating and indicating function is capable of determining a fault isolation with the probability of 100 % when a bus cable is disconnected.

A bus wiring topology logging function is capable of displaying on the HH or the PC an automatically recognized bus wiring topology, node types, and the number of input and output points.

A bus wiring system and a bus transceiver according to the present invention will be described below.

FIG. 16 shows a bus wiring system in block form. In FIG. 16, the bus wiring system includes slave units 220, 230, 240, 250, bus branch connectors 261 ,271, and bus cables 260, 270 in the form of four-conductor flat cables. There are eight bus branch connectors 261 ,271.

DC power supplies 205-1, 205-2, 205-3 (see also FIG. 12) have power supply outputs connected to power supply terminals of all the gateways 204-1, 204-2, 204-3, and are used as internal circuit operating power supplies of the gateways 204-1, 204-2, 204-3. The power supply outputs of the DC power supplies 205-1, 205-2, 205-3 are also connected to two conductors of the bus cables 260, 270 by the bus branch connectors 261 ,271 for supplying electric power to all the slave units 220, 230, 240, 250.

The gateway 204-1 will be described below by way of example.

A sending bus signal outputted from a gateway logic circuit 219 of the gateway 204-1 is supplied to the first bus branch connector 261, for example, and sent to the first slave unit 220 as a forward bus input to a bus receiver 221. An output from the bus receiver 221 is reproduced and relayed by a forward bus logic circuit 222, receiving/transmitting data, as necessary, and is outputted to a bus driver 223. An output from the bus driver 223 is supplied as a forward bus output to a bus cable 263, from which it is supplied as an input to a bus receiver 231 of the next slave unit 230. Similarly, the forward bus cables 260 are connected successively to the slave units.

In the slave unit at the terminal end of the bus break, a forward bus signal is supplied to a jumper line 265 and then transmitted inversely. The forward bus signal is supplied as an input to a backward bus receiver 234 of the slave unit 230, for example, reproduced and relayed by a backward logic circuit 235, and supplied as a backward bus signal from a backward bus driver 236 via a bus cable 264 to the slave unit 220. The backward bus signal is transmitted successively through the slave units and supplied as a backward bus input to the bus branch connector 261 and as a forward bus input to the bus branch connector 271. The forward bus input is finally supplied as a backward bus input to the gateway logic circuit 219 of the gateway 2041. The other gateways 204-2, 204-3 operate in the same manner.

The slave units 220, 230 240, 250 are supplied with an operating electric power via the bus wiring system and at the same time with forward and backward bus input and output signals. The bus signals are received, reproduced, and relayed by the bus receivers, the bus drivers, the bus receiver, the forward bus logic circuits, and the backward bus logic circuits, while data is being sent and received as necessary. Because of the ring bus configuration, bus signals sent from the gateways 204-1 through 204-3 go through all the slave units 220, 230, 240, 250, and return as backward bus signals to the gateways 204-1 through 204-3.

The bus transceiver is of a 74 HC series according to EIA/JEDEC standards for reducing the costs of the slave units. The bus drivers 223, 226, 233, 236 comprise 74 HC bus drivers, and the bus receivers 221, 224, 231, 234 comprise 74 HC Schmitt trigger gates.

Many industrial serial transmission bus systems employ a linear bus topology to achieve a bus length ranging from several hundred m to one km or longer. For high-speed long-distance data transmission and noise resistance, the bus cables 260, 270 comprise a shielded-together paired-wire cable, and terminating resistors (100 to 120 Ω) equal to the twisted-wire characteristic impedance are connected as terminators to both ends of the bus to suppress the generation of reflected waves. The bus transceiver employs a differential sending transceiver and a differential receiving transceiver, typically RS-485 transceiver integrated circuits, that are fabricated by the bipolar linear semiconductor fabrication process, for noise resistance and ground potential fluctuations. In some buses, bus cables have four conductors including two conductors used for carrying bus signals and two conductors used for supplying a DC 24 V electric power.

The serial transmission bus system to which the present invention is applicable is intended as a bus system subordinate to an industrial serial transmission bus system capable of transmitting data at a high speed over a long distance, and as a simple serial transmission bus system for use in a single industrial machine or apparatus used on a manufacturing or assembling line.

It is sufficient for the serial transmission bus system to have a total bus cable length up to 200 m, with the bus cable length between slave units being up to 10 m. Since the bus cable length is short, a DC power may be supplied via bus cables to the slave units and also sensors/actuators connected to the slave units, so that power supply lines can greatly be reduced, resulting in a highly effective line saver. It is preferable that the DC 24 V power supply have a load fluctuation ratio of ± 3 % to ensure a voltage of DC 24 V ± 10 % at bus cable ends.

In view of the above considerations, the bus topology employs a ring bus configuration, the bus cables comprise inexpensive four-conductor flat cables, and the bus transceiver may be fabricated by an inexpensive CMOS logic circuit fabrication process.

Since the maximum distance between units is 10 m, resulting in a reduced noise pickup distance, the bus system is sufficiently resistant to noise even for single-ended data transmission and reception using a 74 HC transceiver. The forward bus logic circuit, the backward bus logic circuit, and the bus transceiver can be incorporated in a single chip according to the inexpensive CMOS logic circuit fabrication process. Inasmuch as the backward bus circuit is included in the bus-branch-type slave circuit (see FIG. 16), the bus system can be used without concern over the limitation which would otherwise need to keep ring-shaped cables in the ring bus configuration. Even if the maximum length of each bus branch cable is 25 m and the bus end is under a load of 1 A, the power supply capability ensures a voltage range of DC 24 V ± 10 % for manifold solenoid-operated valves and electromagnetic solenoids that have a smallest range of allowable power supply voltage fluctuations.

The arrangement of a slave chip according to the present invention will be described below.

FIG. 17 shows in block form a slave chip used in the method of start/stop synchronous data transmission according to the present invention.

As shown in FIG. 17, a slave chip 300 serving as a slave unit is a component of a serial data transmission bus system. All slave units incorporate one or more slave chips for controlling communication with the serial data transmission bus system, and bit input and output and byte data transmission via buses.

The slave chip 300 is manufactured by the CMOS logic circuit fabrication process which is most widely used among various semiconductor fabrication processes and which is effective to achieve the greatest reduction in the production cost.

In the slave chip 300, a forward bus input is supplied to a forward bus regenerative repeating circuit 301. In the forward bus regenerative repeating circuit 301, the bus signal is received by a bus receiver in the form of a 74 HC series Schmitt trigger gate, and a serial signal is reproduced by the three R (reclocking, retiming, and reshaping) functions, and relayed by a 74 HC bus driver as a forward bus output to the next slave unit. Similarly, a backward bus input is supplied to a backward bus regenerative repeating circuit 302, from which it is supplied as a backward bus output to an upstream slave unit.

The slave chip 300 has a clock oscillating circuit 303 which does not need any external parts. Clock pulses outputted by the clock oscillating circuit 303 are supplied to a forward bus regenerative repeating circuit 301, a backward bus regenerative repeating circuit 302, and a control circuit 304. The control circuit 304 effects general control on the operation of forward and backward buses for serial transmission, reproduction, and relay of data, and also controls an input/output circuit 305 and controls bit inputting and outputting operation and nibble data transmission upon byte data transmission via input and output pins (four pins) 306.

The input/output circuit 305 reads and holds a bit output received from the forward bus and assigned thereto, and outputs the bit output to an assigned one of the input and output pins 306 via a bus driver with predetermined timing. A bit input (logic value) from an assigned one of the input and output pins 306 is read and held with predetermined timing, and is sent to a bit input section of the input/output circuit 305 to which a forward bus serial signal is assigned. If a byte data transmission function is set, then the input and output pins 306 are used as time-division bidirectional nibble data buses for sending and receiving control information for byte data transmission channels and byte data.

The reference numeral 309 represents terminals for setting the total number of bit input and output points of the bus, assigning bit inputs and outputs to the input and output pins 306, setting inversion/non-inversion of the logic values of bit inputs and outputs, selecting a bit input and output function or a byte data transmission function, outputting strobe pulses for bit output, and inputting and outputting a handshake control signal for time-division bidirectional transmission over a nibble data bus upon byte data transmission.

The reference numeral 308 represents a watchdog timer (WDT) circuit comprising a watchdog timer for monitoring the operation of the forward bus input line. The watchdog timer circuit 308 energizes an LED indicator for a status externally of the slave chip based on a normal/abnormal communication state in the forward bus regenerative repeating circuit 301 and the backward bus regenerative repeating circuit 302, and a watchdog timer operation state (WDT timeout/normal). An output signal for the LED indicator is outputted from the watchdog timer circuit 308 to a status pin 309.

If the watchdog timer circuit 308 undergoes timeout to detect a failure, then selector switches 310-1, 310-2 are operated to block the backward bus input from the backward bus regenerative repeating circuit 302, connect the forward bus output forcibly to the forward bus input, and fix the forward bus output to a low level, resulting in a bus idle state. Specifically, during the timeout of the watchdog timer circuit 308, the forward bus output is forcibly looped back to the forward bus input, and a bus idle signal is sent to those slave chips following the bus branch to disable the slave chips.

A specific example of the attachment of a slave unit to a sensor/actuator. FIG. 18A is an exploded perspective view showing the manner in which two binary output sensors such as the proximity switch 208 and the photoelectric switch 209 and a decentralized serial transmission bus are attached to a serial interface unit. A forward bus cable assembly 321 and a backward bus cable assembly 322 are connected to a sensor unit 320 by bus cable connectors, and a DC 24 V power supply and forward and backward buses are connected. Cables from the two sensors are connected to sensor unit 320 by sensor connectors 323, 324.

The sensor unit 320 incorporates a printed-circuit board supporting forward and backward bus connectors, sensor connectors, a slave chip, an LED indicator, and electronic parts including diodes, resistors, and capacitors. Each of the bus cable assemblies 321, 322 has a bus cable connector 326 (see FIG. 18B). As shown in FIG. 18B, when flat cables 322-1 are inserted in the bus cable connector 326, known piercing and pressing blades 322-2 in the bus cable connector 326 penetrate the cover layers of the flat cables for pressed electric connection to the four conductors thereof altogether under spring forces. The bus cable connector 326 thus used is effective to reduce the length of cables used and the time and the amount of labor required to connect cables in the industrial machines and apparatus.

FIG. 19 shows a wiring arrangement of a sensor unit and binary sensors. The wiring arrangement shown in FIG. 19 allows four binary sensors to be connected to the sensor unit. As shown in FIG. 19, there are a four-input sensor unit 330 and four binary sensors 331 through 334. The sensor unit 330 has a forward bus connector 335, a backward bus connector 336, and sensor connectors 337. A forward bus from a slave unit forward of a bus branch is connected to the sensor unit 330 by the forward bus connector 335. A forward bus signal is supplied from a forward bus signal line 343 via a terminal/protective resistor 350 to a forward bus of a slave chip 370. A forward bus output signal reproduced and relayed by a forward bus regenerative repeating circuit in the slave chip 370 is sent through an output protective resistor 351 as a forward bus input for a next slave unit to a forward bus signal line 347 of the backward bus connector 336.

A backward bus signal is supplied from a backward bus signal line 348 via a terminal/protective resistor 352 as a backward bus input to the slave chip 370. The supplied backward bus input is reproduced and relayed by a backward bus regenerative repeating circuit in the slave chip 370, and sent as a backward bus output via an output protective resistor 353 to a backward bus input signal line 344 of the forward slave unit.

A GND line 342 of the bus branch cable is connected via the forward bus connector 335 to provide an internal circuit GND level in the slave chip 370, and is also connected to a GND line 346 of the backward bus connector 336 as a GND line of the next slave unit. A bus DC 24 V power supply line 341 is connected via the forward bus connector 335 and then via the backward bus connector 336 to a power supply line 345 of the next slave unit. The bus DC 24 V power supply 341 also is connected via a series-connected dropping resistor 354 and a reverse power protection diode 355 to a positive terminal of a power supply decoupling capacitor 356 and an input terminal of a three-terminal voltage regulator 357. The bus DC 24 V power supply 341 also is connected via a reverse power protection diode 358 to the anode of a sensor input status LED indicator 359. The three-terminal voltage regulator 357 supplies an output as an electric power for internal logic circuits of a slave unit to the slave chip 370 and a sensor input signal conditioner circuit.

The binary sensor 331 is connected via a sensor connector 363 to the sensor unit 330. The DC 24 V power supply is connected via a reverse power protection diode 367 to a sensing circuit 371. The sensing circuit 371 detects a change in a physical quantity to be detected, converts the detected change as an on- or off-state of an output transistor 372, and outputs the on- or off-state. The output signal from the output transistor 372 is supplied to a sensor input signal conditioner circuit which comprises components denoted by 359 - 361, 364, 365. If the output signal of the binary sensor 331, i.e., the output transistor 372, is turned off, then a small current flows via an LED 359, resistors 360, 361, and a diode 364 to a logic circuit power supply, making high in level one of input and output pins of the slave chip 370. If the output signal of the binary sensor 331, i.e., the output transistor 372, is turned on, then a relatively large current of 5 mA, for example, flows via the LED 359 and the resistor 360 to the sensor output, so that the potential of the input and output pin of the slave chip 370 is equalized to the on-voltage, which is normally 1 V or less, of the binary sensor.

A capacitor 365 and the resistor 361 jointly make up a CR filter circuit for removing noise and absorbing chattering of the binary sensor output signal.

When the input and output pin of the slave chip 370 is set as an input pin, it exhibits hysteresis because it serves as a 74 HC series Schmitt trigger gate input. Together with the effect of the CR filter circuit, it is capable of greatly removing noise and absorbing chattering. In this manner, the on- or off-state of the output of the binary sensor is read into the slave chip 370. When the slave chip 370 receives an input and output message frame that is periodically outputted by a gateway, the slave chip 370 writes respective input values from the four binary sensors into a transmission unit of the forward bus output which is assigned to the slave chip 370, and sends the transmission unit. The transmission unit is repeatedly reproduced and relayed by successive following slave chips until finally it is read as a backward bus input to the gateway. A status output of the slave chip 370 is supplied to the sensor input status LED indicator 359. When the logic circuit power supply is turned on, the sensor input status LED indicator 359 is flickered at all times to indicate a status of the slave unit in a flickering pattern allotted to the status.

As described above, using the slave chip 370 allows peripheral circuits including a logic circuit power supply and a sensor input signal conditioner circuit to be constructed of a three-terminal voltage regulator, a diode, an LED, a resistor, and a capacitor which are inexpensive, so that the slave unit can be made small in size, light in weight, and low in cost. Output values of the binary sensor, an on/off state of the bus power supply, and an operating state of the slave unit can be recognized at a glance based on an indication produced by the LED for identifying a faulty area in the event of a failure. Conventional complex parallel cables for supplying electric power to binary sensors are replaced with connectors, allowing slave units to be grounded near binary sensors. Therefore, the slave chip 370 serves as a wire saver. While the binary sensor 331 has been described above, the above description of the binary sensor 331 applies equally to the binary sensors 332 through 334. FIG. 19 shows an interface arrangement for the three-wire sensors. However, an interface arrangement for two-wire sensors can similarly be constructed of similar circuits.

FIG. 20 shows manifold solenoid-operated valves directly connected to the decentralized serial transmission bus. As shown FIG. 20, four solenoid-operated valves 381 through 384 mounted on a manifold base 380 incorporates air pressure manifold pipes which provide a source air pressure supply passage and a discharge passage. The solenoid-operated valves 383, 384 comprise single-solenoid-operated valves, and the solenoid-operated valves 381, 382 comprise double-solenoid-operated valves. Therefore, a total of six solenoid coils are connected respectively to solenoid coil units 385, 386, 391, 392, 393, 394 by connectors.

Ordinary manifold solenoid-operated valves are connected to a terminal base disposed closely thereto by individual wires from output terminals of solenoid-energizing transistor switches of a controller such as a programmable logic controller. A solenoid power supply of DC 24 V is connected to the solenoids by jumper lines connected to the terminal base. Two wires from each of solenoid coil units are individually connected to the terminal base.

Such a conventional arrangement requires a total of 27 wires to be connected to the terminal base which is of 14 poles, including 12 wires from the manifold solenoid-operated valves, 7 wires (one being a common wire) from the programmable logic controller, two wires from a DC 24 V power supply, and 6 jumper wires in the terminal base.

With the manifold solenoid-operated valves directly connected to the decentralized serial transmission bus according to the present invention, only bus cables 395, 396 and a solenoid power supply cable 397 shown in FIG. 20 are required to be connected to a connector 398 mounted on a side of the manifold base 380. The solenoid power supply supplies electric energy independently to the solenoids because of the need to achieve a power supply separation at external contact circuits for safety fallback. However, since the DC 24 V power supply cable is capable of supplying a current of 1 A, if there is no need for such a power supply separation for safety fallback, then the electric power for a plurality of manifold solenoid-operated valves can be supplied in the branch.

FIG. 20 shows an in-manifold bus 399 extending from the connector 398. The in-manifold bus 399 comprises a six-conductor cable and a plurality of dedicated connectors which connect the six solenoid coils respectively to solenoid coil units 385, 386, 391, 392, 393, 394.

FIG. 21 shows a wiring arrangement in the manifold solenoid-operated valves, including an in-manifold bus. In FIG. 21, the reference numerals 402, 406 represent forward bus cables, the reference numerals 403, 407 represent backward bus cables, and the reference numeral 398 represents the connector 398 mounted on the side of the manifold base 380, as shown in FIG. 20. The reference numeral 460 represents an in-manifold bus, the reference numerals 430 through 437 represent printed-circuit boards incorporated in solenoid coil units, and the reference numerals 440 through 447 represent solenoid coils.

FIG. 22 shows an internal wiring arrangement of one of the printed-circuit boards 430 through 437 incorporated in the solenoid coil units. As shown in FIGS. 21 and 22, bus power supply cables 400, 401 and the bus cables 402, 403 are connected to a connector 416. The bus power supply cables 400, 401, which are connected to the DC 24 V bus power supply and ground, respectively, are connected to power supply pins of a connector 417. The bus power supply cable 401 connected to ground is connected to a ground line of the in-manifold bus 460. The bus power supply is connected via a protective fuse to an input terminal of a DC/DC converter 418 which serves to generate a power supply for logic circuits on the printed-circuit boards 430 through 437. The DC/DC converter 418 has an output terminal (Vcc) for generating the power supply for those logic circuits, the output terminal being connected to the in-manifold bus 460. A solenoid power supply (Sol. 24 V+/24 V-) is connected to the in-manifold bus 460. In the wiring arrangement shown in FIG. 21, the solenoid power supply is associated with break contacts 421, 422 for external safety interlock. If either one of the break contacts 421, 422 is broken, then the solenoid power supply (Sol. 24 V+) for all the solenoid coils is cut off, and the solenoid-operated valves operate in a safety mode irrespective of an output state of the controller.

A forward bus input signal is supplied via a terminal/protective resistor 423, an in-manifold bus connector 424, and the in-manifold bus 460 to the first printed-circuit board 430. A forward bus output signal from the printed-circuit board 430 is supplied via a connector and the in-manifold bus 460 as a forward bus input signal to the next printed-circuit board 431. Similarly, the forward bus signal is transmitted successively through the printed-circuit boards, and finally supplied via a terminal/protective resistor 425 and a connector 417 to the next unit. A backward bus signal is supplied in a direction opposite to the forward bus signal.

Operation of the printed-circuit board 430 as an example of the printed-circuit boards 430 through 437 will be described below.

To the connector of the printed-circuit board 430, there are connected eight lines, i.e., logic circuit power supply lines (Vcc, GND), solenoid power supply lines (Sol. 24 V+/24 V-), a forward bus input line (FWDIN), a forward bus output line (FWDOUT), a backward bus input line (BWDIN), and a backward bus output line (BWDOUT). The logic circuit power supply line (Vcc) is connected via a noise removal EMI filter to a slave chip 455. The solenoid power supply line (Sol. 24 V+) is connected via a reverse-current blocking diode to the solenoid coil 440 near the printed-circuit board 430, and also connected to a counterelectromotive force absorbing diode 451 across the solenoid coil 440 and via a resistor to a coil energization LED indicator 452. The solenoid power supply line (Sol. 24 V-) is connected via parallel low resistors 453, 454 of 10 Ω to ground. The forward bus input line (FWDIN), the forward bus output line (FWDOUT), the backward bus input line (BWDIN), and the backward bus output line (BWDOUT) are connected to corresponding pins of the slave chip 455. The slave chip 455 is set to one bit output point by a setting pin. A 74 HC bus driver output signal from one corresponding input and output pin is supplied to the base of a transistor 456 connected to resistors. The transistor 456 has a collector connected to one terminal of the solenoid coil 440 near the printed-circuit board 430. A status output signal from the slave chip 455 is supplied to a status LED indicator 457.

A bit output sent via the bus is received by the slave chip 455, and the solenoid coil 440 is turned on or off depending on the value of the received bit output. If the solenoid coil 440 is turned on, the LED indicator 452 is energized. The status LED indicator 457 which is driven by the slave chip 455 is flickered to indicate whether the slave chip 455 is operating normally or malfunctioning.

The solenoid coil units of conventional manifold solenoid-operated valves, which are connected by individual wires, also need printed-circuit boards for carrying counterelectromotive force absorbing diodes, coil energization LED indicators, and reverse-current blocking diodes.

In this embodiment, if the slave chip 455 is to be mounted as a bare chip on the printed-circuit board 430 and other electronic parts to be mounted on the printed-circuit board 430 are small surface-mounted parts, then the slave chip 455 and the other electronic parts can sufficiently be mounted on the printed-circuit board 430 which has a relatively small area. If dedicated connectors for the in-manifold bus 460 are of such a structure that when bus cables are inserted in rectangular holes, rectangular blades penetrate the cover layers of the bus cables for pressed electric connection to the conductors thereof, as with the other normal bus cables, then in-manifold bus cable assemblies having connector intervals which match the physical layout of solenoid coil units can be mass-produced highly efficiently at a low cost by a dedicated automatic assembling machine controlled by a personal computer.

In the illustrated embodiment described above, each of the binary sensors is a three-wire sensor or two-wire sensor which is connected to a sensor unit. However, a slave chip may be incorporated in a sensor itself, and a bus cable may be connected directly to the sensor. Alternatively, a slave chip may be incorporated in a control electromagnetic relay, and a bus cable may be connected directly to the slave chip. These modifications can be made using small-size, low-cost slave chips. Normally, only one bit input point or one bit output point is used on slave chips. Recent years have seen an advanced self-diagnostic function on sensors and actuators for discrete control. Slave chips for use with such sensors and actuators may have a combination of four input and output points at most that can be set. Even if a unit incorporates a number of, e.g., 16, electromagnetic relays, four slave chips that are set to four output points may be used.

A bit frame structure applicable to the method of start/stop synchronous data transmission according to the present invention will be described below.

The decentralized serial transmission buses according to the present invention employ a modification of the conventional method of start/stop synchronous data transmission which has heretofore been used in a wide range of fields. A bit frame structure in the decentralized serial transmission system is shown in FIGS. 24A through 24G. FIGS. 24A through 24E show a basic arrangement of the bit frame structure. A bit frame comprises the following bits:

A start bit (STR) comprises one bit which is necessarily of a logic 1 (high level). A data bit 1 (d1) comprises one bit which is of a logic 0 or a logic 1 (low level or high level). A data bit 2 (d2) comprises one bit which is of a logic 0 or a logic 1 (low level or high level). A stop bit (STP) comprises one bit which is necessarily of a logic 0 (low level).

The general method of start/stop synchronous data transmission employs a bit frame comprising a total of 8 or 9 bits including 7 or 8 data bits and one parity bit. The bit frame according to the present invention differs from the conventional bit frame in that it comprises a total of 4 bits. The bit frame for serial transmission will be referred to as a transmission unit. One transmission unit is coded with a combination of data bits as shown in FIG. 23.

FIG. 24A shows a general configuration of a transmission unit bus signal waveform. FIG. 24B shows strobe generation timing pulses (TMG1/3/5/7) at respective bit times from the positive-going edge of a start bit upon reception of a transmission unit, and a timing pulse (TMG9) for detecting transmission unit timeout. FIG. 24C shows transmission edge times (TMG2/4/6) for generating a transmission bus signal.

FIG. 24D shows a succession of the waveforms of the codes shown in FIG. 23. FIG. 24E shows that a continuation of low levels of two or more transmission units is defined as a bus idle state. FIGS. 24F and 24G show waveforms produced upon detection of the transmission unit timeout. The transmission unit timeout is detected by monitoring a positive-going edge of the start bit of a next transmission unit during a period from the timing pulse TMG7 to the timing pulse TMG9. If there is no such positive-going edge, then a transmission unit timeout error occurs at the timing pulse TMG9. The timing pulses are shown in FIG. 25.

The serial transmission system according to the present invention employs 500 ns for each of the bit times, i.e., a bearer rate of 2 Mbps. This is a bit rate capable of stably transmitting baseband data under the conditions of a maximum inter-node distance of 10 m and using inexpensive flat cables as the transmission medium, with a 74 HG bus driver and Schmitt trigger gate as a transceiver that can easily be implemented by a slave chip manufactured according to the inexpensive CMOS logic circuit fabrication process.

Transmission units are coded in order to accomplish highly reliable transmission. Specifically, if a one-bit error is assumed in the data bit 1 and the data bit 2, then a logic (L0) or a logic (L1) necessary becomes a null (NL) or a mark (MK). In most cases, as described later on, a slave chip is capable of detecting message frame errors, and errors can be detected 100 % by a gateway backward message frame check. If a one-bit error is assumed in the mark (MK), then since it is prescribed that the mark (MK) is present necessarily in a plurality of positions in a message frame, a slave chip and a gateway can detect an error 100 %. For the null (NL), a one-bit error changes to a logic value 0 or 1. As described above, since it is prescribed that a field changes from a logic value succession to a null (NL) succession according to a message frame format and it is checked by a slave chip, the probability that the slave chip overlooks a one-bit error is low, e.g., two out of 777 transmission units of message frames (see the subtotal when 128 points are inputted/outputted as shown in FIG. 14) at the time 128 points are inputted and 128 points are outputted, for example. Errors can be detected 100 % by the gateway. As described later on, if a transmission error can be detected by at least the gateway, then the bit output of a slave chip can be retained directly as the output value at the time of the previous normal transmission. The transmitted value of a bit input from the gateway to the higher-layer controller can also be retained directly as the value at the time of the previous normal transmission.

Specifically, if a one-bit error is assumed, then it is possible to provide 100 % protection against an error input and an error output. By coding data bit into two bits according to the method of start/stop synchronous data transmission, the effective data transmission rate is lowered to less than 500 kbps, resulting in a disadvantage as compared with a bearer rate of 2 Mbps. However, it is possible to achieve highly reliable transmission beyond a high performance level required for industrial serial transmission buses, with a small logic circuit scale.

A built-in clock circuit applicable to the method of start/stop synchronous data transmission according to the present invention will be described below.

In order to make unnecessary an oscillator, a capacitor, and a resistor external to the slave chip and reduce the cost and installation area, the clock oscillating circuit 303 (see FIG. 17) is incorporated in the slave chip. The resistance of diffused resistors cannot be made highly accurate for clock oscillating circuits that can be manufactured according to the CMOS logic circuit fabrication process. While it is possible to incorporate a special CR oscillating circuit fabricated on the basis of a relatively accurate resistance ratio of two diffused resistors, such a process is responsible for a reduced yield, a large chip area, and a poor cost reduction.

According to the present invention, as shown in FIG. 26, the clock oscillating circuit incorporated in the slave chip comprises a ring oscillator in the form of an odd number of known ring-connected inverter gates 470-1 through 470-25. The ring oscillator supplies an output signal as clock pulses to a D flip-flop 471, from which an inverted Q output signal is supplied to a D input terminal of the D flip-flop 471, thus providing a down counter for generating clock pulses having a duty cycle of 50 % upon oscillation of the ring oscillator. The D flip-flop 471 supplies a Q output signal to an inverter 472 as a normal-phase clock driver. The inverted Q output signal of the D flip-flop 471 is supplied to an inverter 473 as an inverted-phase clock driver. The inverter 472 supplies an output signal to inverters 474-1 through 474-4, which are located in a decentralized pattern near a clock load so as to serve as a clock driver for outputting clock pulses. The inverter 473 supplies an output signal to an inverter 474-5, which serves as a clock driver for outputting clock pulses. The oscillating frequency of the ring oscillator is given by the following equation:

$$fosc\ (typ) = 1000/(tpd\ (typ) \cdot 2na)$$

where fosc represents the oscillating frequency (MHz) of the ring oscillator, tpd (typ) represents the average propagation delay time (ns) of the inverters, and na represents the number (odd number) of the ring-connected inverters.

If tpd (typ) = 0.31 ns, na = 25, then fosc (typ) = 64.5 MHz.

Therefore, the frequency of the built-in clock oscillating circuit, after it has been divided by 2, is basically 32 MHz. In view of variations in the fabrication process, power supply voltage fluctuations, temperature changes, and aging, the following frequencies may result in the worst case, with the ratio of lowest and highest frequencies being 1 : 3.125.

f CHIPCLK (min.) = 16 MHz
f CHIPCLK (typ.) = 32 MHz
f CHIPCLK (max.) = 50 MHz

The principles of timing pulse generation applicable to the method of start/stop synchronous data transmission according to the present invention will be described below.

It is not easy to reproduce and relay transmission units according to the method of start/stop synchronous data transmission using the clock oscillating circuit 303 having a wide range of frequencies as described above, as compared with the ordinary start/stop synchronous data transmission, even if the transmission units have a small bit frame length.

FIG. 27A shows a graph having a horizontal axis representative of frequencies and a vertical axis of errors from the normal time position of the timing pulse TMG7 (the timing where the error of the generation timing for a stop bit and a reception strobe is maximum) at the time a baud rate is generated for certain transmission units by the method of start/stop synchronous data transmission according to the present invention. The errors were calculated when the lowest frequency was 16 MHz that was 16 times the bearer rate of 2 Mbps and the highest frequency was 50 MHz.

In FIG. 27A, the upper and lower dot-and-dash lines indicate time positions of adjacent waveform-generating timing pulses (TMG6, TMG8 = the first positive-going edge of a next transmission unit), and the broken line curve indicates errors when the count of the low-order 8-bit counter 106-2 shown in FIG. 3 was rounded down. At 19.9 MHz, the error was 343 ns (point a), affecting the positive-going edge of a next transmission unit, so that an erroneous operation cannot be avoided.

The solid-line curve in FIG. 27A indicates calculated errors when the count was rounded off for increased accuracy. At 17.9 MHz, the error was 185.2 ns (point b), and at 18.0 MHz, the error was 194.4 ns (point c), not affecting the adjacent timing pulses, so that a certain improvement was achieved.

In FIG. 27B, the solid-line curve indicates a timing pulse TMG7, and the broken-line curve indicates a timing pulse TMG6, with the count being rounded.

Since a slave chip generates bus output edge using the time position of 1.666 μs at 18 MHz clock, and preceding slave chip may receives bus signal at the timing pulse TMG7 having time position of 1.564 μs (point b), an erroneous operation is inevitable.

Such a clock inaccuracy is caused because, as compared with the method of start/stop synchronous data transmission according to the present invention (see FIG. 3), the bit frame length is 4 bits which is less than half the bit frame length of 10 bits, resulting in a short measuring time, and the ratio of the baud rate and measured clock (minimum value) is small as it is 2.083 vs. 8. Particularly, the latter factor is prevalent. For increasing accuracy, it is the most easy to increase the oscillating frequency of the clock oscillating circuit 303. however, since the maximum frequency of clock pulses has already been of a high value of 50 MHz (100 MHz with the ring oscillator), it is difficult to double the oscillating frequency of the clock oscillating circuit 303.

To obviate the above technical difficulties, the following calculating algorithm is introduced in order to generate the timing pulses TMG1 through TMG9.

If it is assumed that Tu represents a transmission unit time duration = 2 μs and nc represents the count of a time measuring counter, then

when f CHIPCLK (min.) = 16 MHz, the count of the time measuring counter is set to nc = 32,

when f CHIPCLK (typ.) = 32 MHz, the count of the time measuring counter is set to nc = 64, and

when f CHIPCLK (max.) = 50 MHz, the count of the time measuring counter is set to nc = 100.

According to the above algorithm, the time measuring counter may be constructed of a 7-bit up counter that is activated by the clock oscillating circuit 303. If the oscillating frequency of the clock oscillating circuit 303 is 16.9 MHz, for example, then since the clock period is 59.17 ns, the count nc produced when the transmission unit time duration of 2 μs is measured with the clock period of 59.17 ns should be nc = 2.000 ns/59.17 ns = 33.8.

However, the time measuring counter cannot count time after the decimal point, but rounds down such time, the count ns of the time measuring counter is nc = 33.

With respect to the strobe timing pulse TMG5 taken as an example, the count nc when the transmission unit time duration of 2 μs is divided into 5/8 is given as follows:

$$(nc/8) \cdot 5 = (33/8) \cdot 5 = 20.625$$

The value after the decimal point is rounded down, and the count ns of the time measuring counter is nc = 20. Therefore, the above equation is modified as follows:

$$(nc/8) \cdot 5 = (nc/2) + (nc/8)$$

In order to prevent the rounded-down error from increasing, the above modified equation is calculated as follows:

$$(nc/8) \cdot 5 = (nc/2) + (nc/8)$$

$$\fallingdotseq (nc/2 \text{ROUND } 5{:}0) + (nc/8 \text{ROUND } 3{:}0)$$

where (nc/2ROUND 5:0) represents the result obtained when the least significant bit of the time measuring counter is rounded into the high-order 6 bits thereof, and (nc/8ROUND 3:0) represents the result obtained when the low-order 3 bits of the time measuring counter are rounded into the high-order 4 bits thereof. FIG. 28 shows the results of the calculation of the above equation at 16.9 MHz.

Hence,

$$(nc/8) \cdot 5 = (nc/2) + (nc/8)$$

$$\fallingdotseq (nc/2 \text{ROUND } 5{:}0) + (nc/8 \text{ROUND } 3{:}0)$$

$$\fallingdotseq 17 + 4 = 21$$

The respective times are calculated as shown in FIG. 29.

Rounding operations are carried out for the three counts 4, 8, 17, shown in FIGS. 29 and 30, of the time measuring counter, and it can be seen that all times can be generated by combining the rounded results.

With the above calculating algorithm, it is possible to generate edges of the timing pulses TMG1 through TMG9 with 7-bit accuracy, except for an unavoidable rounding error. The above algorithm is advantageous in that the 7-bit accuracy can be achieved by operating a plurality of counters in cascade without the use of multiplier-dividers and adder-subtractors which require a great number of logic gates, as described later on.

A reproducing and relaying operation will be described below.

The decentralized serial transmission buses according to the present invention are of a ring topology and subject to wiring limitations equivalent to those of a linear topology for preventing users from suffering strong wiring limitations which necessitate a ring-like wiring arrangement inherent in ring buses, while having a maximum of 8 bus branch wires laid in a daisy chain arrangement. Therefore, a slave chip has a reproducing and relying circuit for a forward bus and a backward bus. Thus, 512 reproducing and relaying processes at maximum are required for 128-point outputs and 128-point inputs, and 1024 reproducing and relaying processes at maximum are required for 256-point outputs and 256-point inputs.

It is evident that in view of the bit frame structure used in the method of start/stop synchronous data transmission as shown in FIG. 31, the reproducing and relaying operation should be carried out as follows:

The bit structure of one received transmission unit is known at the timing pulse TMG7. The positive-going edge of a start bit of a following transmission unit is normal if it is present between the timing pulses TMG7, TMG9. If it is not present until the timing pulse TMG9, the bit structure of the received transmission unit may possibly be erroneous. Therefore, only after the reception of the positive-going edge of a start bit of a following normal transmission unit, the normal reception of the preceding transmission unit can be confirmed. Accordingly, a bus output signal sent from a slave chip to a next slave chip has to have a delay equal to one transmission unit.

The subsequent description is based on the assumption that one reproducing and relaying process will accompany a delay equal to one transmission unit. FIG. 31 shows a bus wiring arrangement of slave chips 1a through 4a connected for effecting four reproducing and relaying processes, and FIG. 32 shows the waveforms of input and output data of the forward and backward buses of the slave chips shown in FIG. 31. Each of the slave chips 1a through 4a needs to be constructed of a synchronous logic circuit with a built-in clock for stable operation. The slave chips 1a through 4a have respective clock oscillating circuits 303 whose oscillating frequencies and phases differ from each other.

Even if bus input signals which are out of synchronism with oscillating outputs from the clock oscillating circuits 303 are converted into synchronous signals kept in synchronism with the oscillating outputs from the clock oscillating circuits 303, then the bit structure of a transmission unit is determined according to the above calculating algorithm, and a next transmission unit is shaped in waveform and outputted to the bus at a given timing based on the determined bit structure, variations in the time duration of the transmission unit will be accumulated as the transmission unit goes through a number of relaying stages, with the result that no stable data transmission can be ensured from a bus system designing standpoint.

To eliminate the above drawback, as shown in FIG. 32, after bit input and output information is carried on a message frame, transmission units which correspond to the number of reproducing and relaying stages are added as dummy information to the message frame. It is assumed that when the salve chip reproduces and relays each transmission unit with a delay, it generates a first positive-going edge of a bus output transmission unit, using a first positive-going edge (the positive-going edge of a start bit) of a next transmission unit. Each time a message frame is reproduced and relayed, the transmission unit at the trailing end of the message frame cannot be reproduced and relayed because there is no next transmission unit. As a result, the trailing end of the message frame is deleted, and the message frame becomes one transmission unit shorter, and then sent to the next slave chip.

However, since dummy transmission units which correspond to the number of reproducing and relaying stages are added, it is guaranteed that the bit input and output information which is of importance will return to a gateway backward bus. The waveforms (a) through (i) shown in FIG. 32 show the manner in which the dummy transmission units are successively deleted to ensure the return of the bit input and output information. In FIG. 32, the bit input and output information is represented by four transmission units sandwiched between leading frame ends MK. FIGS. 33(a) through 33(i) illustrate a frame propagation by way of abbreviations written in vertical columns. The abbreviation in the first column, for example, stands for null. Similar abbreviations are also shown in FIGS. 48 through 111 as described later on.

In the actual circuit arrangement, the first positive-going edge of a transmission unit suffers a propagation delay of 5ns/chip, for example, per reproducing and relaying process in each slave chip, and a propagation delay of 6ns/m in a bus wire. For 256-point outputs and 256-point inputs and a total bus wire length of 200 m at maximum, the total propagation delay becomes:

$$(5ns) \cdot (1024) + (6\ ns) \cdot (200) = 6.32\ \mu s.$$

This total propagation delay poses no essential problem, but causes delay time jitter to appear as fluctuations of the time duration of transmission units. However, since the jitter is of a normal distribution and remains to be of a normal distribution after being reproduced and relayed in multiple stages, the jitter does not become problematic in view of a reception margin of start/stop synchronous data transmission. Specifically, even if the variance of jitter due to the chip and wiring per one reproducing and relaying stage is variance $\sigma = 5$ ns and there are 1024 reproducing and relaying processes involved, the product of the same probability distribution is the same and the variance remains unchanged. Inasmuch as 100 ns or more is kept for the worst reception margin according to the above calculating algorithm, the probability of an error reception due to the jitter is 20 $\sigma$, which is a sufficiently low level not to cause a practical problem.

FIG. 34 shows a logic circuit arrangement ranging from a bus input section to a bus output section, and FIG. 35 shows a timing chart illustrative of operation of the logic circuit arrangement shown in FIG. 34. As shown in FIG. 34, the logic circuit arrangement includes a bus receiver G1 comprising a Schmitt trigger gate, a NAND gate G2 having an input terminal supplied with an output signal from the bus receiver G1, two D flip-flops (F/F) Q1, Q2 for converting a clock signal and a bus input signal ASFWDBUSINH which is an asynchronous signal into a clock synchronous signal, an R-S (set-reset) flip-flop Q3 comprising cross-connected NAND gates, and a bus driver G4.

The bus input signal ASFWDBUSINH is received by the bus receiver G1, which supplies an output signal as a data input signal to the D flip-flop Q1 which is activated by a clock signal CHIPCLKL that is an inverted-phase output signal from the clock oscillating circuit 303. The D flip-flop Q1 supplies a Q output signal as a data input signal to the D flip-flop Q2 which is activated by a clock signal CHIPCLKH that is a normal-phase output signal from the clock oscillating circuit 303. The HAND gate G2 is supplied with another input signal which becomes true between the timing pulses TMG7, TMG1. Signals supplied to set and reset terminals of the R-S flip-flop Q3 are as follows:

A signal DAT2HIGHL supplied to the set terminal is a control signal which is of a low level for making high in level bus output data 2, and is applied at the timing of the timing pulse TMG4.

A signal DATA1LOWL supplied to the reset terminal is a control signal which is of a low level for making bus output data 1 low in level, and is applied at the timing of the timing pulse TMG2.

A signal DATA2LOWL supplied to the reset terminal is a control signal which is of a low level for making bus output data 1 low in level, and is applied at the timing of the timing pulse TMG2.

A control signal STPBLOWL is of a low level for making a stop bit low in level, and is applied at the timing of the timing pulse TMG6.

In FIG. 35, when the bus input signal ASFWDBUSINH changes from a low level to a high level at the first positive-going edge of a transmission unit, the output signal from the NAND gate G2 goes low, setting the R-S flip-flop Q3 and changing the bus output from a low level to a high level. The D flip-flop Q1 is set, and then the D flip-flop Q2 is set. An output signal FWDBUSINH from the D flip-flop Q2 is a bus input signal synchronous with the oscillating output signal from the clock oscillating circuit 303. Subsequent operation of the circuits, including a timing generating circuit, in the slave chip is carried out on the basis of this bus input signal FWDBUSINH.

FIG. 35 shows a sequence of operation where a preceding received transmission unit is represented by L0 and a present received transmission unit is represented by NL. After the positive-going edge of the signal FWDBUS, a normal reception of the preceding transmission unit L0 is confirmed, and the control signal DAT1LOWL is generated at the timing pulse TMG2, the control signal DAT2HIGHL at the timing pulse TMG4, and the control signal STPBLOWL at the timing pulse TMG6. As shown in FIG. 35, a bus output signal ASFWDBUSOUTH has a pattern of 1010, indicating that the preceding transmission unit L0 is reproduced and relayed with a delay.

The D flip-flop Q1 and the D flip-flop Q1 are indispensable for synchronizing the but input signal which has been asynchronous with the oscillating output signal from the clock oscillating circuit 303. In FIG. 35, Hatched areas between positive- and negative-going edges of the bus input signal ASFWDBUSINH represent a waveform shift having a one clock pulse duration, which is caused by bus input signal synchronization with the D flip-flop Q1. The positive-going edges of the bus output signal ASFWDBUSOUTH shown in FIG. 35 also reflect the waveform shift of the bus input signal. Therefore, as viewed from the clock signal CHIPCLKH that is a normal-phase output signal from the clock oscillating circuit 303, the first positive-going edge of a bus output transmission unit varies in a range from a preceding 0.5 clock pulse duration at minimum to a preceding 1.5 clock pulse duration at maximum.

FIG. 37 shows a timing generating circuit based on the above timing generating principles and reproducing and relaying process. The timing generating circuit comprises a group of synchronous up counters shown in FIG. 36.

As shown in FIG. 37, an uppermost time measuring counter 481 counts up clock pulses of the oscillating output signal from the clock oscillating circuit 303 during a period of time from the first positive-going edge of a first transmission unit (set to NL) to the first positive-going edge of a next transmission unit. If the oscillating output signal from the clock oscillating circuit 303 has a clock frequency of 16.9 MHz, the time measuring counter 481 counts up 33 clock pulses. The time measuring counter 481 loads rounding counters 482, 483, 484 with MSB through 4 bits, MSB through 5 bits, and MSB through 6 bits, respectively, of the count of the time measuring counter 481 in response to a first clock pulse, and causes the rounding counters 482, 483, 484 to count up following clock pulses only when the low-order 3rd bit, 2nd bit, and 1st bit, respectively, of the count of the time measuring counter 481 are of a logic 1, so that the rounding counters 482, 483, 484 calculate rounded values from the low-order 3rd bit, 2nd bit, and 1st bit, respectively, of the count of the time measuring counter 481.

In FIG. 37, counters 485 through 492 generate the timing pulses TMG1 through TMG9 using the rounded values from the rounding counters 482, 483, 484. As shown in FIG. 38, precisely according to the calculating algorithm described above, an (nc/8) • 1CNTR 3:0 counter (hereinafter referred to as a timing counter) 485, an (nc/8) • 2CNTR 4:0 counter (hereinafter referred to as a timing counter) 486, and an (nc/8) • 5CNTR 5:0 counter (hereinafter referred to as a timing counter) 488 are first operated simultaneously, and remaining counters 489, 490, 491, 492 are operated in cascade. The eight counters 485 through 492 are loaded with, as initial values, the counts from the three rounding counters 482, 483, 484 in response to a clock pulse following the calculation of the rounded values, according to the calculating algorithm, as indicated by the connections of the counters in FIG. 37.

Specifically, the timing counter 485 is loaded with ones complements (inverted logic values of the respective bits) of the count of the rounding counter 482. The timing counter 486 is loaded with ones complements of the count of the rounding counter 483. The timing counter 487 is loaded with ones complements of the count of the rounding counter 482. The timing counter 488 is loaded with ones complements of the count of the rounding counter 484. The timing counter 489 is loaded with ones complements of the count of the rounding counter 482. The timing counter 490 is loaded with ones complements of the count of the rounding counter 483. The timing counter 491 is loaded with ones complements of the count of the rounding counter 482. The timing counter 492 is loaded with ones complements of the count of the rounding counter 483.

Due to the delay caused by the above circuit arrangement for synchronizing an asynchronous bus input signal, the internal clock synchronization suffers a delay ranging from the 0.5 clock pulse duration to the 1.5 clock pulse duration with respect to the bus input signal. A period of time corresponding to one clock pulse is required to load the counts of the rounding counters 482, 483, 484. Because of these delay and period of time, a delay ranging from the 1.5 clock pulse duration to the 2.5 clock pulse duration is developed with respect to the bus input signal until the first three counters 485, 486, 487 start counting up clock pulses. In order to average the delay for correction, a counting-up condition for the first three counters 485, 486, 487 is detected by external decoders 493, 494, 495 when (the full count - 2) is detected (see FIG. 37), rather than when the full count is detected, i.e., all bits become a logic 1. The detection of such a counting-up condition with the external decoders 493, 494, 495 allows any time errors of the timing pulses TMG1 through TMG9 to fall within a range of [± (rounding error) ± (0.5 clock pulse duration)].

FIG. 39 shows a timing chart of operation of the counters shown in FIG. 38 at the time the clock frequency is 16.9 MHz. FIG. 39 shows at (a) the forward bus input signal ASFWDBUSINH whose message frame has a first transmission unit NL and a next transmission unit MK.

FIG. 39 shows at (b) the chip clock signal CHIPCLKH shown in FIGS. 34 and 35, shows at (c) the synchronized output signal FWDBUSINH shown in FIGS. 34 and 35, and shows at (d) a signal ENBASLHEDGH shown in FIGS. 34 and 35. As shown at (e) in FIG. 39, the time measuring counter 481 starts counting up clock pulses from the positive-going edge of a first transmission unit, and stops counting up clock pulses at the positive-going edge of a next transmission unit.

When the time measuring counter 481 stops counting up clock pulses, it count is 33. In response to a loading signal shown at (f) in FIG. 39 which is in synchronism with the positive-going edge of the next transmission unit, the time measuring counter 481 loads the three rounding counters 482, 483, 484 with MSB through 3 bits, MSB through 4 bits, and MSB through 5 bits, respectively, of the count of the time measuring counter 481. The three rounding counters 482, 483, 484 then round the loaded values in response to a next clock pulse shown at (g) in FIG. 39. The rounded counts of the rounding counters 482, 483, 484 are 4, 8, 17, respectively, as shown at (h), (i), (j), respectively, in FIG. 39. In response to a next clock pulse shown at (k) in FIG. 39, the rounded values from the rounding counters 482, 483, 484 are loaded into the eight timing counters 485 through 492. The timing counters 485, 486, 488 start counting subsequent clock pulses. The counts and times of the timing counter 485, the timing pulse TMG1, the timing counter 486, and the timing pulse TMG2 are shown at (l), (m), (n), (o), respectively, in FIG. 39.

FIGS. 40 and 41 show the manner in which the eight timing counters 485 through 492 count clock pulses when nc = 33. The timing counters 485 through 492 are cleared in response to a second clock pulse from the first positive-going edge of a following transmission unit, are loaded with rounded values in response to a third clock pulse, in the same manner as when the first positive-going edge of the second transmission unit comes. The three timing counters 485, 486, 488 start counting fourth and subsequent clock pulses.

In this fashion, timing generation is repeatedly carried out for each transmission unit, using the values calculated from the counts in the first transmission unit, until the trailing end of the message frame is reached. In a normal receiving operation, the timing counter 492 is cleared in response to a second clock pulse from the positive-going edge of a next transmission unit before the timing counter 492 reaches a full count. Therefore, no timing pulse TMG9 is generated. Stated otherwise, if a timing pulse TMG9 is generated, then a transmission unit timeout error detected.

FIG. 42 is a graph of time positions of data sent and received from the first positive-going edge of a transmission unit, plotted against the clock frequency of clock pulses generated by the timing generating circuit shown in FIG. 37. In FIG. 42, the broken-line curves represent time positions with a time error of + 0.5 clock pulse duration and the solid-line curves represent time positions with a time error of - 0.5 clock pulse duration. Blank areas between the curves of the timing pulses TMG1 through TMG7 indicate sending and receiving margins. The worst sending and receiving margin occurs between the timing pulses TMG6, TMG7, and is of 105.4 ns.

The detection of a transmission unit error will be described below.

In receiving individual transmission units of forward and backward bus inputs, all the transmission units except for the first transmission unit of the message frame are subject to the following detection of a transmission unit error. As shown in FIG. 43, edges of a normal transmission unit, including the positive-going edge of a following transmission unit, are counted as numbers shown at the right-hand end. The property of these numbers of edges is utilized in detecting a transmission unit error. Specifically, transmission units are sampled on the basis of the count nc of the time measuring counter 481 from the positive-going edge of the start bits, and additionally, positive-going edges and negative-going edges over a one-transmission-unit time are counted. The counts of these edges are checked against the sampled values for detecting a transmission unit error. Samplings at the center of the bit time and counted positive-going edges and negative-going edges need to be checked by the number of edges over the entire period of the one-transmission-unit time in order to make complete error detection for individual transmission units. To meet such a requirement, it is necessary to monitor a train of successive transmission units without interruptions. Accordingly, two sets of decision circuits including edge counters are required to be operated alternately. A positive-going edge counter and a negative-going edge counter comprise 3-bit counters, respectively. When their count exceed 7, then the count is fixed to 7. As shown in FIG. 43, count enable signals for the edge counters are applied as follows:

Positive-going edges are counted from (nc/8) • 7 of a preceding transmission unit to (nc/8) • 1 of a following transmission unit.

Negative-going edges are counted from the positive-going edge of a start bit to the positive-going edge of a start bit of a following transmission unit.

Specifically, whether a transmission unit has been transmitted normally or in error is decided by a truth table shown in FIG. 44 after the reception of the transmission unit is completed.

All transmission units other than those where combinations of sampled values and counted edge numbers are normal are determined as erroneously transmitted transmission units and labeled "transmission unit error". Forward and backward bus outputs delayed for one transmission unit after detected and sent are all fixed to NL until the trailing end of a subsequent message frame.

FIG. 45 shows a normal reception and erroneous transmissions by way of example. In FIG. 45, (a) represents a normal reception because sampled values (a mark) and the numbers of counted positive- and negative-going edges (for the mark, there are two positive-going edges and one negative-going edge) agree with each other. In FIG. 45, (b) represents an abnormal received waveform. If it were decided with sampled values only, then it would be determined as a mark reception. Actually, however, an erroneous transmission is detected by checking the sampled values and the numbers of counted positive- and negative-going edges in combination. In FIG. 45, (c) represents an erroneous transmission which is detected by both sampled values as the stop bit is of a logic 1 and the numbers of counted edges.

According to the ordinary start/stop synchronous data transmission, transmission unit errors are decided only on the basis of sampled values by checking the start bit for a logic 1 and the stop bit for a logic 0, tending to overlook intermediate abnormalities. By employing an error detecting process based on a combination of sampled values and the numbers of counted edges, however, it is possible to greatly increase an error transmission detecting capability through the addition of relatively small-scale edge counter circuits and a normal combination decision logic circuit.

Another scheme for detecting a transmission error for each transmission unit is based on the transmission unit timeout described above. In the example shown at (c) in FIG. 45, a timeout error is declared because there is no positive-going edge until the timing of (nc/8) • 9, and after the detection, the bus output signal is forcibly fixed to an idle level (low level) until the received message frame is finished.

In case a transmission error of a transmission unit is detected in a certain slave chip, if it is a transmission unit timeout error, then the message frame received by a following slave chip has any message portion deleted subsequent to the detected transmission unit, and if it is a transmission unit error, then all transmission units subsequent to the message frame are rendered null.

A bit input and output operation will be described below.

The principles of a bit input and output operation will be described below. FIG. 46 shows a simplified arrangement of connected slave chips 1b, 2b, 3b, 4b with 8-point outputs and 8-point inputs. The slave chips 1b, 2b, 3b, 4b have bit input and output points as follows:

The slave chip 1b has four input points, the salve chip 2b has one output point, the slave unit 3b has one input point, and the slave unit 4b has two input points and two output points. Therefore, the total input and output points include three output points and seven input points, which fall within the range of 8-point outputs and 8-point inputs. FIG. 47 (a) through (i) shows waveforms a through i at corresponding portions in the arrangement of slave chips shown in FIG. 46. A master shown in FIG. 46 sends a message frame a shown in FIG. 48.

It is assumed that a first transmission unit represents a null, a next transmission unit represents a mark, and subsequent eight transmission units represent bit output values. The bit output values are assigned in the order of bus wires. In the example shown in FIG. 48, a transmission unit 3 represents a bit output to the slave chip 1b, transmission units 4, 5 represent a bit output to the slave chip 4b. A transmission unit 11 represents a delimiter, and subsequent 8 transmission units are assigned to bit input values and all represent a null as fillers when sent from the master. A transmission unit 20 represents a delimiter, and is followed by 16 transmission units for edge timing for transmission and relaying with a delay, as described above. These 16 transmission units are all sent as a null from the master.

The slave chip 1b receives the waveform a shown in FIGS. 46 and 47. Since the slave chip 1b is set to four input points, when the slave chip 1b receives the mark of the transmission unit 11, it looks for a first null of the following transmission unit, and subsequently sends its own bit input values successively to the forward bus output per every four transmission units. The slave chip 1b sends the received values of all other transmission units to the forward bus output. The waveform b shown in FIG. 47(b) indicates that the bit input values of the slave chip 1b are a logic 1, a logic 0, a logic 1, a logic 0, respectively.

The slave chip 2b receives the waveform b shown in FIG. 47 as its forward bus input. Since the slave chip 2b is set to one output point, it reads a first logic value as its own bit output after having received the mark of the transmission unit 2, converts the transmission unit to be delayed and sent into a null, and sends the null. The slave chip 2b sends the received values of all other transmission units to the forward bus output. In the waveform c shown in FIG. 47(c), the transmission unit has a logic 1, and the third transmission unit of the forward bus output c of the slave chip 2b is a null, indicating that the bit output has been read normally.

The slave chip 3b receives as its forward bus input the waveform e reproduced and relayed by the backward bus reproducing and relaying circuits of the slave chips 1b, 2b. Since the slave chip 3b is set to one input point, when the slave chip 3b detects a first null subsequent to the mark of the 11th transmission unit, it rewrites the transmission unit into its own bit input value, and sends the bit input value to the forward bus output. The waveform f shown in FIG. 47(f) indicates that the transmission unit has a logic 0.

The slave chip 4b receives the waveform f shown in FIG. 47 as its forward bus input. Since the slave chip 4b is set to two output points and two input points, it reads as its own bit output values two transmission units from a first logic value subsequent to the mark of the second transmission unit, rewrites two transmission units from a first null subsequent to the mark of 11th the transmission unit into its own bit input value, and sends the bit input values to the forward bus output. The bit output values of the waveform f have a logic 1 and a logic 0, and the transmission unit of the waveform g is converted to a null. Since 17th and 18th transmission units of the waveform g have been rewritten into a logic 1 and a logic 0, it can be seen that the bit input values of the slave chip 4b have been a logic 1 and a logic 0.

The forward bus output of the slave chip 4b becomes its own backward bus input, then becomes the backward bus input of the slave chip 3b, and is finally received as the waveform i by the master. The backward bus input of the master is shown in FIG. 49.

Three transmission units including and following the third transmission unit are read by the slave chips 2b, 4b, and returned to the master as fillers changed from nulls. Remaining five transmission units have a logic 0 (L0) that remains the same as when they are sent out. For seven transmission units including and following the 12th transmission unit, bit input values of the slave chips 1b, 3b, 4b are successively received. An 8th transmission unit remains a null as no such input value is available. Although not shown, with respect to 21st and following transmission units, of nulls of 16 transmission units, 8 transmission units are consumed by 8 reproducing and relaying processes at the four slave chips, and remaining 8 transmission units are returned to the master.

According to the above principles, each slave chip can operate in a combination of bit outputs and bit inputs having an arbitrary bit length. As compared with the conventional process, employed for many serial transmission buses, of choosing from a combination of bit inputs and bit outputs having one or more fixed lengths that are a multiple of 8 bits at each node, the principles of the bit input and output operation according to the present invention can be used with nodes having one input point and one output point, and are free of wasted input and output points, e.g., a wasteful conventional practice where one output point of an 8-bit output capability, for example, is used while the capability of the remaining seven output points is disabled.

The structure of a message frame will be described below.

An example of the structure and type of a message frame for use in decentralized serial transmission buses will be described below.

FIG. 50 shows a basic configuration of a message frame.

An input and output message frame (X = MK) is a message frame for bit input and output. A master sends the message frame where a bit output string, arranged from the left, and a remaining string of logic 0s are placed in an OUT field (see FIG. 51).

A test message frame (X = logic 1) is a message frame for effecting a test bit input and output transmission to slaves, as shown in FIG. 52. Each slave reads its own bit output value and sends its own bit input value, but does not effect bit output to input and output pins, and keeps for the output value a normally received bit output value in a nearest input and output message frame.

A statue message frame (X = logic 0) is a message frame for instructing a slave to send its own communication error status, as shown in FIG. 53.

The master sends a message frame with all transmission units, except for MK at the trailing ends of OUT and IN fields, as a null. Each slave rewrites the first nulls of the OUT and IN fields into its own error status, and sends the message frame. Therefore, unlike the bit input and output/test message frame, transmission units are rewritten successively from slaves closer to the master output bus in the order of bus wires.

A reserved message frame (X = null) is a reserved frame for functional extensions in the future. A bit input and output operation for this message frame is carried out in the same manner as with the input and output message frame.

Message frame lengths vary depending on the number of input and output points, as shown in FIG. 54.

Operation of a slave chip and detection and processing of a transmission error will be described below.

Specifically, operation of a slave chip and detection and processing of a transmission error upon reception of a message frame will be described below in successive items 1) through 7).

1) Detection and processing of a transmission error in a backward bus:

In a backward bus input, the interval between the positive-going edges of a first null and a second mark of a message frame is measured by the time measuring counter described above. Subsequent to the second mark, the count of the time measuring counter is calculated according to the calculating algorithm described above to generate timing pulses TMG1 through TMG9 for each transmission unit.

Each transmission unit is checked for a transmission error. If a transmission error is detected, then the following process is carried out:

Upon detection of a backward bus transmission unit error, all subsequent transmission units are rewritten into a null, and reproduced and relayed with a delay to a backward bus output. Upon detection of a backward bus transmission unit timeout error, all subsequent transmission units are set to a bus idle state. When either one or both of a backward bus transmission unit error and a backward bus transmission unit timeout error are detected, a backward bus transmission error status is set.

2) Detection and processing of a transmission error in a forward bus:

In a forward bus input, the interval between the positive-going edges of a first null and a second mark of a message frame is measured by the time measuring counter described above. Subsequent to the second mark, the count of the time measuring counter is calculated according to the calculating algorithm described above to generate timing pulses TMG1 through TMG9 for each transmission unit.

Upon detection of a forward bus transmission unit error, all subsequent transmission units are rewritten into a null, and reproduced and relayed with a delay to a forward bus output. Upon detection of a forward bus transmission unit timeout error, all subsequent transmission units are set to a bus idle state. When either one or both of a forward bus transmission unit error and a forward bus transmission unit timeout error are detected, a forward bus transmission error status is set.

3) Operation and detection and processing of a transmission error in a SYNC field:

All transmission units in a SYNC field are reproduced and relayed with a delay, and sent to a forward bus output. A string of transmission units in a SYNC field is checked for a transmission error. If a transmission error is detected, then the following process is carried out:

A SYNC field format error is declared if second and following transmission units of the message frame are not "mark, null, null, mark, X, mark". When the above transmission error is detected, a forward bus transmission error status is set, and all subsequent transmission errors are rewritten into a null, and reproduced and relayed with a delay to a forward bus output. When a string of transmission units until the final mark in the SYNC field is normally received, the type of the received message frame is identified according to the received value of "X", and stored until the message frame is finished.

At the same time, if the slave chip is set to a bit output and its forward bus transmission error status is reset, then the slave chip outputs a previously received bit output to assigned input and output pins. If the salve chip is set to a bit input, then it samples logic values of assigned input and output pins with the same timing regardless of the type of the message.

4) Operation and detection and processing of a transmission error in an OUT field:

If the slave chip is set to a bit output and a message frame normally received in a SYNC field is an input and output/reserved/test message frame, then transmission units corresponding to the set number of bit outputs following the first logic value in the OUT field are read and stored (the stored value is outputted to input and output pins at the trailing end of the OUT field of next frame). Nulls of the read bit outputs are embedded in a forward bus output to be relayed with a delay corresponding to one transmission unit, and then the forward bus output is sent out.

If a message frame normally received in a SYNC field is a status message frame, then the first null following the first transmission unit in the OUT field is rewritten in the manner described below, and sent with a delay corresponding to one transmission unit to the forward bus output.

If either one or both of the forward bus and backward bus transmission error statuses are set, then the slave chip sends a logic 1. If both forward bus and backward bus transmission error statuses are reset, then the slave chip sends a logic 0. If no null is received in the OUT field, then the above operation is carried over into a following IN field. When the sending of the logic value is over, the following process is performed:

If the backward bus transmission error status is set, then it is reset. If the backward bus transmission error status is reset, then the forward bus transmission error status is reset.

Detection and processing of a transmission error in the OUT field is carried out as follows:

The slave chip checks the number of OUT field bits. The number of OUT field bits should be 128/256. Therefore, the slave chip has a 7/8-bit counter to check whether the transmission unit at the trailing end of the OUT field represents a mark or not and whether a mark is included in previous transmission units.

The slave chip checks an OUT field null sequence by deciding whether there is a sequence, described below, in a received string of transmission units prior to the mark at the trailing end of the OUT field. An OUT field null sequence error is declared when a null is received after the first logic value is received in an input and output/reserved/test message frame, and when a logic value is received after the first null is received in a status message frame.

The slave chip checks an insufficiency of OUT field output data. The slave chip performs such a check if it receives the mark at the trailing end of the OUT field before it reads all bit outputs to which the slave chip has been set, when reading bit outputs in the input and output/reserved/test message frame. If a transmission error is detected in the OUT field bit number check, the OUT field null sequence check, or the OUT field output data insufficiency check, then the forward bus transmission error status is set. All subsequent transmission units are rewritten into a null, and sent with a delay to the backward bus output.

5) Operation and detection and processing of a transmission error in an IN field:

If the slave chip is set to a bit input and a message frame normally received in a SYNC field is an input and output/reserved/test message frame, then transmission units corresponding to the set number of bit inputs following the first logic value in the IN field are rewritten into its own input values sampled at the trailing end of the SYNC field, and relayed with a delay corresponding to one transmission unit.

If a message frame normally received in a SYNC field is a status message and there is no null in a received OUT field, then the first null subsequent to the first transmission unit in the IN field is rewritten, as described below, and sent with a delay corresponding to one transmission unit to the forward bus output.

If either one or both of the forward bus and backward bus transmission error statuses are set, then the slave chip sends a logic 1. If both forward bus and backward bus transmission error statuses are reset, then the slave chip sends a logic 0. When the sending of the logic value is over, the following process is performed:

If the backward bus transmission error status is set, then it is reset. If the backward bus transmission error status is reset, then the forward bus transmission error status is reset.

Detection and processing of a transmission error in the IN field is carried out as follows:

The slave chip checks the number of IN field bits. The number of IN field bits should be 128/256. Therefore, the slave chip has a 7/8-bit counter to check whether the transmission unit at the trailing end of the OUT field represents a mark or not and whether a mark is included in previous transmission units.

The slave chip checks an IN field null sequence. An IN field null sequence error is declared when a logic value is received after the first null is received, regardless of the type of the message frame, in a received string of transmission units prior to the mark at the trailing end of the OUT field.

The slave chip checks an insufficiency of IN field output data. The slave chip performs such a check if it receives the mark at the trailing end of the IN field before it sends out all bit inputs to which the slave chip has been set, when sending out bit inputs in the input and output/reserved/test message frame.

If a transmission error is detected in the IN field bit number check, the IN field null sequence check, or the IN field output data insufficiency check, then the forward bus transmission error status is set. All subsequent transmission units are rewritten into a null, and sent with a delay to the forward bus output.

The WDT (watchdog timer), a status output, etc. will be described below.

The known WDT for monitoring transmission links, status output pins for indicating, with flickering patterns of an external LED indicator, normal/abnormal communication link conditions depending on a WDT timeout status and forward bus and backward bus transmission error statuses, an FBCLRL/HOLDH pin input capable of setting whether a bit output is to be cleared (logic 0 output) or a logic value normally received in a nearest input and output message frame is to be held (held unchanged) for safety fallback of the apparatus and machines upon WDT timeout, and controlling the loop-back switch will also be described below.

The WDT whose timeout time is 20 ms is provided in the slave chip. The WDT is cleared when an SYNC field in a message frame is normally received after a message frame except a status message is normally received.

With respect to the FBCLRL/HOLDH pin input, an FBCLRL/HOLDH (FallBack Clear low/Hold High) pin is used as a chip function setting pin. If this pin is set to a low level, then the bit output is cleared, and if this pin is set to a high level, then the logic value is held. Specifically, if the slave chip is set to a bit output upon WDT timeout, the following operation is performed:

For setting the clearing of the bit output, all bit outputs are fixed to a logic 0 (off). For setting the holding of the logic value, a nearest normally received logic value is held as each bit output value. This state is continued until the WDT timeout is cleared.

6) Loop-back switch:

The loop-back switch is not activated when no WDT timeout occurs. When WDT timeout occurs (even while an abnormal message frame is being received), the loop-back switch is immediately activated. The loop-back switch is deactivated when a bus idle state subsequent to the end of a frame is detected after the clearing in an SYNC frame upon WDT timeout in the above item 1).

7) Status output:

The slave chip has a status output pin circuit for energizing the external LED indicator in any of flickering patterns shown in FIG. 55, with a combination of WDT timeout status and forward bus and backward bus transmission error statuses. Therefore, the visual observation of an LED indication allows the user to quickly confirm one of the following chip operation statuses:

    A. All normal;
    B. WDT timeout or no message received after bus power supply turn-on;
    C. Abnormal forward bus reception only;
    D. Abnormal backward bus reception only;
    E. Abnormal forward and backward bus reception; and
    F. Bus power supply disconnection or unit fuse blown our (de-energization).

Upon transmission error detection based on the above chip operation statuses A - F, the LED indicator displays a certain flickering pattern for at least one period in order for the user to visually confirm a transmission error due to an intermittent failure or noise introduction.

The structure and operation of a gateway will be described below.

The structure of a gateway (also referred to as GW) is shown by way of example in FIGS. 56 and 57. The GW primary serves to perform protocol conversion between a higher-layer serial transmission bus and a decentralized serial transmission bus. A serial bus cable 502 extending from a serial transmission host station in a higher-layer controller (PLC or a personal computer/board computer) 501 is connected to GW 503, which operates as one or more slave stations as viewed from the host station.

The GW 503 is basically divided into a controller 504 and a master 505. The controller 504 has a microcomputer 506 and interfaces with the higher-layer controller 501 via a higher-layer serial transmission bus for the control of the GW 503 in its entirety. The master 505 serves as a host station of a decentralized serial transmission bus, and repeats cyclic data transmission to slave chips 507 connected in a ring pattern according to commands from the controller 504.

In the controller 504, a higher-layer bus signal is converted by a transceiver 508 into a serial signal, and serial input and output signals are supplied to and from a dedicated communication control chip 509. The dedicated communication control chip 509 is controlled by a microcomputer 506 via a microprocessor bus 510 for controlling communications between the higher-layer serial transmission bus and a lower-layer level. A clock circuit 511 generates various clock signals.

The microcomputer 506 comprises a CPU, a ROM, a RAM an UART, an I/O port assembled in one chip. A program stored in the ROM controls higher-level communications over the higher-layer serial transmission bus, byte data transmission, and the GW 503 in its entirety. The UART has input and output terminals connected to a transceiver (RS232C or the like) 512 for interfacing with a hand-held terminal (hereinafter referred to as HHT) or a personal computer (hereinafter referred to as PC). The HHT or the PC is used to establish a configuration or failure diagnosis at the time the system starts to operate. The I/O port has input and output terminals connected to a display panel 513 and a master gate array (hereinafter referred to as MGA) 516 of the master 505. The display panel 513 displays an operation status of the higher-layer serial transmission bus, an operation status of the GW 50, and an operation status of the decentralized serial transmission bus, and allows the user to make settings for a transmission rate of the higher-layer serial transmission bus, a GW node number, and the number of bit input and output points for the decentralized serial transmission bus.

To the microprocessor bus 510, there are also connected a non-volatile memory 514 and a dual-port RAM 515. The non-volatile memory 514 stores various parameter groups to be used for establishing a system configuration, such as a correspondence table between various input and output point numbers in the higher-layer serial transmission bus nodes and input and output points on the decentralized serial transmission bus. The dual-port RAM 515 has a port connected to the microprocessor bus 510 for exchanging various input and output data with the decentralized serial transmission bus.

The master 505 is constructed of the following elements: The MGA 516 has an integrated combination of master functions of the decentralized serial transmission bus. The MGA 516 interfaces with the other port of the dual-port RAM 515 according to a control signal from the I/O pot of the microcomputer 506, sends a certain going-bus message frame, and receives a return message frame. The MGA 516 has therein a loop-back switch 516-1 for receiving a sending bus output as a returning bus input for self-diagnosis. A bus power supply (DC 24 V, GND) is connected to a connector 519 and distributes electric power to bus branch connectors 521-1 through 521-8. The electric power of the bus power supply is also supplied to a DC/DC converter 533 for providing a GW logic circuit power supply.

Dummy slave chips 520-1 through 520-8 are connected respectively to the bus branch connectors 521-1 through 521-8. The dummy slave chips 520-1 through 520-8 are slave chips which do not perform any input and output operation, but reproduce and relay, with a delay, going- and returning-bus data. The dummy slave chips 520-1 through 520-8 have respective status output terminals connected respectively to LED indicators 522-1 through 522-8 for visually indicating normal/abnormal communication statuses at the bus branches. The dummy slave chips 520-1 through 520-8 also have respective returning-bus output terminals connected to a multiplexer 532. The multiplexer 532 is capable of selecting a returning bus at any arbitrary bus branch in response to a command from the MGA 516, for thereby allowing the MGA 516 to receive data from the selected returning bus.

The GW 503 has the following modes of operation:

A setting mode is a mode for setting a system configuration, and adding, modifying, and deleting input and output points on the decentralized serial transmission bus when the GW 305 initially starts to operate. When all system parameters are stored in the non-volatile memory 514, the GW 503 can enter another mode.

The GW 503 enters a standby mode when the system parameters are stored in the non-volatile memory 514 and the GW 503 is ready to operate. In the standby mode, the GW 503 monitors operation of the higher-layer serial transmission bus at all times. If operation of the higher-layer serial transmission bus is normal, then the GW 503 enters a next mode. In the standby mode, since a bus idle signal is outputted at all times to the decentralized serial transmission bus, the WDTs of all the slave chips are subject to timeout, and all bit outputs are of fall-back values.

In an operation mode, the GW 503 performs communications with the higher-layer serial transmission bus and cyclic transmission over the decentralized serial transmission bus. When the GW 503 detects any fault, it automatically enters a self-diagnosis mode.

When the GW 503 enters the self-diagnosis mode, the GW 503 inspects and analyzes the contents of transmission errors on the higher-layer serial transmission bus and the decentralized serial transmission bus, and, in some cases, retries a transmission and inspects and analyzes the result of the retried transmission. If the fault is a fatal one incapable of recovery based on the retry, then the GW 503 outputs an alarm, and enters the standby mode. If the fault is a less severe one capable of recovery, then the GW 503 automatically returns to the operation mode.

A maintenance mode is a mode for the user to manually diagnose a failure, replace a unit, and operate a new unit on a trial basis.

Operation of the GW 503 to receive and send a message frame will be described below.

For self-diagnosing a message frame to be sent from the GW 503 to the decentralized serial transmission bus, the GW 503 carries out the following detecting and inspecting process:

A sent transmission unit error detection is carried out by receiving a sent bus output with a receiver circuit for carrying out transmission unit error detection and timeout detection in the same manner as with the slave chips 507. A sent transmission unit check inspection serves to inspect whether a bus output (null/logic 0/logic 1/mark) received by the receiver circuit is of a predetermined value or not. A sent message frame format inspection serves to inspect whether a prescribed message frame format is observed and sent out.

A bus idle length inspection serves to inspect whether or not a bus idle length time between a preceding frame and a next frame is of a predetermined value or greater. A SYNC field format check serves to check whether first seven transmission units in a message frame are of a prescribed format (null/mark/null/null/mark/X/mark) or not. In this check, X = mark for an input and output message frame, X = logic 0 for a status message frame, X = logic 1 for a test message frame, and X = null for a reserved message frame.

An OUT field format check serves to check that a mark is not present in 128/256 transmission units including the leading end of an OUT field, that the 129/257th transmission unit from the leading end of the OUT field is a mark, and that sent patterns from the leading end of the OUT field are all a logic 0 or a logic 1 for an input and output/reserved/test message frame, a logic 0 for remaining slaves which are not present, and all null for a status message frame.

An IN field format check serves to check that a mark is not present in 128/256 transmission units including the leading end of an IN field, that the 129/257th transmission unit from the leading end of the IN field is a mark, and that sent patterns from the leading end of the IN field are all null.

For the reception of a returning message frame with the GW 503, the GW 503 receives a returning-bus signal, and effects transmission unit error detection and timeout detection in the same manner as with the slave chips. For inspecting a received message frame format, the GW 503 inspects whether a prescribed message frame format is observed and received. A SYNC field format check serves to check whether first seven transmission units in a message frame are of a prescribed format (null/mark/null/null/mark/X/mark) or not. In this check, X = mark for an input and output message frame, X = logic 0 for a status message frame, X = logic 1 for a test message frame, and X = null for a reserved message frame.

An OUT field format check serves to check that a mark is not present in 128/256 transmission units including the leading end of an OUT field, that the 129/257th transmission unit from the leading end of the OUT field is a mark, and that received patterns from the leading end of the OUT field are a succession of as many nulls as the total number of bit outputs of all existing bit output slaves including the leading end for an input and output/reserved/test message frame, a logic 0 for remaining slaves which are not present, a succession of as many logic values as the total number of slave chips (including the dummy slave chips) connected to the bus and including the leading end, for a status message frame, and all logic values for the total number of slave chips which is 128/256 or more.

An IN field format check serves to check that a mark is not present in 128/256 transmission units including the leading end of an IN field, that the 129/257th transmission unit from the leading end of the IN field is a mark, and that received patterns from the leading end of the IN field are as follows:

For input and output/reserved/test message frame, it is checked whether the received patterns are a succession of as many logic values as the total number of bit inputs of all existing bit input slaves including the leading end, and null for remaining slaves which are not present.

For a status message frame, it is checked whether the received patterns are a succession of as many logic values from the leading end to a mark of the OUT field and also from the leading of the IN field, as the total number of slave chips (including the dummy slave chips) connected to the bus, and null for remaining slave chips.

For a returning message frame reception timeout detection, if a message frame is sent normally, then abnormal reception timeout is declared when the reception of a returning message frame is not completed within a period of time which is twice a predetermined period of time.

Automatic bus topology recognition in the setting mode will be described below.

In the setting mode, the total number of salve chips and input and output functions of the slave chips are set, and the bus topology is automatically recognized according to the following procedures 1 through 9:

The bus is rendered idle for about 100 ms. The WDTs of all the slaves are subject to timeout, and the loop-back switches are operated to connect going-bus outputs to returning-bus inputs (procedure 1).

The loop-back switch of the GW 503 is operated to send and receive various message frames, and returning message frames are analyzed for self-diagnosis (procedure 2).

If the diagnostic result is normal, then the returning-bus multiplexer 532 in the GW 503 is set to a bus branch No. 1 for thereby receiving a returning-bus output from the dummy slave chip 520-1 of the bus branch No. 1 (procedure 3).

Then, a status message frame is sent out, and its returning frame is received and analyzed. The first transmission unit in the output field of the returning frame should be a logic 0 outputted from the dummy slave chip 520-1 of the bus branch No. 1, with remaining output and input fields being all null except for a predetermined mark. This is confirmed (procedure 4).

In procedure 5, a test message frame where first four transmission units in an output field are of a logic 0 and remaining output and input fields are all null is sent out twice. The test message frame is received by the dummy slave chip 520-1 of the bus branch No. 1, and a returning frame is the same as the sent frame because the dummy slave chip 520-1 does not perform bit input and output operation.

The procedure 4 confirms that there is a chip, and the procedure 5 determines that the chip is a dummy slave chip. The dummy slave chip clears the WDT if the reception up to the SYNC field of the second test message is normal, and turns off its own loop-back switch when it detects a bus idle state after the second frame is finished. After the procedure 5 is finished, therefore, a going-bus signal flows to a first slave chip next to the dummy slave chip of the bus branch No. 1.

In procedure 6, the same status message frame as in the procedure 4 is sent out. At this time, a returning frame should be such that two logic 0 signals outputted from a dummy slave chip and a first slave chip should successively follow the leading end of the output field. Therefore, the above contents of the returning frame are confirmed. Then, the same test message frame as in the procedure 5 is sent out twice. If the first slave chip is set to one bit output point and three bit input points, for example, then a returning frame is of the following nature (procedure 7).

The output field includes a null, a logic 0, a logic 0, a logic 0, a null, a null, • • •, and the input field includes a logic X, a logic X, a logic X, a null, a null, • • •. It can be seen from this information that the first slave chip is set to one bit output point and three bit input points.

The procedures 6 and 7 are repeated to determine the presence of slave chips of the bus branch No. 1 and the set numbers of bit input and output points thereof. When the determination of the final chip of the same bus branch is finished, since the presence of a new chip is not detected in the next procedure 6, the completion of the recognition of the bus branch No. 1 is determined. Then, the multiplexer 532 is switched to the bus branch No. 2, and the procedures 4 through 7 are carried out. If no bus branches are employed as with the bus branches Nos. 5 and 6 in FIGS. 56 and 57 and bus jumpers 560-1, 560-2 are not provided, then no slave chip is detected in the procedure 6 (procedure 8).

When the determination of a final bus branch is finished, it is determined whether each chip is a dummy slave chip or a bit input and output slave chip, and the set numbers of bit input and output points thereof and a bus topology for all the bus branches are determined (procedure 9).

FIG. 58 shows an arrangement of four bit input and output slave chips connected to the bus branch No. 1. FIG. 59 shows a bus topology list obtained according to the above automatic bus topology recognition process.

In the setting mode, after the automatic bus topology recognition, the HHT and the PC 507 (see FIG. 56) are connected to manually set various parameters. When the system initially starts to operate, an allocation based on correspondence between the input and output point numbers on the higher-layer serial transmission bus and the input and output point numbers on the decentralized serial transmission bus is registered, and a bus topology list with the allocation information added thereto is stored in the non-volatile memory 514. When the storage of the bus topology list is completed, the GW 503 enters the standby mode according to a manual command from the user. After having confirmed that the higher-layer serial transmission bus is in operation, the GW 503 connects the higher-layer serial transmission bus and the decentralized serial transmission bus to each other according to the various parameters, and operates them.

Operation of the GW 503 in the operation mode and detection and processing of a transmission error will be described below.

In the operation mode, the GW 503 receives output values from the higher-layer serial transmission bus to bit output points, and sends the output values to the decentralized serial transmission bus. The GW 503 also receives input values of the bit input points from the decentralized serial transmission bus, and sends the input values to the higher-layer serial transmission bus in a cyclic fashion. Specifically, the GW 503 repeats the following operations A, B:

    A. The GW 503 sends an input and output message frame. If a transmission error is detected in the sent message frame based on the reception of a returning message frame by the GW 503, then the GW 503 immediately stops sending a following frame, successively sends bus idle signals, and enters the self-diagnosis mode.

    B. The GW 503 receives a returning message frame. If a transmission error is detected based on the reception of a returning message frame by the GW 503 in the automatic bus topology recognition in the setting mode, then the GW 503 enters the self-diagnosis mode as with the operation A described above. If a returning-bus reception is normal, then the GW 503 generates a new input and output message frame, and returns to the operation A.

In the bus topology shown in FIGS. 58 and 59, an input and output message frame which is normally transmitted is shown in FIGS. 60 through 62. In FIG. 59, the dummy slave chip 520-1 is indicated as a node 255, and the dummy slave chip 520-2 as a node 250.

As shown in FIGS. 63 and 64, since a pin input is sampled and a pin output is executed at the trailing end of a SYNC field, a bit output valve transmitted in a frame n is outputted to an output pin at the trailing end of the SYNC field of a following frame (n + 1). The pin input value which has been sampled at the trailing end of the SYNC field is sent in an input field of the frame.

Processing in the self-diagnosis mode will be described below.

According to processing in the self-diagnosis mode, whether or not a transmission error detected in the operation mode is due to a fatal fault which will prevent the bus from continuing its operation is decided under the conditions upon the transmission error or upon retried transmission, and if the transmission error is not due to a fatal fault, cyclic bus transmission is resumed in as short a period of time as possible before WDT timeout occurs in each of the slave chips. Specifically, the following processing described below with respect to fault examples at the bus branch No. 1 is carried out:

    {Fault 1} is a fault where only one-point bit output is read in an OUT field though two bit output points are set, due to a failure of the going-bus reception circuit in a slave chip (hereinafter also referred to as a node) 253. This fault assumes two fault modes. i.e., a stuck-at fault (the reading of one bit output point is continued) and an intermittent fault (only one bit output point is read from the field, and then recovery from the fault is achieved).
    {Fault 2} is a fault where a going bus between nodes 252, 251 is disconnected during an input and output message. This fault assumes two fault modes, i.e., a stuck-at fault (the bus break is continued) and an intermittent fault (the bus is broken for only a certain time in the message frame, and then recovery from the fault is achieved).
    {Fault 3} is a fault where the returning-bus reproducing and relaying circuit of the node 252 erroneously judges a received value as a logic value. This fault assumes two fault modes, i.e., a stuck-at fault (the fault occurs in the input and output message frame and is continued) and an intermittent fault (only a portion of the input and output message frame is judged erroneously, and then recovery from the fault is achieved).

With respect to saving transmission error information in the operation mode, GW transmission error detection information in the operation mode immediately prior to entering the self-diagnosis mode is all saved for a subsequent analysis. For transmission error detection in a GW sent message frame, the loop-back switch 516-1 (see FIG. 56) of the GW is operated to effect various self-diagnoses on the internal circuits of the MGA 516. When a self-diagnosis failure occurs, it is determined as a fatal fault, and the setting mode is initiated.

For collecting slave transmission error detection information by sending a status message frame, a status message frame is sent to receive a response frame.

FIGS. 65 through 80 show the saving of transmission error information in the operation mode for faults and examples of message frames for collecting slave transmission error detection information by sending a status message frame.

FIGS. 65 through 68 show examples of message frames in {Fault 1}. FIGS. 65 and 66 show examples of operation mode transmission error detection (8 output points and 8 input points) in {Fault 1}. FIGS. 67 and 68 show examples of test message frames in the self-diagnosis mode in {Fault 1}.

FIGS. 69 through 72 show examples of message frames in {Fault 2}. FIGS. 69 and 70 show examples of operation mode transmission error detection input and output message frames in {Fault 2}. FIGS. 71 and 72 show examples of test message frames in the self-diagnosis mode in {Fault 1}.

FIGS. 73 through 80 show examples of message frames in {Fault 3}. FIGS. 73 and 74 show examples of operation mode transmission error detection input and output message frames in {Fault 3} (stuck-at fault). FIGS. 75 and 76 show examples of operation mode transmission error detection input and output message frames in {Fault 3} (intermittent fault). FIGS. 77 and 78 show examples of test message frames in the self-diagnosis mode in {Fault 3} (stuck-at fault). FIGS. 79 and 80 show examples of test message frames in the self-diagnosis mode in {Fault 3} (intermittent fault).

With respect to a retry performed by sending a test message frame, the test message frame is sent four times, for example. If nothing abnormal is detected in a GW returning message frame for the test message frame sent four times, the sending of an input and output message frame, described below, is retried. If even one abnormal event is detected, then a status message frame is sent out, and GW returning message frames are recorded. In this case, a fatal fault is judged, and transmission error information in the operation mode is saved, slave transmission error detection information is collected by sending a status message frame, and a string of GW returning message frames obtained in a retry by sending a test message frame is recorded as fault diagnosis information. A system fault alarm is outputted, and the setting mode is initiated.

The above fault examples have the following specific details:

With respect to {Fault 1}, an abnormal state is detected four times for the stuck-at fault, and after a system fault alarm is outputted, and the setting mode is initiated. A normal state is detected four times for the intermittent fault, and the sending of an input and output message frame is retried as described below.

With respect to {Fault 2}, an abnormal state is detected four times for the stuck-at fault, and after a system fault alarm is outputted, and the setting mode is initiated. A normal state is detected four times for the intermittent fault, and the sending of an input and output message frame is retried as described below.

With respect to {Fault 3}, an abnormal state is detected four times for the stuck-at fault, and after a system fault alarm is outputted, and the setting mode is initiated. A normal state is detected four times for the intermittent fault, and the sending of an input and output message frame is retried as described below.

Either one of {Fault 1}, {Fault 2}, and {Fault 3} is detected by the GW 503. In case of the stuck-at fault, a system fault alarm is outputted, and then cyclic transmission is interrupted. After about 20 ms, the WDTs of all the slave chips are subject to timeout, and all the bit outputs are brought into a set fall-back state (a nearest value is held or cleared). If the self-diagnosis information is accessed by the HHT, for example, in the setting mode, then the self-diagnosis information is useful for separating the faulty location. In the event of the stuck-at fault in {Fault 1}, {Fault 2}, and {Fault 3}, the following details are estimated:

In the event of the stuck-at fault in {Fault 1}, the slave chip does not detect a transmission error. However, it can be seen from a GW returning frame of an input and output message where an erroneous transmission has occurred first in the operation mode that either one of bit output setting slaves at the bus branch No. 1 has failed to read a bit output.

In the event of the stuck-at fault in {Fault 2}, since a GW returning message frame reception timeout error has occurred in a test message frame in the self-diagnosis mode, a bus disconnection is first doubted.

In the event of the stuck-at fault in {Fault 3}, it is evident from a GW returning frame when a first transmission error has occurred in the operation mode and a GW returning frame of a status message in the self-diagnosis mode that an LO stuck-at fault has occurred in the reproducing and relaying process of either one of the salves. Since no slave has detected a transmission error, it is estimated that the stuck-at fault has occurred not on a going bus, but on a returning bus. Since up to 20th transmission units are normal in a GW returning frame when a first transmission error has occurred in the operation mode, the fault of a returning bus reproducing and relaying circuit subsequent to a logic 1 (L1), the node 252, i.e., the returning bus output of the node 251, is doubted.

In the event of an intermittent fault in {Fault 1}, {Fault 2}, and {Fault 3}, the sending of an input and output message frame is retried as described below.

When the sending of an input and output message frame is retried, in the event of an intermittent fault, an input and output message frame is sent out following the intermittent fault. If nothing abnormal is detected in a GW returning message frame, then recovery from the intermittent fault is determined. After a system non-fatal fault alarm is outputted, the operation mode is immediately initiated again.

If an abnormal state is detected in a GW returning message frame, then a status message frame is sent out, and the input and output message frame and a GW returning frame of a test message are recorded as fault diagnosis information. A system fault alarm is outputted, and the setting mode is initiated.

In the event of an intermittent fault in {Fault 1}, {Fault 2}, and {Fault 3}, the operation mode is recovered, and subsequently normal cyclic transmission is continued. Even in the presence of the danger of an erroneous output due to an intermittent fault in {Fault 1}, a bit output is prevented from being erroneously outputted to pins, and a normal output value sent when the sending of an input and output message frame is retried is outputted to pins at the trailing end of a SYNC field of a first input and output message frame after recovery of the operation mode. With respect to a bit input, after the GW has detected an abnormal transmission, a nearest normal bit input value is held and continuously sent to the higher-layer serial transmission bus until a first normal bit input value is obtained after the operation mode is restarted after recovery from the intermittent fault. Therefore, an erroneous bit input value is prevented from being transmitted to the higher-layer controller.

If the self-diagnosis information is accessed by the HHT, for example, in the operation mode in response to a system non-fatal fault alarm, then the following details can be estimated.

In the event of the intermittent fault in {Fault 1}, the slave chip does not detect a transmission error. However, it can be seen from a GW returning frame of an input and output message where an erroneous transmission has occurred first in the operation mode that either one of bit output setting slaves at the bus branch No. 1 has failed to read a bit output.

In the event of the intermittent fault in {Fault 2}, because 18th and subsequent transmission units are in a bus idle state and a bus disconnection or a grounding fault subsequent to a going-but output of a node 254 is doubted from a GW returning frame upon detection of a first transmission error in the operation mode. Since the node 252 sends a transmission error as can be seen from a GW returning message frame of a test message in the self-diagnosis mode, an instantaneous break subsequent to the bus wire (c) is doubted.

In the event of the intermittent fault in {Fault 3}, an erroneous operation of a bit input setting slave is doubted from a GW returning frame upon detection of a first transmission error in the operation mode.

Processing in the maintenance mode will be described below.

The maintenance mode serves to assist in manually diagnosing a fault, separating a fault location, replacing a unit, and operating a new unit on a trial basis. Specifically, processing in the maintenance mode is performed as follows:

With respect to self-diagnosis information upon a fault, self-diagnosis information obtained in the self-diagnosis mode is presented, and estimated information of a fault location is provided. In the event of a repeated intermittent fault, the PC is connected to collect and analyze successive fault information.

With respect to separating a fault area of a stuck-at fault, in the event of a stuck-at fault in {Fault 1}, since only one- point output is read though the node 253 is set to two- point outputs, the above automatic bus topology recognition is carried out for comparison with the table stored in the non-volatile memory, so that the fault location can easily be separated. In the event of a stuck-at fault in {Fault 2}, when the above automatic bus topology recognition is carried out, since the node 252 and following nodes are not operated, a going-bus break of the bus wire (e) can easily be separated. In the event of a stuck-at fault in {Fault 3}, when the above automatic bus topology recognition is similarly carried out, since up to the node 253 is normal and the node 252 is abnormal, the fault area can easily be separated.

In the event of stuck-at faults, most fault areas can quickly be separated with the assistance of the GW, so that a system repair period can be minimized.

With respect to a faulty unit verification assistance, the number of input and output points and bit input values can be set by manual switches, and a dummy unit equipped with a bit output value indicator can be connected, in place of a doubtful unit, to a bus and tested for normal operation. If the dummy unit operates normally, then the original unit malfunctions.

With respect to a trial operation start-up assistance, the automatic bus topology recognizing function is used to generate a topology list, and then the correspondence between input and output point addresses on the higher-layer serial transmission bus and input and output point addresses on the decentralized serial transmission bus is manually designated for thereby completing bus address settings. Therefore, the user is relieved of a process of setting addresses with individual slave unit setting switches which are distributed in industrial machines and apparatus and cannot easily be accessed. If machines and apparatus of the same design are repeatedly manufactured, then the address correspondence data file may be downloaded from the PC, so that bus address settings can be completed within a short period of time.

As a result of a trial operation, it may often be necessary to add or remove several sensors or actuators. In this case, several sensors or actuators may be added or removed according to an easy bus wiring process, thereafter the automatic bus topology recognition may be carried out, and then new addresses of the added or deleted sensors or actuators which are indicated may be set or modified. The maintenance of the bus topology list is automatically performed.

Using the PC or the HHT, bit output points are manually turned on and off, and input values of respective input points are indicated.

Byte data transmission channels will be described below.

In order to keep a desired level of accuracy between positive-going edges at the leading ends of transmission units when they are reproduced and relayed by slave chips, it is necessary to add 512 (1024) nulls to the trailing end of a message frame. Using this field, a byte data transmission function is performed.

A full-duplex byte data transmission link which is of one channel per chip can be laid between the GW and each byte data transmission slave chip. The total number of channels is limited to 8 (16), for example. It is possible to provide 8 (16) channels (having a maximum transmission rate of about 500 (250) bytes/second) capable of transmitting one byte upstream and one byte downstream per cyclic transmission, i.e., per channel in each 2 (4) ms.

It is hereinafter assumed that byte data transmission slave chips do not have a bit input and output function.

It is premised that a microcomputer is provided as an external circuit to a byte data transmission slave chip. The byte data transmission channel serves to provide a transparent full-duplex byte data transmission link between the GW and a slave chip. Links between the GW and the higher-layer controller and also between the GW and the external computer to the byte data transmission slave chip are in accord with the BSC (by-sync) procedure or the JIS basic data transmission control procedure. The main channels are used as half-duplex communication links for byte data transmission including error control. The byte data transmission channels may be extended to deal with coded byte data transmission and transparent transmission using a code-independent mode according to the same procedure.

Details of the format of a byte field for byte data transmission will be described below.

As shown in FIG. 81, as many sets of marks and byte channel slots as the number of slave chips for byte data transmission are successively arranged, followed by a remaining succession of nulls. If the 19th transmission unit following a mark is a null, then the byte slot channels end.

In FIGS. 81 through 86, SS represents a slave status, SR a slave response to a command from a master, MS a master status, MC various master commands for slaves, and MR a master response to slaves. Various logic values of these statuses and commands are as shown in FIGS. 81 through 86.

The structure of a byte channel slot will be described below.

In FIG. 81, TAG indicates whether the byte channel has been processed by a byte data transmission slave or not. A logic 1 of TAG represents a transmission error, a null thereof represents that the byte channel has been processed by a byte data transmission slave, and a logic 0 thereof represents that the byte channel has not been processed by a byte data transmission slave (TAG is always of a logic 0 when sent out from the GW). A slave slot is shown in FIGS. 82 and 83. SS represents various slave statuses (see FIG. 82), and SR represents slave responses to a command from the master (see FIG. 83). A master slot is shown in FIGS. 84 through 86. MS represents a master status (see FIG. 84), MC represents various master commands to slaves (see FIG. 85), and MR represents a master response to a slave (see FIG. 86). A byte slot is shown in FIG. 87.

For the transmission of a byte field, each byte channel slot requires 19 transmission units. Two transmission units are consumed when a byte field is reproduced and relayed by each slave chip. Specifically, when a byte field goes to and returns from a slave chip, two transmission units at the trailing end of the byte field are eliminated. For the above reasons, the number of transmission units of a byte field sent by a gateway is determined as follows:

It is assumed that 1b represents the number of transmission units of a byte field sent by a gateway, m represents the total number of all slave chips, and n the number of byte data transmission channels. If there is no slave which uses byte data transmission channels, then 1b = 512 (1024). If there is a slave which uses byte data transmission channels, then 1b = 512 (1024) when 512 (1024) - 2m - 19n $\geq$ 0, and 1b = 2m + 19n when 512 (1024) - 2m - 19n < 0.

The structure of a byte field in each message frame is as follows:

In an input and output message frame (X = MK), there are a succession of as many byte channel slots as the number of channels, followed by a remaining succession of nulls. In a test message frame (X = logic 1), a byte field is added as with an input and output message frame. A byte channel slot set from the GW is shown in FIG. 88. Specifically, MS = NMSTRRDY, MC = INITISLV, MR = NMSTRRCV, and a byte slot contains nulls only.

In a status message frame (X = logic 0) and a reserved message frame (X = null), a byte field having a length corresponding to 512 (1024) transmission units is added. Byte field transmission data from the GW contains nulls only.

A transmission protocol for byte data transmission channels will be described below.

With respect to the number of byte slots sent from the GW, as many sets of marks and byte channel slots as the total number of slave chips connected to the bus and set in a byte data transmission function are arranged successively from the leading end of a byte field, followed by a remaining succession of nulls. The following control is performed independently for each byte data transmission channel.

For initializing the gateway, byte data where TAG = logic 1, a slave slot contains nulls only, and a master slot contains MS = NMSTRRDY, MC = INITISLV, MR = NMSTSSCV is sent out, and the sending of such a slave slot is continued. When sent from the gateway, TAG = logic 1 and a slave slot contains nulls only.

While a slot shown in FIG. 89 is sent out continuously, returning slots are checked. TAG of GW returning slots is necessarily null. If it is not null, then a byte data transmission slave response failure is declared. Returning slots are always checked.

The logic value of a master slot sent out previously returns at all times. If the returning logic value is different from the logic value sent out previously, then a slave master slot reception failure is declared. The returning logic value is always checked.

A slave receives the master slot, initializes itself in response to the INITISLV command, and simultaneously indicates a slave chip shutdown to an external circuit. Since the slave is initialized, SS = NSLVRDY and SR = NSLVRCV from a next transmission. If the byte data transmission slave is normal, second and following returning slots are as shown in FIG. 90. If SS = NSLVRDY and SR = NSLVRCV in the slave slot, then the byte data transmission slave is normal. Other SS values indicate a salve status/response failure. SS in a returning slot when a first slot has been sent out represents a statue before the sent INITISLV command is executed. If a byte slot contains other than nulls, then a returning byte slot failure is declared.

Processing by the GW for channel start-up is as follows:

When the GW has received an enable command for the channel from the higher-layer controller, the GW confirms that a slave node is READY (by receiving a returning slot at the trailing end of the preceding item), and then starts continuously sending out a slot shown in FIG. 91, i.e., by setting MS = MSTRRDY and MC = ENBSLV. The slave leaves an initialized state by receiving MS = MSTRRDY, and checks if an external circuit is able to operate in response to the ENBSLV command. If the external circuit is able to operate, then the slave sets an SLVRDY flag. If the external circuit is unable to operate, then the slave resets the SLVRDY flag. If the external circuit is unable to operate, then the gateway receives a returning slot shown in FIG. 92. Specifically, SS = NSLVRDY and SR = NSLVRCV. If this response continues for a long time (e.g., 100 ms or more), then a slave start-up timeout failure is declared. If the slave including the external circuit is able to operate, a returning slot is as shown in FIG. 93. Specifically, SS = NSLVRDY and SR = NSLVRCV. If other than SR = NSLVRCV, then a slave response failure is declared.

The execution by the GW of a byte transmission will be described below.

After the system has been started, if the GW has received transmission data from the higher-layer controller, then the GW sets MS = MSTRRDY and MC = MSTRTRS, writes the transmission data in a byte slot, and sends out the byte slot (see FIG. 94). If the slave has normally received the transmission data from the master, then the GW receives a returning slot shown in FIG. 95 in a next cycle. Specifically, SS = SLVRDY and SR = SLCRCV with the byte slot being all null. If the slave is executing the process of transferring the previously received byte data to the external circuit, with its REQOUT flag being set, and is unable to receive the transmission data from the master, then the master receives a returning slot shown in FIG. 6 in a next cycle. Specifically, SS = SLVRDY and SR = NSLVRCV with the byte slot containing the transmission data as it is. In this case, the master repeatedly transmits the same byte channel CH slot as described above. If this response continues for a long period of time, e.g., 100 ms or more, then a slave reception timeout failure is declared. If the salve has normally received the transmission data from the master and transmitted the transmission data to the master in the byte slot, then the GW receives a returning slot shown in FIG. 97 in a next cycle. Specifically, SS = SLVRDY and SR = SLVRCVTRS. Since the byte slot has been rewritten as slave transmission data, the GW takes out the slave transmission data and sends it as reception data from the slave to the higher-layer controller.

If the master receives following transmission data from the higher-layer controller after having received the returning slot, then the GW sends a slot shown in FIG. 98. Specifically, the GW sets MS = MSTRRDY, MC = MSTRTRS, MR = MSTRRCY, and writes the transmission data in a byte slot. If MR = NMSTRRCV, then the GW declares a master reception failure, resets the SLVRDY flag, and sets SS = NSLVRDY from a next cycle, notifying the master of the failure. As described above, in each cycle, the master and the slave can exchange transmission data of one byte.

If the master has not received the preceding slave transmission data while having no data to be sent to the slave, then the GW sends a slot shown in FIG. 99.

Specifically, the GW sets MS = MSTRRDY, MC = ENBSLV, MR = NMSTRRCV, with the byte slot being all null. If at this time the slave has data to be sent to the master, then a returning slot for a next cycle is as shown in FIG. 100. Specifically, SS = SLVRDY and SR = SLVTRS with the byte slot containing the slave transmission data. If the slave has no data to be sent to the master, then a returning slot for a next cycle is as shown in FIG. 101. Specifically, SS = SLVRDY and SR = NSLVRCV with the byte slot remaining null.

If the slave detects any error while transmitting data to the external circuit, then the master receives a returning slot shown in FIG. 102, i.e., receives SS = SLVERR. While FIG. 102 shows SR = NSLVRCV, SR may be SR = SLVRCV, SLVTRS, or SLVTRSRCV. If the master receives SS = SLVERR, then the GW indicates a slave failure detection to the higher-level controller for executing a process according to the higher-level transmission control protocol, such as restarting the system for recovery after channel initialization.

With respect to the stopping of byte transmission, if the GW receives a transmission stop command from the higher-level controller or a higher-level communication control function in the gateway, or if the main byte channel control logic of the master needs to stop byte transmission, then the GW sends a byte CH slot shown in FIG. 103, i.e., sets MS = NMSTRRDY, MC = INITISLV, MR = NMSTRRVC with the byte slot being all null. The slave executes an MC = INITISLV command, immediately initialize its own internal circuit and the external circuit, and resets an SLCRCV flag. Therefore, a returning slot for a next cycle is as shown in FIG. 104, i.e., SS = NSLCRCV and SR = NSLVRCV with the byte slot being all null.

A loop-back check for the byte data transmission channels will be described below.

After a transmission failure in a byte data transmission channel has been detected, the bus from the gateway to a transmission controller in the external circuit (microcomputer) of the slave chip can be looped back for self-diagnosis. Specifically, normally, byte data sent in a downstream slot is returned as byte data in an upstream slot in a next cycle. At this time, the transmission controller in the external circuit (microcomputer) only returns the received data, and does not exchange data with other circuits in order not to affect the transmission data. A self-diagnosis process is carried out as follows:

The master first performs the process for stopping byte transmission as described above. Then, the master sends a byte CH slot shown in FIG. 105, sending a loop-back command to the slave. Specifically, the master sets MS = MSTRRDY, MC = LOOPBK, MR = NMSTRRCV with the byte slot being all null. When the slave receives the sent byte CH slot, the slave leaves an initialized state, and sends a start-up command to the external circuit. After having confirmed the start-up of the external circuit, the slave sets an SLVLPBK flag, sending a loop-back command to the external circuit. After having confirmed that the external circuit has entered a loop-back mode, the slave sets an SLVRDY flag. A master return byte CH slot after the slave has been readied is as shown in FIG. 106, i.e., SS = SLVRDY and SR = SLVLPBK with the byte slot being all null. After having confirmed the master return byte CH slot, the master sends prepared test byte data as a byte CH slot shown in FIG. 107. Specifically, the master sets MS = MSTRRDY, MC = MSTRTRS, MR = NMSTRRCV with the byte slot containing test data. The slave receives the byte CH slot and starts sending the received byte slot to the external circuit. The slave also sends data shown in FIG. 108, i.e., SS = SLVLPBK and SR = SLVRCV with the byte slot being all null.

The GW receives the sent data to confirm a slave reception, enters a mode to wait for a loop-back return, and successively sends out data shown in FIG. 109, i.e., successively sends out MC = ENBSLV. The external circuit of the slave returns the received byte data as it is to the slave. When the slave receives the byte data, the slave immediately sends the byte data to the master. In the byte data, SS = SLVLPBK and SR = SLVRCV, and the byte slot should agree with the test data shown in FIG. 110 which has been sent by the master. If the master has not received SR = SLVTRS from the slave after having been waited for a long period of time, e.g., 100 ms., a loop-back timeout failure is declared. If the master has received RS = SLVRCVTRS, but the return byte slot does not agree with the test data which has been sent by the master, then a loop-back data failure is declared. If the master has received normal return byte CH slot, then the mater sends succeeding test data shown in FIG. 111, i.e., MC = MSTTRS and MR = MSTRCV with the byte slot containing new test data.

Similarly, the master successively sends out test data. If all the test data have been sent and received normally, then the self-diagnosis is declared as normal. After the test, the GW performs the process of stopping byte transmission.

An example of a byte data transmission external interface of the slave chip will be described below.

First, an example of an interface between a byte data transmission slave chip and an external circuit (microcomputer) will briefly be described below. In this example, the external circuit comprises a 4- through 8-bit microcomputer so as to be incorporated in an expensive sensor or actuator or a simple controlling device such as a temperature regulation unit or a position controller.

FIG. 112 shows such an interface in block form. In FIG. 112, the reference numeral 601 represents a slave chip, 610 an I/O logic unit in the slave chip, 611 an input/output interface unit in the I/O logic unit, and 612 a byte data transmission controller. If the slave chip comprises a bit input and output slave chip, then the input/output interface unit 611 effects bit input and output operation via input and output pins I03H through I00H. if the slave chip comprises a byte data transmission slave chip, then the input/output interface unit 611 uses the input and output pins (four pins) in a time-division fashion as a bidirectional nibble data transmission bus. The byte data transmission controller 612 uses a total of four pins including two input pins REQBOUTL, ACKBINL and two output pins REQBINL, ACKBOUTL for performing nibble bus priority use control and data transmission control according to the known handshaking process.

In FIG. 112, the reference numeral 613 represents a microcomputer chip which interfaces with byte data transmission pins (eight pins) of the slave chip 612, using an 8-bit bidirectional I/O port and an interrupt pin (REQBOUTL). A nibble data transmission protocol is governed by a transmission control program stored in a ROM in the microcomputer chip 613, and switchingly uses the nibble bus depending on the direction of transmission, as shown in FIG. 113. In the example illustrated in FIG. 113, the slave chip 601 first issues a transmission request, a status/command of the slave chip 601 and a parity bit are sent as first nibble data over the nibble bus, high-order nibble data of transmission byte data is sent as second nibble data over the nibble bus, and low-order nibble data of the transmission byte data is sent as third nibble data over the nibble bus. During this time, the microcomputer chip 613 issues a transmission request. When the transmission of the above three nibble data is finished, a byte data channel status/command of the microcomputer chip 613 and a parity bit are sent in the opposite direction over the nibble bus.

As described above, an inexpensive byte data transmission unit can be realized using the microcomputer chip 613 with the transmission control protocol governed by the transmission control program stored in the ROM in the microcomputer chip 613. The transmission control protocol governed by the transmission control program allows a microcomputer having a clock frequency of about 5 MHz, for example, to respond sufficiently since the cyclic transmission period is 2 (4) ms. One-byte upstream/downstream transmission per 2 (4) ms. corresponds to a rate of 9600 (4800) bps for ordinary start/stop synchronous data transmission. Though this rate cannot be defined as a high rate, it is capable of a medium-rate byte data transmission capability that is required in the field of discrete control.

Operation of and processing by the GW with a byte data transmission function will be described below.

In order to use a byte data transmission slave in the system in a byte data transmission interface between the higher-layer controller and the GW, the GW needs to have a function to exchange not only bit input and output data, but also binary data, between the GW and the higher-layer controller, and to be capable of transmit the data as binary data over decentralized buses. In a higher-layer serial transmission bus system such as DeviceNet which supports both bit data and byte data, a GW may transmit data to a higher-layer controller according to its byte data transmission protocol, and if a BSC/basic data transmission procedure is used as a byte data transmission protocol for decentralized buses, the GW may effect protocol conversion between the protocols. If a higher-layer serial transmission bus system supports only bit input and output data, then a data transmission interface means of a higher-layer controller may be used to establish a link between the GW and the higher-layer controller. Specifically, if the higher-layer controller comprises a personal computer or a board computer, then RS232C and RS422/485 channels may be employed. Since many PLCs support similar communication channel boards, they can establish the same link. However, there may be occasions where the communication rate of the link limits the overall communication rate, resulting in a failure to achieve the desired byte data transmission rate.

If the higher-layer controller comprises a personal computer or a board computer, then the Ethernet may be used as a higher-layer serial transmission bus for the GW for transmission of data including bit input and output data. Since the Ethernet has a high communication rate of 10 Mbps, it imposes no limitations on the desired communication rate.

The byte field structure of a message frame sent from the GW will be described below.

The number 1b of transmission units of a byte field is calculated as described above, and set out. When the number 1b of transmission units is sent out, the following byte field format check is carried out:

(a) The length of byte field transmission units is checked.
(b) If the message frame is an input and output/ test message frame, then

a) it is checked whether as many sets where a non-mark following a mark continues for 18 transmission units as the predetermined number of byte channels have been set in a field, and whether all null subsequently;
b) it is checked whether TAGs of respective byte channel slots are all of a logic 0;
c) it is checked whether slave slots of respective byte channel slots are all null; and
d) it is checked whether master slots of respective byte channel slots are all of a logic value, whether byte slots of respective byte channel slots are all of a logic value if MC = MSTTRS, and whether byte slots of respective byte channel slots are all null if other than MC = MSTTRS.

(c) If the message frame is a status message frame, then it is checked whether all byte fields are null.

In the byte field of a message frame returned to the GW, the following check is made:

(a) it is checked whether the length of transmission units is ((predetermined number - 2) total number of slave chips);
(b) If the message frame is an input and output/ test message frame, then

a) it is checked whether as many sets where a non-mark following a mark continues for 18 transmission units as the predetermined number of byte channels have been set in a field, and whether all null subsequently;
b) it is checked whether TAGs of respective byte channel slots are all null;
c) it is checked whether slave slots of respective byte channel slots are all of a logic value;
d) it is checked whether master slots of respective byte channel slots are all of a logic value, and whether they agree with sent values; and
e) it is checked whether byte slots of respective byte channel slots are all of a logic value if SC = SLVTRS or SLVRCVTRS, and whether byte slots of respective byte channel slots are all null if other than SC = SLVTRS or SLVRCVTRS.

(C) If the message frame is a status message frame, then it is checked whether all byte fields are null.

With respect to the processing in the setting mode, for automatic bus topology recognition, a test message frame with a byte channel slot added for an initializing command may be sent, and the presence of a byte data transmission slave chip may be detected by seeing a TAG.

With respect to the processing in the standby mode, all byte data transmission channels are subject to the above initializing process.

With respect to the processing in the operation mode, the above sent byte field format check is carried out, and the above return byte field format check is carried out. If a failure is detected in these checking processes, then unlike the detection of a bit input and output failure, the self-diagnosis mode is not initiated, but a communication failure is indicated to the byte transmission higher-level protocol in the GW, i.e., the BSC/basic data transmission procedure, and a retry is performed according to a command from the byte transmission higher-level protocol or the byte data transmission loop-back check is carried out.

The processing in the self-diagnosis mode will be described below.

An example in which the node 251 shown in FIG. 58 has been set as a first byte data transmission slave and this slave is unable to detect its own byte channel slot, resulting in a stuck-at fault, will be described below. In this error, the byte data transmission slave is incapable of detecting its own byte channel slot. The GW detects a byte channel slot where remaining TAGS = logic 0, by checking the byte field of the return message frame, and hence detects a failure in which either one of byte data transmission slaves does not receive a slot. The GW immediately indicates the fault to the higher-level transmission controller for all byte data transmission channels, starting an error control procedure for each of the channels. The GW also sends out a test message frame to collect self-diagnosis information. FIGS. 114 through 116 show message frames. Specifically, FIGS. 114 through 116 show message frames upon a byte data transmission salve failure. FIGS. 114 and 115 show message frames upon the byte data transmission salve failure in the case where there are two byte data transmission slaves, FIG. 114 showing a frame sent from the GW and FIG. 115 showing a frame returned to the GW. FIG. 116 shows a test message frame in the self-diagnosis mode, and specifically shows a frame returned to the GW. Since the byte data transmission slave of the node 251 detects a failure and there are remaining slots in the input and output message frame, the node 251 is determined as failing to read data. In this case, the GW determines that the node 251 is a failure slave.

Modifications to the method of start/stop synchronous data transmission according to the present invention will be described below.

The dummy message which the control station sends at certain cyclic periods is not limited to the SOH and the BCC. Instead, the dummy message may be any of various messages insofar as they are not harmful in terms of the communication protocol being used.

The bit frame structure has been illustrated as containing two data bits. However, the bit frame structure is not limited to such two data bits, but may contain many data bits which may be combined to code a plurality of control symbols including transmission data and nulls.

The built-in clock oscillating circuit has been described as comprising a ring oscillator. However, a built-in clock oscillating circuit which requires no external circuit may comprise any of various circuits. For example, it may comprise a CR oscillating circuit having a capacitor in the form of an electrode facing a film of silicon oxide or an oscillating circuit comprising a combination of an integrating circuit which repeats charging and discharging cycles and a comparator. The latter oscillating circuit may have a simplified circuit for effecting calculations from a count between bit frames because the clock frequency has increased accuracy as the period is determined by the ratio of the resistances of diffused resistors for controlling charging and discharging currents.

The timing generating circuit has been described as using a calculating algorithm capable of a timing signal with maximum accuracy because the difference between the baud rate and the frequency of the built-in clock signal. Depending on the combination of built-in clock signal fluctuation specifications and the difference between the baud rate and the frequency of the built-in clock signal, a simpler calculating algorithm may be sufficient. If such a simpler calculating algorithm is employed, then the timing generating circuit may comprise smaller-scale logic circuits. While the timing generating circuit has been described as having a circuit arrangement for generating a timing signal with a number of cascaded counters, the timing generating circuit may have another circuit arrangement of logic circuits capable of executing a predetermined calculating algorithm.

The number of bit input and outputs per slave chip has been described as ranging from one to four. However, 8 through 16 bit input and output points per slave chip may be employed. The total number of bit input and output points may be expanded to 1024 output points/1024 input points or reduced to 32 through 64 output points/32 through 64 input points. With the latter bit input and output points, slave chips may be used as a wire saver in conventional parallel-wired manifold solenoid-operated valves, and simplified master chips for switching and converting signals from a controller into bus signals may be incorporated in connector terminal bases or connectors.

The byte channel slot comprising 19 transmission units has been described for the transmission of a byte field. However, many other modified schemes may be employed. The field may be used to achieve any of various other purposes for data transmission. For example, it may be used to carry out data transmission for motion control.

With respect to adding the control function to the GW, the GW has been described as an intermediate unit for performing only communication protocol conversion. However, the GW may also incorporate an additional PLC function.

The total length of the bus cable has been described as a maximum of 200 m with a maximum of 50 m per bus branch. However, it may be increased to several hundred m using a plurality of repeaters. Since the method of start/stop synchronous data transmission according to the present invention employs a ring bus, even if the total bus length is increased to several km, only a bus signal propagation delay of about 6 ns/n and a repeater circuit delay of about 40 ns/repeater are added to the cyclic transmission period, and the maximum distance to which the bus length can be extended is not limited by the time which is required for a signal to go and return over the bus, unlike other linear buses.

The method of start/stop synchronous data transmission according to the present invention employs a serial transmission bus system having a bus topology which uses a four-conductor ring bus in the form of a four-conductor bus cable with two conductors as slave power supply lines, one conductor for going bus signals, and one conductor for returning bus signals. The system arrangement is made simple because the bus is connected to slaves by connectors.

The serial transmission bus system employs a master/slave cyclic transmission system. The master/slave cyclic transmission system has a master which interfaces with a higher-layer system for exchanging bit input and output information and byte data transmission information, a serial bus for cyclically sending message frames to send bit output information and downstream byte data to slaves, and slaves for sending bit input information and upstream byte data with the master receiving returning message frames from the ring bus to read the bit input information. Therefore, the slaves can establish a string of information bits having a desired bit length.

The start/stop synchronous data transmission is employed. A bit frame comprises one start bit, two information bits, and one stop bit. The two information bits are coded into a logic 0, a logic 1, a mark, and a null. The mark is used to indicate a delimiter in a message frame, and the null is used to indicate no information with the start bit assigned to a high level and the remaining bits to a low level. These four bit frames are combined into a message frame, and the bit frame at the leading end of each message frame is null. Therefore, the coding process is simple.

Each slave terminal has a bit frame reproducing and relaying circuit for each of a going bus and a returning bus. A bit frame on each of these buses is reproduced and relayed with a delay corresponding to one bit frame. The bit frame is generated using the edge at the leading end of the bit frame which is reproduced and relayed with the delay. The bit edge timing of a bit frame which is reproduced and relayed and the bit sampling timing of a received bit frame are generated by measuring, with a counter activated by the built-in clock, the interval between the leading edge of the bit frame (null) at the leading end of each message frame and the leading edge of the next bit frame, and the times of subsequent bit frames are generating by using the built-in clock using a value which is calculated from the measured interval by a certain algorithm. Therefore, the built-in clock oscillating circuit is simple in arrangement.

The built-in clock oscillating circuit in the slave chip is not a dedicated special oscillating circuit, but can easily be constructed as a ring oscillator comprising an odd number of tandem-connected inverters for generating a high-frequency clock signal based on the propagation delay times of the inverters.

A frame format check is carried out to confirm that the start bit is of a logic 1 and the stop bit is of a logic 0 for each bit frame. In addition, two counters are provided for counting positive-going edges and negative-going edges within a frame, and it is checked whether each of the counts, in addition to a combination of bit logic values at the center of the bit time, agrees with the number of edges of a waveform represented by null/mark/logic 0/logic 1. If the positive-going edge of the start bit of the following bit frame is not present until the center of the original bit time, then such a condition is detected as a bit frame timeout error. In any case, since subsequent going-bus output signals are fixed to a low level, resulting in a bus idle state, it is possible to detect a bit frame transmission error.

In a going-bus input of each slave, it is checked whether the number of output transmission bits in an OUT field is 128/256, whether a null is not received after a first logic value, and whether output data is insufficient if it is set to a bit output. Thus, it is possible to detect an OUT field transmission error.

In a going-bus input of each slave, it is checked whether the number of input transmission bits in an IN field is 128/256, whether a logic value is not received after the reception of a first null, and whether there is an empty area in the IN field for inserting an input value if it is set to a bit input. Thus, it is possible to detect an IN field transmission error.

The master reads its own message frame that has been sent to the bus, performs a check equivalent to the detection of a bit frame transmission error for each bit frame, and checks whether an information bit pattern is correct, the edge intervals of sent pulses are of a predetermined value, the format of a SYNC field is correct, the format of an OUT field is correct, the format of an IN field is correct, and the format of a BYTE field is correct. With respect to returning message frames, the master also performs a check equivalent to the detection of a bit frame transmission error for each bit frame, checks the format of a SYNC field, the format of an IN field, and an IN field transmission error in an IN field, checks whether the number of inserted input bits is correct, and effects a timeout check for the reception of a returning message frame which has been sent out. Therefore, the master is capable of checking message frames which have been sent out and returned.

If the master detects any error in the transmission error check for message frames returned to the master, then the master sends out a status message frame in which the OUT and IN fields are made all null. When each slave receives this status message frame, the slave rewrites the first nulls in the OUT and IN fields of a going-bus input into its own error status, and sends the signal to a going-but output. The master receives returning message frames and recognizes transmission error detecting states of all the slaves.

The master does not transmit an input value of an input and output message with respect to which a transmission error has been detected, for protection against an erroneous input. After having received the preceding input and output message without a transmission error, each slave outputs a bit output which it has first extracted at the leading end of the succeeding input and output message, to a programmable input and output pin for protection against an erroneous output. Therefore, the master and slaves are protected against erroneous inputs and outputs.

The method of start/stop synchronous data transmission according to the present invention as described above allows a conventional start/stop synchronous communication slave station to use, rather than an expensive quartz oscillator, an inexpensive CR oscillating circuit having a clock frequency which is variable greatly, specifically in a range of ± 30 % through ± 50%, due to variations and temperature-induced fluctuations in the electrostatic capacitance of a capacitor, variations and temperature-induced fluctuations in the resistance of a resistor, variations and temperature-induced fluctuations in the oscillation frequency of a built-in oscillating circuit, and fluctuations in the power supply voltage. The circuit corresponding to the baud rate generator for supplying a baud rate to the UART is simple and has a small number of gates, and is preferable for use in a one-chip microcomputer.

Even if a quartz oscillator is not prohibitively costly, the method of start/stop synchronous data transmission according to the present invention is free from limitations based on the clock frequency-dividing function of the conventional baud rate generator, and capable of using a clock signal having the maximum operating frequency of the microcomputer, resulting in an increased performance level of terminal devices.

With the method of start/stop synchronous data transmission according to the present invention, a slave chip can be constructed of a logic circuit having about 5,000 gates. If a slave chip is manufactured according to the CMOS logic circuit fabrication process, then an interface cost per input bit or output bit can greatly be reduced. The interface cost means a total cost of semiconductor parts and discrete parts which are required to interface with the serial transmission bus and to input and output bit logic values, i.e., a communication control IC, a microcomputer IC, a bus transceiver IC, an EEPROM, optical couplers, diodes, pulse transformers, a quartz oscillator, a node address setting switch, resistors, and capacitors. While both AS-interface and the slave chip are capable of inputting and outputting four bits, the interface cost per bit is reduced to about 1/7.

If the slave chip is used in DeviceNet, since it necessitates a microcomputer, the cost per bit of the slave chip which is of four bits/unit is reduced to about 1/30. Even if the slave chip is of a centralized configuration as a 16-point input/output unit for use in DeviceNet, the cost per bit of the slave chip is reduced to about 1/4.

The above parts of the slave chip can be installed in an area which is equal to or less than 1/2 of the area required if used in AS-interface (or 1/16 of the area when a bare chip is used).

With the method of start/stop synchronous data transmission according to the present invention, since the slave chip is reduced in size, it can be mounted on the printed-circuit board of the solenoid coil unit of a small-size manifold solenoid-operated valve which has an attachment pitch of 10 mm, or the printed-circuit board of a proximity switch having an M12 or M8 size connector. Even if the slave chip is used as a one-point input or output slave chip, it can be installed less expensively than with a conventional parallel-wired installation arrangement. Therefore, the slave chip is highly advantageous as a wire saver.

The method of start/stop synchronous data transmission according to the present invention allows a single slave chip to have a decentralized arrangement of 1 through 4 points or more, and hence is less wasteful with respect to the total number of bit input and output points and more efficient than the conventional arrangement which is limited to a decentralized arrangement of 4/8/16 points.

Furthermore, the method of start/stop synchronous data transmission according to the present invention does not require node address settings for each individual slave node, and allows the gateway to automatically recognize the bus wiring topology. Therefore, the method of start/stop synchronous data transmission according to the present invention can be incorporated in an industrial machine with a greatly reduced amount of time and labor. Slave units can be serviced and replaced safely as no erroneous settings are caused by maintenance and replacement processes.

The method of start/stop synchronous data transmission according to the present invention permits a disconnection of the serial transmission bus cable to be indicated 100 % by a self-diagnosis function. Consequently, the serial transmission bus cable can be repaired and recovered from such a fault in a short period of time.

While a ring bus is employed in the method of start/stop synchronous data transmission according to the present invention, since a slave chip has going- and returning-bus circuits and bus branches, the slave chip has a bus power supply capability of 1 A per bus branch and 8 A as a whole. Therefore, sensors which usually require about 5 through 10 mA and a number of bus power supply loads such as manifold solenoid-operated valves and electromagnetic relays including many solenoid coils which usually require about 40 through 50 mA can be connected to the slave devices. Therefore, the slave devices can have a smaller amount of sensor/actuator power supply wiring as well as signal wiring than a conventional parallel-wired installation arrangement. With the method of start/stop synchronous data transmission according to the present invention, the slave chip has various transmission error detecting functions, and the gateway also has a sophisticated transmission error detecting function, so that the bus system has a sophisticated transmission error detection capability as a whole. Consequently, the slave chip is prevented from outputting erroneous information upon a transmission error and also from transmitting input information to the higher-level controller. The gateway is capable of providing sophisticated failure diagnosis information and has an ability to assist in identifying a fault location.

With the method of start/stop synchronous data transmission according to the present invention, the byte data transmission function is added to enable one bus to transmit bit input and output data and medium-rate byte data, thus allowing analog input and output units, high-speed counters, temperature regulators, position controllers, and various display and operation panels to be installed in the bus in a decentralized fashion. Furthermore, the method of start/stop synchronous data transmission according to the present invention makes it possible to achieve a remote setting for the sensitivity of a proximity switch, a remote setting for the detectable pressure of an air pressure sensor, a reading of pressure data detected by such an air pressure sensor, a remote setting for the pressure of an air pressure regulator, and a reading of pressure data outputted by such an air pressure regulator.

Moreover, the method of start/stop synchronous data transmission according to the present invention allows slave units to be connected to a higher-layer serial transmission bus via gateways to provide a wide-area large-capacity data transmission network for a large-scale discrete control system.

Although certain preferred embodiments of the present invention have been shown and described in detail, it should be understood that various changes and modifications may be made therein without departing from the scope of the appended claims.

**Claims**

1. A method of start/stop synchronous data transmission between a master station having a high-accuracy oscillating circuit adapted to a baud rate matching transmission line characteristics and at least one slave station having a low-accuracy oscillating circuit, comprising the steps of sending a predetermined dummy message at a predetermined period from the master station, counting clock pulses from said low-accuracy oscillating circuit from a time interval between edges of a first bit frame of the dummy message in said slave station, and generating a baud rate clock signal from the count of clock pulses by means of rounding circuits or combination of rounding circuits and addition or subtraction circuits, so that the generated baud rate clock signal having a predetermined accuracy enough to send and receive message frames for stable start/stop synchronous communication.

2. A method according to claim 1, for use in a master/slave serial transmission bus system having a ring bus topology for cyclic data transmission, wherein said each slave station has a reproducing and relaying circuit for reproducing and relaying each bit frame by generating a group of timing signals by means of rounding circuits or combination of rounding circuits and addition or subtraction circuits using the count of pulse edge of time interval of a first bit frame with low-accuracy clock pulses, so that the generated timing signals have a predetermined accuracy enough to send and receive message frames for stable start/stop synchronous communication.

3. A method according to claim 2, wherein said slave station reproduces and relays each bit frame with a delay corresponding to one bit frame, said master station adds as many bit frames as the number of times that each bit frame is to be reproduced and relayed, to a tails of bit frame required to transmit information in a message frame to be transmitted from the master station, and outputs the message frame, said slave station generates a first edge of a bit frame to be reproduced, relayed, and outputted, using a first edge of an inputted bit frame each time the bit frame is to be reproduced and relayed, and generates other edges of the bit frame time at times calculated from said count of clock pulses for thereby maintaining a predetermined accuracy for bit frame time intervals to prevent erroneous transmission when bit frames are reproduced and relayed by a plurality of tandem-connected slave stations.

4. A method according to claim 3, wherein information to be carried by one bit frame is limited to at least one bit of logic value informations and several control informations and coded, said control informations including at least one item of delimiter and a null representing an absence of logic value information, said message frame comprising a downstream information field of a fixed length, a succeeding upstream information field of a fixed length, and a null field representing as many bit frames as the number of times that each bit frame is to be reproduced and relayed, wherein said master station adds data of a string of bits to be sent out to said downstream information field, makes said upstream information field all null, uses said delimiter to divide the fields from each other, and cyclically sends out the message frame, wherein if said slave station is configured as a slave station to receive downstream information comprising a predetermined number of bits, then said slave station detects a first non-null logic value in the received downstream information field, then reads logic values of a predetermined number of successive bits as a string of information bits destined for the slave station, rewrites a predetermined number of read bit frames into nulls, and outputs the bit frames with a delay corresponding to one bit frame to a next slave station, and wherein if said slave station is configured as a slave station to send upstream information comprising a predetermined number of bits, then said slave station detects a first null in the received upstream information field, sends out logic values of a predetermined number of successive bits as a string of information bits destined for the master station, so that said slave station can set strings of upstream and downstream information bits of an arbitrary bit length.

5. A method according to claim 4, wherein said as many bit frames as the number of times that each bit frame is to be reproduced and relayed are used as a byte field for providing a plurality of byte data transmission channels, said byte field including a plurality of byte channel slots arranged successively from a leading end thereof, each of said byte channel slots comprising a slave slot which has a tag of a single bit frame and a plurality of bit frames, a master slot, and a byte slot, said tag being used as an identification bit to detect whether said slave station has received said byte channel slot, said slave slot representing status information and response information of said slave station, said master slot representing status information, command information, and response information of said master station, said byte slot being sent as 8-bit byte data from said master station and said slave station, for thereby imparting a full-duplex byte data transmission channels, other than the downstream information and the upstream information, to a plurality of slave stations.

6. A method according to claim 5, wherein a bus cable connected to said slave station comprises a total of four lines including two power supply lines and two going- and returning-bus signal lines, said slave station comprising an integrated semiconductor chip which has a function to reproduce, relay, input, and output data on said going- and returning-bus signal lines, said integrated semiconductor chip being capable of automatically short-circuiting a going-bus output and a returning-bus input thereon upon timeout of a watchdog timer which is reset by a change in a bus signal, said master station having a connector capable of providing a plurality of bus branches, said bus branches including power supply lines to which an external power supply is wired in parallel for thereby increasing an allowable current per branch, said going- and returning-bus signal lines being connected to provide a ring bus for going- and returning-bus signals around said master station, each of the bus branches in said master station being equipped with a slave station capable of reproducing and relaying, but not inputting and outputting, data, said master station being capable of multiplexing and receiving bus signals between the slave stations in the bus branches in said master station, whereby upon start-up of said master/slave serial transmission bus system, said master station automatically recognizes the total number of slave stations, the number of input and output bits configured for each of the slave stations, and a bus wiring topology, thereby making unnecessary terminal address settings at each slave stations, making it easy to delete and add slave stations, change the number of input and output bits set for each of the slave stations, and automatically recognize a ring bus disconnection area.

7. A method according to claim 6, wherein a bit frame for transmitting a null representative of an absence of information, 1-bit logic information, and a mark representative of delimiter comprises one start bit, two logic information bits, and one stop bit, wherein with respect to going-bus and returning-bus inputs of each of the slave stations, a logic 1, a logic 0, a mark, and a null of a received bit frame are coded and an erroneous transmission of a bit frame is detected from a bit string pattern of samplings of bit frames at the centers of bit times and a count of a counter which counts positive- and negative-going edges of bus signal pulses, wherein with respect to a going-bus input, in the downstream information field, an output bit number check is effected to detect whether a predetermined fixed number of null through logic value bit frames are transmitted or not, an output field null sequence check is effected to detect whether a null is received or not after a first logic value is received, and an output data insufficiency check is effected to detect an absence of output data that can be read, and in the upstream information field, an input bit number check is effected to detect whether a predetermined fixed number of null through logic value bit frames are transmitted or not, an input field null sequence check is effected to detect whether a logic value is received or not after a first null is received, and an input data value sending incapability check is effected to detect an absence of an empty area when an input value is to be sent, wherein if a slave detected transmission error is detected in one message frame, a normal reception flag is cleared, and when a flag is set at the leading end of the message frame, an output signal to be sent outside of the slave station is rewritten into a received value of previous frame to avoid an erroneous output upon erroneous transmission, and wherein said master station has a detailed error detecting function to receive a returning-bus signal and detect an error per transmission cycle in contents of all returned message frames, and if said master station detects an error, said master station adds a test message frame which operates in the same manner as an input and output message frame except for not inputting data to and outputting data from the slave station, and a status message frame capable of reading altogether data indicative of whether errors are detected by all slave stations or not, for thereby providing an error detecting function, a fault diagnosing function, and a fault area identifying function, deleting settings for starting up the bus system, and avoiding erroneous outputs and inputs.

8. A method according to claim 7, wherein a byte field for effecting byte data transmission is added to a message frame, a microcomputer external to the slave station is provided if the slave station is to effect byte data transmission, a four-bit bidirectional parallel bus is used in a time-division fashion according to a handshaking process to interface said microcomputer and said slave station with each other, and byte data including error control data is transmitted by transmission control software run by said microcomputer to provide a mixed arrangement of a bit input and output transmission channel and a byte data transmission channel.

9. A method according to claim 7 or 8, wherein a gateway is provided which has a master function and a communication protocol conversion function to effect communication protocol conversion to and from a data transmission bus which transmits data according to another communication protocol.

FIG. 1

RxD

TxD

INTERNAL BUS

MICROPROCESSOR 102

ROM 103

RAM 104

CLK

CLK

CLK

UART 101

BAUD RATE COUNTER 108

TIME INTERVAL COUNTER 106

SYNCHRONOUS FLAG CIRCUIT 107

RECEIVING LINE OPERATION MONITOR CIRCUIT 105

CLK

CLK

CLOCK PULSE GENERATING CIRCUIT 110

CLK

CLK

OSCILLATING CIRCUIT 109

Vcc

R

C

EP 1 014 273 A2

**FIG. 2A**

TIME →

| STR | b1 | b2 | b3 | b4 | b5 | b6 | b7 | PA | STP | STR | b1 | •••• |

BIT FRAME

$t_{pa}$

$t_{stp-smpl}$

$t_{b-frm}$

**FIG. 2B**

TIME →

1ST BIT FRAME (SOH)

S T R | 1 b1 | 0 b2 | 0 b3 | 0 b4 | 0 b5 | 0 b6 | 0 b7 | 1 PA | S T P

2ND BIT FRAME (ETB)

S T R | 1 b1 | 1 b2 | 1 b3 | 0 b4 | 1 b5 | 0 b6 | 0 b7 | 0 PA | S T P

$t_{b7-8tb}$

# FIG. 3

FIG. 4

# FIG. 5

| CLOCK<br>TIMING | OPERATION | COUNTER VALUE<br>(BINARY NUMERAL) |
|---|---|---|
| 1 | LOAD | 1 1 1 0 1 1 1 |
| 2 | COUNT | 1 1 1 1 0 0 0 |
| 3 | ↓ | 1 1 1 1 0 0 1 |
| 4 | ↓ | 1 1 1 1 0 1 0 |
| 5 | ↓ | 1 1 1 1 0 1 1 |
| 6 | ↓ | 1 1 1 1 1 0 0 |
| 7 | ↓ | 1 1 1 1 1 0 1 |
| 8 | ↓ | 1 1 1 1 1 1 0 = 1 4 (DECIMAL NUMERAL) |
| 1 | LOAD | 1 1 1 0 1 1 1 |
| 2 | COUNT | 1 1 1 1 0 0 0 |
| 3 | ↓ | 1 1 1 1 0 0 1 |
| . | . | . |
| . | . | . |

# F I G. 6

(a) SOH、HEADING、ETB、(BCC)
(b) SOH、HEADING、STX、TEXT、ETB、(BCC)
(c) STX、TEXT、ETB、(BCC)
(d) SOH、HEADING、STX、TEXT、ETX、(BCC)
(e) STX、TEXT、ETX、(BCC)
(f) SOH、ETB、(BCC):DUMMY MESSAGE

# FIG. 7

(g) (EOT)、POLLING ADDRESS、ENQ
(h) (EOT)、SELECTING ADDRESS、ENQ
(i) PREFIX、ENQ
(j) PREFIX、EOT
(k) EOT
(l) DLE、EOT

FIG. 8

(tstp-smpl)-(tpa)

## FIG. 9

(tb-frm)-(tstp·smpl)

TIME ERROR ($\mu$s) / CLOCK PULSE FREQUENCY (MHz)

# FIG. 10

STX

| STR | b1 | b2 | b3 | b4 | b5 | b6 | b7 | bp | STP | STR |

↑  ↓  ↑  ↓              ↑  ↓

8-BIT TIME

1  0  1  0  0  0  0  0  1  0

# FIG. 11

NULL ← | → NULL

STR  b1  b2  b3  b4  b5  b6  b7  bp  STP  STR

10-BIT TIME

# FIG. 12

EP 1 014 273 A2

# FIG. 13

```
CODING: DATA BIT 1    DATA BIT 2    CONTENTS
        LOGIC 0       LOGIC 0       : NULL
        LOGIC 0       LOGIC 1       : LOGIC 0 DATA
        LOGIC 1       LOGIC 0       : LOGIC 1 DATA
        LOGIC 1       LOGIC 1       : MARK
```

# FIG. 14

|  | WHEN 64 POINTS ARE INPUTTED/OUTPUTTED | WHEN 128 POINTS ARE INPUTTED/OUTPUTTED | WHEN 256 POINTS ARE INPUTTED/OUTPUTTED |
|---|---|---|---|
| SYNC FIELD: | 7 | 7 | 7 |
| OUTPUT FIELD: | 65 | 129 | 257 |
| INPUT FIELD: | 65 | 129 | 257 |
| BYTE FIELD: | 128 | 512 | 1,024 |
| SUBTOTAL (NOTE 1): | 265 | 777 | 1,545 |
| BUS IDLE: | 10 | 10 | 10 |
| GATEWAY PROCESSING: | 37 | 69 | 133 |
| TOTAL (NOTE 2): | 312 | 856 | 1,688 |
| (CYCLE PERIOD): | $624\mu$s | $1,712\mu$s | $3,376\mu$s |

NOTE 1: MESSAGE FRAME LENGTH
NOTE 2: CYCLE LENGTH

# FIG. 15

```
TRANSMISSION ERROR DETECTION/PROCESSING:
  SENDING BUS TRANSMISSION ERROR DETECTION:
    SENDING TRANSMISSION UNIT ERROR DETECTION:
    SENDING TRANSMISSION UNIT TIMEOUT CHECK:
    SENDING MESSAGE FRAME MATCHING CHECK:
    SENDING MESSAGE FRAME FORMAT CHECK:
      BUS IDLE LENGTH CHECK:
      SYNC FIELD FORMAT CHECK:
      OUTPUT FIELD FORMAT CHECK:
      INPUT FIELD FORMAT CHECK:
      BYTE FIELD FORMAT CHECK:
  RETURNED MESSAGE FRAME FORMAT CHECK:
    RETURNED TRANSMISSION UNIT ERROR DETECTION:
    RETURNED TRANSMISSION UNIT TIMEOUT CHECK:
    RETURNED MESSAGE FRAME FORMAT CHECK:
      SYNC FIELD FORMAT CHECK:
      OUTPUT FIELD FORMAT CHECK:
      INPUT FIELD FORMAT CHECK:
      BYTE FIELD FORMAT CHECK:
      RETURNED MESSAGE FRAME RECEPTION TIMEOUT CHECK:
  BYTE DATA TRANSMISSION CHANNEL TRANSMISSION ERROR DETECTION/PROCESSING:
    HORIZONTAL PARITY CHECK: EVEN PARITY INCLUDING PARITY BIT
    VERTICAL PARITY CHECK: EVEN PARITY INCLUDING OPTION, BCC
    VARIOUS TIMERS: TIMEOUT DETECTION AND RECOVERY
  ERROR INPUT PROTECTION FUNCTION: UPON MESSAGE FRAME TRANSMISSION FAILURE,  RECEIVED VALUE OF NORMALLY
    TRANSMITTED NEARBY THE MESSAGE FRAME IS HELD AS BIT INPUT TO BE SENT TO UPPER-LEVEL BUS.
  RETRY FUNCTION: WHEN MESSAGE FRAME TRANSMISSION FAILURE IS DETECTED,  A PLURALITY OF TEST MESSAGE FRAMES
    ARE AUTOMATICALLY SENT,  AND IF NOT TRANSMISSION ERROR IS DETECTED FOR ALL TEST MESSAGE FRAMES,  CYCLIC
    TRANSMISSION OF INPUT/OUTPUT MESSAGE FRAME IS RESUMED.
```

EP 1 014 273 A2

FIG. 16

## FIG. 17

FORWARD BUS INPUT

FORWARD BUS REGENERATIVE REPEATING CIRCUIT — 301

301-1

FORWARD BUS OUTPUT

300

303 — CLOCK OSCILLATING CIRCUIT

304 — CONTROL CIRCUIT

305 — INPUT/OUTPUT CIRCUIT

I03H
I02H ⎱ ~306
I01H ⎰ I/O PINS
I00H

BACKWARD BUS OUTPUT

BACKWARD BUS REGENERATIVE REPEATING CIRCUIT

302

307 BACKWARD BUS INPUT

~309 FUNCTION SETTING PINS

WDT

308

309 STATUS OUTPUT PIN

EP 1 014 273 A2

FIG. 18A

FIG. 18B

# FIG. 19

FIG. 20

EP 1 014 273 A2

# FIG. 21

# FIG. 22

## FIG. 23

| NAME | ABBREVIATION | DATA BIT 1 | DATA BIT 1 | MEANING |
|---|---|---|---|---|
| NULL | NL | LOGIC 0 | LOGIC 0 | NO INFORMATION, IDLE |
| LOGIC 0 | L0 | LOGIC 0 | LOGIC 1 | LOGIC 0 |
| LOGIC 1 | L1 | LOGIC 1 | LOGIC 0 | LOGIC 1 |
| Mark | MK | LOGIC 1 | LOGIC 1 | MARK, DELIMITER SYMBOL |

EP 1 014 273 A2

FIG. 24A

FIG. 24B

FIG. 24C

FIG. 24D

FIG. 24E

FIG. 24F

FIG. 24G

EP 1 014 273 A2

## FIG. 25

| NAME | FUNCTION | TIME POSITION |
|------|----------|---------------|
| TMG1 | START BIT STROBE | $(Tu/8) \cdot 1 = 250ns$ |
| TMG2 | START BIT NEGATIVE-GOING EDGE | $(Tu/8) \cdot 2 = 500ns$ |
| TMG3 | DATA1 BIT STROBE | $(Tu/8) \cdot 3 = 750ns$ |
| TMG4 | DATA1 BIT NEGATIVE-/POSITIVE-GOING EDGE | $(Tu/8) \cdot 4 = 1,000ns$ |
| TMG5 | DATA2 BIT STROBE | $(Tu/8) \cdot 5 = 1,250ns$ |
| TMG6 | DATA2 BIT NEGATIVE-/POSITIVE-GOING EDGE | $(Tu/8) \cdot 6 = 1,500ns$ |
| TMG7 | STOP BIT NEGATIVE-GOING EDGE | $(Tu/8) \cdot 7 = 1,750ns$ |
| TMG9 | TRANSMISSION UNIT TIMEOUT STROBE | $(Tu/8) \cdot 9 = 2,250ns$ |

NOTE:Tu:TRANSMISSION UNIT TIME DURATION = 2 μs
TIME POSITION: TIME FROM POSITIVE-GOING EDGE OF START BIT

EP 1 014 273 A2

# FIG. 26

## FIG. 27A

CLOCK PULSE FREQUENCY (MHz)

## FIG. 27B

CLOCK PULSE FREQUENCY (MHz)

# FIG. 28

|  | MSB | | | | | LSB | ROUNDING CARRY | : | DECIMAL NUMERAL |
|---|---|---|---|---|---|---|---|---|---|
|  | 6 | 5 4 3 2 1 0 | | | | | | | |
| TIME MEASUREMENT COUNTER: | 0 | 1 0 0 0 0 1 | | | | | − − | : | 33 |
| (n/2ROUND5:0): | | 0 1 0 0 0 1 | | | | | YES | : | 17 |
| (n/8ROUND3:0): | | | 0 1 0 0 | | | | NO | : | 4 |

## FIG. 29

AT n＝33

```
TMG1：（Tu／8）・1≒（n／8）≒（n／8ROUND3：0）：                        4
TMG2：（Tu／8）・2≒（n／4）≒（n／4ROUND4：0）：                        8
TMG3：（Tu／8）・3≒（n／4）＋（n／8）
            ≒  （n／4ROUND4：0）
              ＋（n／8ROUND3：0）              :        4＋8＝12
TMG4：（Tu／8）・4≒（n／2）≒（n／2ROUND5：0）：                       17
TMG5：（Tu／8）・5≒（n／2）＋（n／8）
            ≒  （n／2ROUND4：0）
              ＋（n／8ROUND3：0）              :       17＋4＝21
TMG6：（Tu／8）・6≒（n／2）＋（n／4）
            ≒  （n／2ROUND5：0）
              ＋（n／4ROUND4：0）              :       17＋8＝25
TMG7：（Tu／8）・7≒（n／2）＋（n／4）＋（n／8）
            ≒  （n／2ROUND5：0）
              ＋（n／4ROUND4：0）
              ＋（n／8ROUND3：0）              :     17＋8＋4＝29
TMG9：（Tu／8）・9≒（n／8）＋（n／4）＋（n／8）
              ＋（n／2）
            ≒  （n／2ROUND5：0）
              ＋（n／4ROUND4：0）
              ＋（n／8ROUND3：0）
              ＋（n／4ROUND4：0）       : 17＋8＋4＋8＝37
```

EP 1 014 273 A2

# FIG. 30

```
                    AT 16. 9 MHz
(n/8ROUND3:0) :        4
(n/4ROUND4:0) :        8
(n/2ROUND5:0) :        17
```

# FIG. 31

# FIG. 32

# FIG. 33

```
              1 2 3 4 5 6 7 8 910111213141516171819
(a) SENT FROM MASTER      N M L L L L M N N N N N N * * * *
                          L K 0 1 0 1 K L L L L L L L L

(b) BUS OUTPUT GOING      * N M L L L L M N N N N N N * * * *
    TO 1a SLAVE           L K 0 1 0 1 K L L L L L L L

(c) BUS OUTPUT GOING      * * N M L L L L M N N N N N * * * *
    TO 2a SLAVE           L K 0 1 0 1 K L L L L L L

(d) BUS OUTPUT RETURNING  * * * N M L L L L M N N N N * * * *
    TO 2a SLAVE           L K 0 1 0 1 K L L L L L

(e) BUS OUTPUT RETURNING  * * * * N M L L L L M N N N * * * *
    TO 1a SLAVE           L K 0 1 0 1 K L L L L

(f) BUS OUTPUT GOING      * * * * * N M L L L L M N N * * * *
    TO 3a SLAVE           L K 0 1 0 1 K L L L

(g) BUS OUTPUT GOING      * * * * * * N M L L L L M N * * * *
    TO 4a SLAVE           L K 0 1 0 1 K L L

(h) BUS OUTPUT RETURNING  * * * * * * * N M L L L L M N * * * *
    TO 4a SLAVE           L K 0 1 0 1 K L

(i) BUS INPUT RETURNING   * * * * * * * * N M L L L L M * * * *
    TO MASTER             L K 0 1 0 1 K
    RETURN BUS OUTPUT
```

EP 1 014 273 A2

FIG. 34

ENBASLHEDGH
ASFWDBUSINH
CHIPCLKL
CHIPCLKH
DAT2HIGHL
DATA1LOWL
DATA2LOWL
STPBLOWL

FWDBUSINH

ASFWDBUSOUTH
(SLAVE OUTPUT)

G1
G2
G4 DRV
Q1
Q2
Q3

80

# FIG. 35

EP 1 014 273 A2

# FIG. 36

| NAME | NUMBER OF BITS | FUNCTION |
|---|---|---|
| 1) TIME MEASUREMENT COUNTER | 7 | TRANSMISSION UNIT TIME DURATION (Tu) IS COUNTED BY INTERNAL CLOCK WITH NL AT LEADING END OF MESSAGE FRAME. |
| 2) ROUNDING COUNTER GROUP | | |
| $n_C/8 \cdot$ROUND | 4 | CALCULATE VALUE WHICH IS THE SUM OF HIGH-ORDER 4 BITS OF TIME MEASUREMENT COUNTER AND VALUE ROUNDED OFF FROM LOW-ORDER BIT. |
| $n_C/4 \cdot$ROUND | 5 | CALCULATE VALUE WHICH IS THE SUM OF HIGH-ORDER 5 BITS OF TIME MEASUREMENT COUNTER AND VALUE ROUNDED OFF FROM LOW-ORDER BIT. |
| $n_C/2 \cdot$ROUND | 6 | CALCULATE VALUE WHICH IS THE SUM OF HIGH-ORDER 6 BITS OF TIME MEASUREMENT COUNTER AND VALUE ROUNDED OFF FROM LOW-ORDER BIT. |
| 3) TIMING COUNTER GROUP | | |
| $(n_C/8) \cdot$1CNTR | 4 | TMG1 GENERATING COUNTER |
| $(n_C/8) \cdot$2CNTR | 5 | TMG2 GENERATING COUNTER |
| $(n_C/8) \cdot$3CNTR | 4 | TMG3 GENERATING COUNTER |
| $(n_C/8) \cdot$4CNTR | 6 | TMG4 GENERATING COUNTER |
| $(n_C/8) \cdot$5CNTR | 4 | TMG5 GENERATING COUNTER |
| $(n_C/8) \cdot$6CNTR | 5 | TMG6 GENERATING COUNTER |
| $(n_C/8) \cdot$7CNTR | 4 | TMG7 GENERATING COUNTER |
| $(n_C/8) \cdot$9CNTR | 5 | TMG9 GENERATING COUNTER |

EP 1 014 273 A2

# FIG. 37

ENBTINTCNTRH

LSB ... MSB

| 0 | 1 | 0 | 0 | 0 | 0 | 1 | ～481

ROUND

$n_c/8$ ROUND 3:0

| 0 | 1 | 0 | 0 | ～482

483

$n_c/4$ ROUND 4:0

| 0 | 1 | 0 | 0 | 0 |

484

$n_c/2$ ROUND 5:0

| 0 | 1 | 0 | 0 | 0 | 1 |

ENBTMGCNTRH

485

$(n_c/8)\cdot 1$CNTR 3:0

| 1 | 0 | 1 | 1 | → DECODE 1100 ～493 → TMG1

486

$(n_c/8)\cdot 2$CNTR 4:0

| 1 | 0 | 1 | 1 | 1 | → DECODE 11100 ～494 → TMG2

487

$(n_c/8)\cdot 3$CNTR 3:0

| 1 | 0 | 1 | 1 | CARRY OUT → TMG3

488

$(n_c/8)\cdot 4$CNTR 5:0

| 1 | 0 | 1 | 1 | 1 | 0 | → DECODE 111100 ～495 → TMG4

489

$(n_c/8)\cdot 5$CNTR 3:0

| 0 | 1 | 0 | 0 | CARRY OUT → TMG5

490

$(n_c/8)\cdot 6$CNTR 4:0

| 1 | 0 | 1 | 1 | 1 | CARRY OUT → TMG6

491

$(n_c/8)\cdot 7$CNTR 3:0

| 1 | 0 | 1 | 1 | CARRY OUT → TMG7

492

$(n_c/8)\cdot 9$CNTR 4:0

| 1 | 0 | 1 | 1 | 1 | CARRY OUT → TMG9

FIG. 38

EP 1 014 273 A2

FIG. 39

(a)
(b)
(c)
(d)
(e)   0 | 1 | 2 | 3 | | | 31 | 32 | 33
(f)
(g)
(h)   0 | 4
(i)   0 | 8
(j)   0 | 16 | 17 |
(k)
(l)   1011 | 1100 |
(m)   TMG1
(n)   10111 | 11000 | 11001 | 11010 | 11011
(o)   TMG2

1ST TU (NULL)   2ND TU (MARK)

$(n_c/8) \cdot 4CNR$ 5:0

## FIG. 40

| CLOCK No. | $(n_C/8)1$ CNTR | $(n_C/8)2$ CNTR | $(n_C/8)3$ CNTR | $(n_C/8)4$ CNTR | $(n_C/8)5$ CNTR | $(n_C/8)6$ CNTR | $(n_C/8)7$ CNTR | $(n_C/8)9$ CNTR | REMARKS |
|---|---|---|---|---|---|---|---|---|---|
| -2 | FIRST TRANSMISSION UNIT | | | | | | | | 0100000:TINTCNTR32 |
| -1 | | | | | | | | | 0100001:      33 |
| 1 | SECOND TRANSMISSION UNIT | | | 000000 | 0000 | 00000 | 0000 | 00000 | ROUNDING COUNTER LOADED |
| 2 | 0000 | 00000 | 0000 | 000000 | 0000 | 00000 | 0000 | 00000 | ROUNDING COMMAND |
| 3 | 1011 | 10111 | 1011 | 101110 | 1011 | 10111 | 1011 | 10111 | TIMING COUNTER LOADED |
| 4 | 1100 | 11000 | | 101111 | | | | | TMG1=4 |
| 5 | | 11001 | | 110000 | | | | | |
| 6 | | 11010 | | 110001 | | | | | |
| 7 | | 11011 | | 110010 | | | | | TMG2=7 |
| 8 | | | 1100 | 110011 | | | | | |
| 9 | | | 1101 | 110100 | | | | | |
| 10 | | | 1110 | 110101 | | | | | |
| 11 | | | 1111 | 110110 | | | | | TMG3=7 |
| 12 | | | | 110111 | | | | | |
| 13 | | | | 111000 | | | | | |
| 14 | | | | 111001 | | | | | |
| 15 | | | | 111010 | | | | | |
| 16 | | | | 111011 | | | | | TMG4=16 |

EP 1 014 273 A2

## FIG. 41

| CLOCK No. | $(n_c/8)1$ CNTR | $(n_c/8)2$ CNTR | $(n_c/8)3$ CNTR | $(n_c/8)4$ CNTR | $(n_c/8)5$ CNTR | $(n_c/8)6$ CNTR | $(n_c/8)7$ CNTR | $(n_c/8)9$ CNTR | REMARKS |
|---|---|---|---|---|---|---|---|---|---|
| 17 | | | | | 1100 | 11000 | | | |
| 18 | | | | | 1101 | 11001 | | | |
| 19 | | | | | 1110 | 11010 | | | |
| 20 | | | | | 1111 | 11011 | | | TMG5=20 |
| 21 | | | | | | 11100 | | | |
| 22 | | | | | | 11101 | | | |
| 23 | | | | | | 11110 | | | |
| 24 | | | | | | 11111 | | | TMG6=24 |
| 25 | | | | | | | 1100 | | |
| 26 | | | | | | | 1101 | | |
| 27 | | | | | | | 1110 | | |
| 28 | | | | | | | 1111 | | TMG7=28 |
| 29 | | | | | | | | 11000 | |
| 30 | | | | | | | | 11001 | |
| 31 | | | | | | | | 11010 | |
| 32 | | | | | | | | 11011 | |
| 33 | | | | | | | | 11100 | |
| 134 | 1100 | 11011 | 1111 | 111011 | 1111 | 11111 | 1111 | *11101 | |
| 235 | 0000 | 00000 | 0000 | 000000 | 0000 | 00000 | 0000 | *11110 | |
| 336 | 1011 | 10111 | 1011 | 101110 | 1011 | 10111 | 1011 | *11111 | *TMG9=36 |
| 437 | 1100 | 11000 | | 101111 | | | | | MARK * REPRESENTS TRANSMISSION UNIT UPON TIMEOUT |
| 5 | 1100 | 11001 | | 110000 | | | | | |

EP 1 014 273 A2

FIG. 42

# F I G. 43

# FIG. 44

| | | | | | | |
|---|---|---|---|---|---|---|
| LOGIC VALUE OF SAMPLINGS | START BIT | 1 | 1 | 1 | 1 | ALL COMBINATIONS OTHER THAN THOSE ON THE LEFT |
| | DATA1 BIT | 1 | 1 | 0 | 0 | |
| | DATA2 BIT | 1 | 0 | 1 | 0 | |
| | STOP BIT | 0 | 0 | 0 | 0 | |
| | | | | | | |
| NUMBER OF EDGES | NUMBER OF POSITIVE-EDGES | 2 | 2 | 3 | 2 | |
| | NUMBER OF NEGATIVE-EDGES | 1 | 1 | 2 | 1 | |
| | | | | | | |
| DECISION | | MARK | LOGIC 1 | LOGIC 0 | NULL | ERRONEOUS TRANSMISSION |

EP 1 014 273 A2

# FIG. 45

SAMPLING POINT

TIMEOUT DECISION

(a) NORMAL :     : 2   1=NORMAL

=MARK

(b) ABNORMAL EXAMPLE1 :     : 3   1=ABNORMAL

1   1   1   0   =MARK

(c) ABNORMAL EXAMPLE 2 :     : 1   0=ABNORMAL

1   1   1   1   =INHIBIT PATTERN

EP 1 014 273 A2

# FIG. 46

FIG. 47

# FIG. 48

SENT FROM MASTER: WAVEFORM (a)

```
        1 2 3 4 5 6 7 8 9 1011121314151617181920212223242526272829303132333435 36
******N M L L L L L L L L M N N N N N N N M N N N N N N N N N N N N N N N N N   ***
      L K 1 0 1 0 0 0 0 0 K L L L L L L L L K L L L L L L L L L L L L L L L L L
```

FILLER            FILLER

SLAVE 4b OUTPUT

SLAVE 2b OUTPUT

EP 1 014 273 A2

# FIG. 49

```
RETURNING TO MASTER: WAVEFORM (i)
        1 2 3 4 5 6 7 8 910111213141516171819202122232425262728293031323334 3536
******N M N N N L L L L L M L L L L L L L N M N N N N N N N****
        L K L L L 0 0 0 0 0 K 1 0 1 0 0 1 0 L K L L L L L L L L
```

FILLER

SLAVE 4b INPUT

SLAVE 3b INPUT

SLAVE 1b INPUT

# FIG. 50

SYNC FIELD | OUT FIELD | IN FIELD | BYTE FIELD

*****N M N N M X M Y Y Y··Y Y Y··Y Y M Y Y Y···Y Y Y··Y Y M N N N····N N********
L K L L K  K           K                    K L L L   L L

N : NULL   M : MARK   L : LOGIC VALUE  (L: LOGIC 0 OR L: LOGIC 1)  X:EITHER OF N M L L
L          K          V                 0              1                        L K 0 1

Y:EITHER OF N L L
            L 0 1

FIG. 51

# FIG. 52

SYNC FIELD    OUT FIELD    IN FIELD    BYTE FIELD

```
*****N M N N M L M L L L··L L L··L L M L L L···L N N··N N M N N N·····N N*********
      L K L L K 1 K V V V  V O O  O O K V V V   V L L  L L K L L L      L L
```

# FIG. 53

| SYNC FIELD | OUT FIELD | IN FIELD | BYTE FIELD |

```
*****N M N N M L M N N N··N N N··N N M N N N···N N N··N N M N N N·····N N*********
     L K L L K O K O O O  O L L  L L K L L L  L L L  L L K L L L      L L
```

99

EP 1 014 273 A2

# FIG. 54

| INPUT AND OUTPUT SPECIFICATIONS | NUMBER OF TRANSMISSION UNITS (UPON BENT SENT FROM GATEWAY) | | |
|---|---|---|---|
| | OUTPUT 128 POINTS<br>INPUT 128 POINTS | OUTPUT 256 POINTS<br>OUTPUT 256 POINTS | REMARKS |
| SYNC FIELD | 7 | 7 | |
| OUT FIELD | 129 | 257 | |
| IN FIELD | 129 | 257 | |
| BYTE FIELD | 512 | 1,024 | |
| SUBTOTAL | 777 | 1,545 | ←THERE IS A SPECIAL CASE |
| BUS IDLE | 10 OR MORE | 10 OR MORE | UPON INPUT AND OUTPUT/TEST |
| TOTAL | 787 OR MORE | 1,555 OR MORE | MESSAGE. |

# FIG. 55

a) ALL NORMAL:

b) WDT TIMEOUT:

c) ONLY GOING BUS RECEPTION
   IS ABNORMAL:

d) ONLY RETURNING BUS RECEPTION
   IS ABNORMAL:

e) BOTH GOING AND RETURNING BUS
   RECEPTIONS ARE ABNORMAL:

f) WHEN NO MESSAGE IS RECEIVED
   AFTER BUS POWER SUPPLY IS
   TURNED ON: Typ.

g) WHEN BUS POWER SUPPLY IS TURNED OFF:
   WHEN FUSE MELTS:

EP 1 014 273 A2

FIG. 56

# F I G. 57

# FIG. 58

EP 1 014 273 A2

# FIG. 59

| NODE No. | BIT OUTPUT | BIT INPUT | SLAVE CATEGORY | BUS BRANCH | BUS TOPOLOGY |
|---|---|---|---|---|---|
| 255 | 0 | 0 | DUMMY | 0 | |
| 254 | 1 | 3 | BIT I/O | 0 | |
| 253 | 2 | 0 | BIT I/O | 0 | |
| 252 | 0 | 4 | BIT I/O | 0 | |
| 251 | 1 | 0 | BIT I/O | 0 | |
| 250 | 0 | 0 | DUMMY | 1 | |
| 249 | 0 | 4 | BIT I/O | 1 | |
| 248 | • | • | • | • | |
| • | • | • | • | • | |
| • | • | • | • | • | |

FROM GATEWAY

# FIG. 60

EXAMPLE OF MESSAGE FRAME WHEN TRANSMISSION IS NORMAL
ASSUMED BIT INPUT AND OUTPUT STATUS :

|  | BIT OUTPUT | | BIT INPUT | |
|---|---|---|---|---|
|  | FRAME n | FRAME n+1 | FRAME n | FRAME n+1 |
| NODE 254 | L0 | L1 | L0,L1,L0 | L1,L0,L1 |
| 253 | L1,L0 | L0,L1 | ——— | ——— |
| 252 | ——— | ——— | L1,L0,L1,L0 | L0,L1,L0,L1 |
| 251 | L1 | L0 | ——— | ——— |

EP 1 014 273 A2

# FIG. 61

EXAMPLE OF MESSAGE FRAME WHEN TRANSMISSION IS NORMAL

INPUT AND OUTPUT MESSAGE FRAME n:

a) FRAME SENT FROM GW :
```
    1 2 3 4 5 6 7 8 910111213141516171819202122232425262728293031323334353637383940 41
****N M N N M M M L L L L L L L M N N N N N N N M N N N N N N N N N N N N N***
    L K L L K K K 0 1 0 1 0 0 0 0 K L L L L L L L L K L L L L L L L L L L L L L
                  0 1 0 1 0 OUTPUT SENT
```

c) BUS OUTPUT GOING TO NODE 254 :
```
    1 2 3 4 5 6 7 8 91011121314151617181920212223242526272829303132333435363738 39 40
 ****N M N N M M M N L L L L L L L M L L L N N N N M N N N N N N N N N N N N N N***
    L K L L K K K L 1 0 1 0 0 0 0 K 0 1 0 L L L L L K L L L L L L L L L L L L L L
                   0 OUTPUT READ       0 1 0 INPUT SENT
```

d) BUS OUTPUT GOING TO NODE 253 :
```
    1 2 3 4 5 6 7 8 910111213141516171819202122232425262728293031323334353637 3839
 ****N M N N M M M N N N L L L L L M L L L N N N N M N N N N N N N N N N N N N N***
    L K L L K K K L L L 1 0 0 0 0 K 0 1 0 L L L L L K L L L L L L L L L L L L L L
                     1 0 OUTPUT READ
```

EP 1 014 273 A2

# FIG. 62

EXAMPLE OF MESSAGE FRAME WHEN TRANSMISSION IS NORMAL

e ) BUS OUTPUT GOING TO NODE 252 :
```
      1 2 3 4 5 6 7 8 910111213141516171819202122232425262728293031323334353637 38
   ****N M N N M M M N N N L L L L L M L L L L L L L N M N N N N N N N N N N N N***
      L K L L K K K L L L 1 0 0 0 0 K 0 1 0 1 0 1 0 L K L L L L L L L L L L L L
                                      1 0 1 0  INPUT SENT
```
f ) BUS OUTPUT GOING TO NODE 251 :
```
      1 2 3 4 5 6 7 8 91011121314151617181920212223242526272829303132333435 36 37
   ****N M N N M M M N N N L L L L L M L L L L L L L N M N N N N N N N N N N N N***
      L K L L K K K L L L L 0 0 0 0 K 0 1 0 1 0 1 0 L K L L L L L L L L L L L L
                                     1  OUTPUT READ
```

k ) FRAME RETURNING TO GW :
```
      1 2 3 4 5 6 7 8 9101112131415161718192021222324252627282930 31
   ****N M N N M M M N N N L L L L M L L L L L L L N M N N N N N N***
      L K L K K K L L L L 0 0 0 0 K 0 1 0 1 0 1 0 L K L L L.L L L L
      READING OF OUTPUT 4 POINTS COMPLETED, 0 1 0 1 0 1 0 INPUT READ
```

# FIG. 63

EXAMPLE OF MESSAGE FRAME WHEN TRANSMISSION IS NORMAL

INPUT AND OUTPUT MESSAGE FRAME n + 1:

a) FRAME SENT FROM GW :
```
     1 2 3 4 5 6 7 8 910111213141516171819202122232425262728293031323334353637383940 41
****N M N N M M M L L L L L L L L M N N N N N N N M N N N N N N N N N N N N N N N N***
     L K L L K K K 1 0 1 0 0 0 0 0 K L L L L L L L L K L L L L L L L L L L L L L L L L
                   1 0 1 0  OUTPUT SENT
```

c) BUS OUTPUT GOING TO NODE 254 :
```
       1 2 3 4 5 6 7 8 910111213141516171819202122232425262728293031323334353637383940
   ****N M N N M M M N L L L L L L L L M L L L N N N N N M N N N N N N N N N N N N N N***
       L K L L K K K L 0 1 0 0 0 0 0 K 1 0 1 L L L L L L K L L L L L L L L L L L L L L L
                     1  OUTPUT READ      1 0 1  INPUT SENT
                   ↑ 1 0 1  PIN INPUT SAMPLING
                   ↓ 0  PIN OUTPUT (VALUE READ AT FRAME n)
```

d) BUS OUTPUT GOING TO NODE 253 :
```
       1 2 3 4 5 6 7 8 91011121314151617181920212223242526272829303132333435363738 39
   ****N M N N M M M N N N L L L L L M L L L N N N N N M N N N N N N N N N N N N N N***
       L K L L K K K L L L 0 0 0 0 0 K 1 0 1 L L L L L L K L L L L L L L L L L L L L L L
                     0 1  OUTPUT READ
                   ↓ 1 0  PIN OUTPUT (VALUE READ AT FRAME n)
```

# FIG. 64

EXAMPLE OF MESSAGE FRAME WHEN TRANSMISSION IS NORMAL

e ) BUS OUTPUT GOING TO NODE 252 :
```
        1 2 3 4 5 6 7 8 910111213141516171819202122232425262728293031323334353637 38
     ****N M N N M M M N N N L L L L L M L L L L L L L N M N N N N N N N N N N N N N***
        L K L L K K K L L L 0 0 0 0 0 K 1 0 1 0 1 0 1 L K L L L L L L L L L L L L L
                     ↑ 0 1 0 1 PIN INPUT SAMPLING, 0101 INPUT SENT
```

f ) BUS OUTPUT GOING TO NODE 251 :
```
        1 2 3 4 5 6 7 8 91011121314151617181920212223242526272829303132333435363 7
     ****N M N N M M M N N N N L L L L M L L L L L L L N M N N N N N N N N N N N N***
        L K L L K K K L L L L 0 0 0 0 K 1 0 1 0 1 0 1 L K L L L L L L L L L L L
                          0 OUTPUT READ
                     ↓ 1 PIN OUTPUT (VALUE READ AT FRAME n)
```

k ) FRAME RETURNING TO GW :
```
        1 2 3 4 5 6 7 8 910111213141516171819202122232425262728293031
     ****N M N N M M M N N N N L L L L M L L L L L L L N M N N N N N N***
        L K L L K K K L L L L 0 0 0 0 K 1 0 1 0 1 0 1 L K L L L L L L
        READING OF OUTPUT 4 POINTS COMPLETED, 1 0 1 0 1 0 1 INPUT READ
```

EP 1 014 273 A2

# FIG. 65

EXAMPLE OF MESSAGE FRAME UPON FAILURE 1

FAILURE 1: OPERATION MODE:TRANSMISSION ERROR DETECTION INPUT AND OUTPUT MESSAGE FRAME :

a) MESSAGE FRAME SENT FROM GW: INPUT AND OUTPUT MESSAGE FRAME :

```
     1 2 3 4 5 6 7 8 910111213141516171819202122232425262728293031323334353637383940 41
****N M N N M M M L L L L L L L L M N N N N N N N M N N N N N N N N N N N N N N N***
     L K L L K K K 1 0 1 0 0 0 0 0 K L L L L L L L L K L L L L L L L L L L L L L L L L
                 1 0 1 0  OUTPUT SENT
```

c) BUS OUTPUT GOING TO NODE 254 :
```
       1 2 3 4 5 6 7 8 910111213141516171819202122232425262728293031323334353637383940
  ****N M N N M M M N L L L L L L L M L L L N N N N N M N N N N N N N N N N N N N N N***
       L K L L K K K L 0 1 0 0 0 0 0 K 1 0 1 L L L L L K L L L L L L L L L L L L L L L L
                   1  OUTPUT READ      1 0 1  INPUT SENT
                   ↑ 101 PIN INPUT SAMPLING
                   ↓    0 PIN OUTPUT (VALUE READ AT FRAME n)
```

# FIG. 66

EXAMPLE OF MESSAGE FRAME UPON FAILURE 1

d ) BUS OUTPUT GOING TO NODE 253 :
```
      1 2 3 4 5 6 7 8 910111213141516171819202122232425262728293031323334353637383 9
  ****N M N N M M M N N L L L L L L L M L L L N N N N M N N N N N N N N N N N N N N***
      L K L L K K K L L 1 0 0 0 0 0 0 K 1 0 1 L L L L L K L L L L L L L L L L L L L
                        O OUTPUT READ  (ERRONEOUS READING)
                      ↓ 1 O  PIN OUTPUT  (VALUE READ AT FRAME n)
```

e ) BUS OUTPUT GOING TO NODE 252 :
```
      1 2 3 4 5 6 7 8 9101112131415161718192021222324252627282930313233343536373 8
  ****N M N N M M M N N L L L L L L L M L L L L L L L N M N N N N N N N N N N N N N***
      L K L L K K K L L 1 0 0 0 0 0 K 1 0 1 0 1 0 1 L K L L L L L L L L L L L L L
                      ↑ O 1 O 1  PIN INPUT SAMPLING, 0101  INPUT SENT
```

f ) BUS OUTPUT GOING TO NODE 251 :
```
      1 2 3 4 5 6 7 8 91011121314151617181920212223242526272829303132333435363 7
  ****N M N N M M M N N N L L L L L M L L L L L L N M N N N N N N N N N N N N N***
      L K L L K K K L L L 0 0 0 0 0 K 1 0 1 0 1 0 1 L K L L L L L L L L L L L L
                            1 OUTPUT READ  (ERRONEOUS READING)
                        ↓ 1  PIN OUTPUT  (VALUE READ AT FRAME n)
```

k ) FRAME RETURNING TO GW :
```
      1 2 3 4 5 6 7 8 910111213141516171819202122232425262728293031
  ****N M N N M M M N N N L L L L M L L L L L L L N M N N N N N N N***
      L K L L K K K L L L L 0 0 0 0 K 1 0 1 0 1 0 1 L K L L L L L L L
                    OUTPUT 3 POINTS READ    1 O 1 O 1 O 1  INPUT READ
                    (ERRONEOUS OUTPUT READING DETECTED)
```

EP 1 014 273 A2

# FIG. 67

EXAMPLE OF MESSAGE FRAME UPON FAILURE 1

FAILURE 1: TEST MESSAGE FRAME AT SELF-DIAGNOSTIC MODE :

a ) FRAME SENT FROM GW :

```
      1 2 3 4 5 6 7 8 910111213141516171819202122232425262728293031323334353637383940 41
****N M N N M L M N N N N N N N N M N N N N N N N N M N N N N N N N N N N N N N N N N***
      L K L L K 1 K L L L L L L L L K L L L L L L L L K L L L L L L L L L L L L L L L
```

c ) BUS OUTPUT GOING TO NODE 254 :

```
        1 2 3 4 5 6 7 8 9101112131415161718192021222324252627282930313233343536373839 40
  ****N M N N M L M L L N N N N N M N N N N N N N M N N N N N N N N N N N N N N N N***
        L K L L K 1 K O O L L L L L L L K L L L L L L L L K L L L L L L L L L L L L L L
                        O STATUS SENT
```

d ) BUS OUTPUT GOING TO NODE 253 :

```
        1 2 3 4 5 6 7 8 910111213141516171819202122232425262728293031323334353637383 9
  ****N M N N M L M L L L N N N N M N N N N N N N M N N N N N N N N N N N N N N N N***
        L K L L K 1 K O O O L L L L L L K L L L L L L L L K L L L L L L L L L L L L L L
                        O STATUS SENT
```

EP 1 014 273 A2

# FIG. 68

EXAMPLE OF MESSAGE FRAME UPON FAILURE 1

e ) BUS OUTPUT GOING TO NODE 252 :
```
      1 2 3 4 5 6 7 8 910111213141516171819202122232425262728293031323334353637 38
****N M N N M L M L L L L N N N M N N N N N N N M N N N N N N N N N N N***
    L K L L K 1 K 0 0 0 0 L L L L K L L L L L L L L K L L L L L L L L L L L
                      O STATUS SENT
```

f ) BUS OUTPUT GOING TO NODE 251 :
```
      1 2 3 4 5 6 7 8 91011121314151617181920212223242526272829303132333435 3637
****N M N N M L M L L L L N N N M N N N N N N N N M N N N N N N N N N N N***
    L K L L K 1 K 0 0 0 0 0 L L L K L L L L L L L L K L L L L L L L L L L L
                      O STATUS SENT
```

k ) FRAME RETURNING TO GW :
```
      1 2 3 4 5 6 7 8 910111213141516171819202122232425262728 2930
****N M N N M L M L L L L N N N M N N N N N N M N N N N***
    L K L L K 1 K 0 0 0 0 0 L L L K L L L L L L L L K L L L L L
                    O O O O O STATUS READ
```

# FIG. 69

EXAMPLE OF MESSAGE FRAME UPON FAILURE 2

FAILURE 2: OPERATION MODE:TRANSMISSION ERROR DETECTION AT INPUT AND OUTPUT MESSAGE FRAME :

a ) FRAME SENT FROM GW :
```
       1 2 3 4 5 6 7 8 910111213141516171819202122232425262728293031323334353637383940 41
****N M N N M M M L L L L L L L L M N N N N N N N M N N N N N N N N N N N N N N N N N N***
       L K L L K K K 1 0 1 0 0 0 0 0 K L L L L L L L L K L L L L L L L L L L L L L L L L
                     1 0 1 0  OUTPUT SENT
```

c ) BUS OUTPUT GOING TO NODE 254 :
```
           1 2 3 4 5 6 7 8 91011121314151617181920212223242526272829303132333435363738 3940
     ****N M N N M M M N L L L L L L L M L L L N N N N N M N N N N N N N N N N N N N N N N***
           L K L L K K K L 0 1 0 0 0 0 0 K 1 0 1 L L L L L L K L L L L L L L L L L L L L L L L
                          1  OUTPUT READ     1 0 1  INPUT SENT
                          ↑ 1 0 1  PIN INPUT SAMPLING
                          ↓ 0  PIN OUTPUT (VALUE READ AT FRAME n)
```

d ) BUS OUTPUT GOING TO NODE 253 :
```
           1 2 3 4 5 6 7 8 910111213141516171819202122232425262728293031323334353637 3839
     ****N M N N M M M N N N L L L L L M L L L N N N N N M N N N N N N N N N N N N N N N N***
           L K L L K K K L L L 0 0 0 0 0 K 1 0 1 L L L L L L K L L L L L L L L L L L L L L L L
                             0 1  OUTPUT READ
                             ↓ 1 0  PIN OUTPUT (VALUE READ AT FRAME n)
```

EP 1 014 273 A2

# FIG. 70

EXAMPLE OF MESSAGE FRAME UPON FAILURE 2

e ) BUS OUTPUT GOING TO NODE 252 :
```
      1 2 3 4 5 6 7 8 910111213141516171819202122232425262728293031323334353637 38
 ****N M N N M M M N N N L L L L L M L L L L L L L N M N N N N N N N N N N N N N***
      L K L L K K K L L L O O O O O K 1 O 1 O 1 O 1 L K L L L L L L L L L L L L L
                    ↑ O 1 O 1  PIN INPUT SAMPLING ˙ O 1 O 1  INPUT SENT
```

e ' ) BUS INPUT GOING TO NODE 251 :
```
      1 2 3 4 5 6 7 8 91011121314151617181920212223242526272829303132333435 36
 ****N M N N M M M N N N L L L L L M L L*********************************************
      L K L L K K K L L L O O O O O K 1 O
                                ↑ DISCONNECTION OF FOWARD BUS
```
f ) GOING BUS OUTPUT OF NODE 251 :
```
      1 2 3 4 5 6 7 8 9101112131415161718192021222324252627282930313233 34 35
 ****N M N N M M M N N N L L L L M L ***********************************************
      L K L L K K K L L L L O O O O K 1
                       O  OUTPUT READ ↑ TRANSMISSION UNIT TIMEOUT DETECTED
                    ↓ 1  PIN OUTPUT (VALUE READ AT FRAME n)
```

k ) FRAME RETURNING TO GW :
```
      1 2 3 4 5 6 7 8 9101112131415161718192021222324252627282930
 ****N M N N M M M N N N L L ***********************************************
      L K L L K K K L L L L O O
                          ↑ TRANSMISSION UNIT TIMEOUT DETECTED
```

EP 1 014 273 A2

# FIG. 71

EXAMPLE OF MESSAGE FRAME UPON FAILURE 2

{STUCK-AT FAULT}

a ) FRAME SENT FROM GW :
```
    1 2 3 4 5 6 7 8 910111213141516171819202122232425262728293031323334353637383940 41
****N M N N M L M N N N N N N N M N N N N N N N N N M N N N N N N N N N N N N N N N N***
    L K L L K 1 K L L L L L L L L K L L L L L L L L K L L L L L L L L L L L L L L L L
```

e ) BUS OUTPUT GOING TO NODE 252 :
```
        1 2 3 4 5 6 7 8 9101112131415161718192021222324252627282930313233343536 3738
    ****N M N N M L M L L L L N N N N M N N N N N N N N M N N N N N N N N N N N N N N***
        L K L L K 1 K 0 0 0 0 L L L L K L L L L L L L L K L L L L L L L L L L L L L L
                            O STATUS SENT
```

f ) BUS OUTPUT GOING TO NODE 251 :
```
        1 2 3 4 5 6 7 8 910111213141516171819202122232425262728293031323334 35
    *****************************************************************************
```

k ) FRAME RETURNING TO GW :
```
        1 2 3 4 5 6 7 8 910111213141516171819202122232425262728 2930
    *****************************************************************************
                (RETURNED MESSAGE-FRAME RECEPTION TIMEOUT DETECTED
```

EP 1 014 273 A2

# FIG. 72

EXAMPLE OF MESSAGE FRAME UPON FAILURE 2

(AT INTERMITTENT)

a) FRAME SENT FROM GW :
```
     1 2 3 4 5 6 7 8 910111213141516171819202122232425262728293031323334353637383940 41
****N M N N M L M N N N N N N N N M N N N N N N N N M N N N N N N N N N N N N N N N***
     L K L L K 1 K L L L L L L L L K L L L L L L L L K L L L L L L L L L L L L L L L L
```

e) BUS OUTPUT GOING TO NODE 252 :
```
         1 2 3 4 5 6 7 8 91011121314151617181920212223242526272829303132333435363738
     ****N M N N M L M L L L L N N N M N N N N N N N N M N N N N N N N N N N N N N N***
         L K L L K 1 K 0 0 0 0 L L L L K L L L L L L L L K L L L L L L L L L L L L L L
                         O STATUS SENT
```

f) BUS OUTPUT GOING TO NODE 251 :
```
         1 2 3 4 5 6 7 8 910111213141516171819202122232425262728293031323334353637
     ****N M N N M L M L L L L N N N M N N N N N N N N M N N N N N N N N N N N N N***
         L K L L K 1 K 0 0 0 0 1 L L L K L L L L L L L L K L L L L L L L L L L L L L
                         1 STATUS SENT (TRANSMISSION ERROR)
```

k) FRAME RETURNING TO GW :
```
         1 2 3 4 5 6 7 8 9101112131415161718192021222324252627282930
     ****N M N N M L M L L L L L N N N M N N N N N N N M N N N N N***
         L K L L K 1 K 0 0 0 0 0 L L L K L L L L L L L L K L L L L L
                         0 0 0 0 1 STATUS READ
                         (NODE 2 5 1 TRANSMISSION ERROR DETECTED)
```

# FIG. 73

EXAMPLE OF MESSAGE FRAME UPON FAILURE 3

FAILURE 3 (STUCK-AT FAULT): OPERATION MODE:TRANSMISSION ERROR DETECTION INPUT AND
                            OUTPUT MESSAGE FRAME :

a) FRAME SENT FROM GW :
```
     1 2 3 4 5 6 7 8 910111213141516171819202122232425262728293031323334353637383940 41
****N M N N M M M L L L L L L L L M N N N N N N N M N N N N N N N N N N N N N N*** 
     L K L L K K K 1 0 1 0 0 0 0 0 K L L L L L L L L K L L L L L L L L L L L L L L L
                   1 0 1 0  OUTPUT SENT
```

c) BUS OUTPUT GOING TO NODE 254 :
```
       1 2 3 4 5 6 7 8 91011121314151617181920212223242526272829303132333435363738 3940
    ****N M N N M M M N L L L L L L L M L L L N N N N N M N N N N N N N N N N N N N N*** 
       L K L L K K K L 0 1 0 0 0 0 0 K 1 0 1 L L L L L K L L L L L L L L L L L L L L L
                     1 OUTPUT READ    1 0 1  INPUT SENT
                     ↑ 1 0 1 PIN INPUT SAMPLING
                     ↓ 0 PIN OUTPUT (VALUE READ AT FRAME n)
```

d) BUS OUTPUT GOING TO NODE 253 :
```
         1 2 3 4 5 6 7 8 910111213141516171819202122232425262728293031323334353637 3839
      ****N M N N M M M N N N L L L L L M L L L N N N N N M N N N N N N N N N N N N N N*** 
         L K L L K K K L L L 0 0 0 0 0 K 1 0 1 L L L L L K L L L L L L L L L L L L L L L
                         0 1 OUTPUT READ
                         ↓ 1 0 PIN OUTPUT (VALUE READ AT FRAME n)
```

EP 1 014 273 A2

# FIG. 74

EXAMPLE OF MESSAGE FRAME UPON FAILURE 3

e ) BUS OUTPUT GOING TO NODE 252 :
```
          1 2 3 4 5 6 7 8 910111213141516171819202122232425262728293031323334353637 38
      ****N M N N M M M N N N L L L L L M L L L L L L L N M N N N N N N N N N N N***
          L K L L K K K L L L 0 0 0 0 0 K 1 0 1 0 1 0 1 L K L L L L L L L L L L L L
                          ↑ 0 1 0 1  PIN INPUT  0 1 0 1  INPUT SENT
```

f ) BUS OUTPUT GOING TO NODE 251 :
```
          1 2 3 4 5 6 7 8 91011121314151617181920212223242526272829303132333435363 7
      ****N M N N M M M N N N L L L L L M L L L L L L L N M N N N N N N N N N N N***
          L K L L K K K L L L L 0 0 0 0 K 1 0 1 0 1 0 1 L K L L L L L L L L L L L L
                          0 OUTPUT READ
                    ↓ PIN OUTPUT (VALUE READ AT FRAME n)
```

h ) BUS OUTPUT RETURNING TO NODE 252 :
```
          1 2 3 4 5 6 7 8 910111213141516171819202122232425262728293031 32
      ****N M N N M M M N N N L L L L M L L L L L L L L L L L L L L L***
          L K L L K K K L L L L 0 0 0 0 K 1 0 1 0 1 0 0 0 0 0 0 0 0 0 0
                                                  ↑ L O OCCURRENCE OF
                                                      STUCK-AT FAULT
```

k ) FRAME RETURNING TO GW :
```
          1 2 3 4 5 6 7 8 9101112131415161718192021222324252627282930
      ****N M N N M M M N N N L L L L M L L L L L L L L L L L L L L L***
          L K L L K K K L L L L 0 0 0 0 K 1 0 1 0 1 0 0 0 0 0 0 0 0 0 0
      READING OF OUTPUT 4 POINTS COMPLETED              ↑ NO MK
                                                          I N FIELD FORMAT
                                                            ERROR
```

# FIG. 75

EXAMPLE OF MESSAGE FRAME UPON FAILURE 3

FAILURE 3 (INTERMITTENT): OPERATION MODE:TRANSMISSION ERROR DETECTION INPUT AND
                          OUTPUT MESSAGE FRAME :

a) FRAME SENT FROM GW :
   1 2 3 4 5 6 7 8 910111213141516171819202122232425262728293031323334353637383940 41
****N M N N M M M L L L L L L L L M N N N N N N N M N N N N N N N N N N N N N N N N N N N***
     L K L L K K K 1 0 1 0 0 0 0 0 0 K L L L L L L L L K L L L L L L L L L L L L L L L L
                   1 O 1 O  OUTPUT SENT

c) BUS OUTPUT GOING TO NODE 254 :
    1 2 3 4 5 6 7 8 91011121314151617181920212223242526272829303132333435363738 3940
· ****N M N N M M M N L L L L L L L M L L L N N N N N M N N N N N N N N N N N N N N N***
      L K L L K K K L 0 1 0 0 0 0 0 K 1 0 1 L L L L L L K L L L L L L L L L L L L L L L
                      1  OUTPUT READ       1 O 1  INPUT SENT
                      ↑ 1 O 1 PIN INPUT SAMPLING
                      ↓ O PIN OUTPUT (VALUE READ AT FRAME n)

d) BUS OUTPUT GOING TO NODE 253 :
     1 2 3 4 5 6 7 8 9101112131415161718192021222324252627282930313233343536373839
   ****N M N N M M M N N N L L L L L M L L L N N N N N M N N N N N N N N N N N N N N N***
       L K L L K K K L L L 0 0 0 0 0 K 1 0 1 L L L L L L K L L L L L L L L L L L L L L L
                         O 1  OUTPUT READ
                         ↓ 1 1 O PIN OUTPUT (VALUE READ AT FRAME n)

# FIG. 76

EXAMPLE OF MESSAGE FRAME UPON FAILURE 3

e ) BUS OUTPUT GOING TO NODE 252 :
```
       1 2 3 4 5 6 7 8 910111213141516171819202122232425262728293031323334353637 38
     ****N M N N M M M N N N L L L L L M L L L L L L L N M N N N N N N N N N N N***
       L K L L K K K L L L L 0 0 0 0 0 K 1 0 1 0 1 0 1 L K L L L L L L L L L L L L
                         ↑ O 1 O 1  PIN INPUT SAMPLING   O 1 O 1  INPUT SENT
```

f ) BUS OUTPUT GOING TO NODE 251 :
```
       1 2 3 4 5 6 7 8 9101112131415161718192021222324252627282930313233343536 37
     ****N M N N M M M N N N L L L L M L L L L L L L N M N N N N N N N N N N N***
       L K L L K K K L L L L 0 0 0 0 K 1 0 1 0 1 0 1 L K L L L L L L L L L L L L
                         O OUTPUT READ
                       ↓1 PIN OUTPUT (VALUE READ AT FRAME n)
```

h ) BUS OUTPUT RETURNING TO NODE 252 :
```
       1 2 3 4 5 6 7 8 91011121314151617181920212223242526272829303132333435 3637
     ****N M N N M M M N N N L L L L L M L L L L L L L M N N N N N N N N N N N***
       L K L L K K K L L L L 0 0 0 0 K 1 0 1 0 1 0 0 0 K L L L L L L L L L L L L
                                                     ↑ LO:OCCURRENCE OF
                                                       STUCK-AT FAULT
                                                     ( 1 TRANSMISSION UNIT)
```

k ) FRAME RETURNING TO GW :
```
       1 2 3 4 5 6 7 8 910111213141516171819202122232425262728293031
     ****N M N N M M M N N N L L L L M L L L L L L L M N N N N N***
       L K L L K K K L L L L 0 0 0 0 K 1 0 1 0 1 0 0 0 K L L L L L L
     READING OF OUTPUT 4 POINTS COMPLETED              ↑ EXCESSIVE NUMBER
                                                         OF INPUT POINTS
```

EP 1 014 273 A2

# FIG. 77

EXAMPLE OF MESSAGE FRAME UPON FAILURE 3

FAILURE 3 (STUCK-AT FAULT): TEST MESSAGE FRAME OF SELF-DIAGNOSTIC MODE :

a) FRAME SENT FROM GW :
```
    1 2 3 4 5 6 7 8 910111213141516171819202122232425262728293031323334353637383940 41
****N M N N M L M N N N N N N N M N N N N N N N N N M N N N N N N N N N N N N N N N N***
    L K L L K 1 K L L L L L L L L K L L L L L L L L L K L L L L L L L L L L L L L L L L
```

c) BUS OUTPUT GOING TO NODE 254 :
```
    1 2 3 4 5 6 7 8 9101112131415161718192021222324252627282930313233343536373839 40
****N M N N M L M L L N N N N N N M N N N N N N N N N M N N N N N N N N N N N N N N N***
    L K L L K 1 K O O L L L L L L L K L L L L L L L L L K L L L L L L L L L L L L L L L
                    O STATUS SENT
```

d) BUS OUTPUT GOING TO NODE 253 :
```
    1 2 3 4 5 6 7 8 91011121314151617181920212223242526272829303132333435363738 39
****N M N N M L M L L L N N N N N M N N N N N N N N N M N N N N N N N N N N N N N N N***
    L K L L K 1 K O O O L L L L L L K L L L L L L L L L K L L L L L L L L L L L L L L L
                      O STATUS SENT
```

e) BUS OUTPUT GOING TO NODE 252 :
```
    1 2 3 4 5 6 7 8 910111213141516171819202122232425262728293031323334353637 38
****N M N N M L M L L L L N N N M N N N N N N N N N M N N N N N N N N N N N N N N N***
    L K L L K 1 K O O O O L L L L K L L L L L L L L L K L L L L L L L L L L L L L L L
                        O STATUS SENT
```

EP 1 014 273 A2

# FIG. 78

EXAMPLE OF MESSAGE FRAME UPON FAILURE 3

f ) BUS OUTPUT GOING TO NODE 251 :
```
          1 2 3 4 5 6 7 8 91011121314151617181920212223242526272829303132333435363 7
          ****N M N N M L M L L L L L N N N M N N N N N N N M N N N N N N N N N N N***
          L K L L K 1 K O O O O O L L L K L L L L L L L L L K L L L L L L L L L L L L
                                     O STATUS SENT
```

g ) BUS OUTPUT RETURNING TO NODE 251 :
```
          1 2 3 4 5 6 7 8 910111213141516171819202122232425262728293031323334353 6
          ****N M N N M L M L L L L L N N N M N N N N N N N M N N N N N N N N N N N***
          L K L L K 1 K O O O O O L L L K L L L L L L L L L K L L L L L L L L L L L L
```

h ) BUS OUTPUT RETURNING TO NODE 252 :
```
          1 2 3 4 5 6 7 8 91011121314151617181920212223242526272829303132333435
          ****L L L L L L L L L L L L L L L L L L L L L L L L L L L L L L L L L L L N***
          O O O O O O O O O O O O O O O O O O O O O O O O O O O O O O O O O O O O L
          ( L O  STUCK-AT FAULT ! ! ! ! ! )
```

i ) BUS OUTPUT RETURNING TO NODE 253 :
```
          1 2 3 4 5 6 7 8 910111213141516171819202122232425262728293031323334
          ****L L L L L L L L L L L L L L L L L L L L L L L L L L L L L L L L L L N***
          O O O O O O O O O O O O O O O O O O O O O O O O O O O O O O O O O O O L
```

k ) FRAME RETURNING TO GW :
```
          1 2 3 4 5 6 7 8 91011121314151617181920212223242526272829 30
          ****L L L L L L L L L L L L L L L L L L L L L L L L L L L L L L L***
          O O O O O O O O O O O O O O O O O O O O O O O O O O O O O O
          S Y N C FRAME FORMAT ERROR
                               O U T FIELD FORMAT ERROR (NO MK)
                                         I N FIELD FORMAT ERROR
                                             (NO MK)
```

EP 1 014 273 A2

# FIG. 79

EXAMPLE OF MESSAGE FRAME UPON FAILURE 3

FAILURE 3 (INTERMITTENT): TEST MESSAGE FRAME OF SELF-DIAGNOSTIC MODE :

a ) FRAME SENT FROM GW :
```
    1 2 3 4 5 6 7 8 910111213141516171819202122232425262728293031323334353637383940 41
****N M N N M L M N N N N N N N M N N N N N N N N M N N N N N N N N N N N N N N*** 
    L K L L K 1 K L L L L L L L L K L L L L L L L L K L L L L L L L L L L L L L L L L
```

c ) BUS OUTPUT GOING TO NODE 254 :
```
    1 2 3 4 5 6 7 8 910111213141516171819202122232425262728293031323334353637383940
  ****N M N N M L M L L N N N N N M N N N N N N N N M N N N N N N N N N N N N N N*** 
    L K L L K 1 K O O L L L L L L L K L L L L L L L L K L L L L L L L L L L L L L L
                     O STATUS SENT
```

d ) BUS OUTPUT GOING TO NODE 253 :
```
    1 2 3 4 5 6 7 8 910111213141516171819202122232425262728293031323334353637383839
  ****N M N N M L M L L L N N N N N M N N N N N N N N M N N N N N N N N N N N N N N*** 
    L K L L K 1 K O O O L L L L L L K L L L L L L L L K L L L L L L L L L L L L L L
                     O STATUS SENT
```

EP 1 014 273 A2

# FIG. 80

EXAMPLE OF MESSAGE FRAME UPON FAILURE 3

e ) BUS OUTPUT GOING TO NODE 252 :
```
      1 2 3 4 5 6 7 8 910111213141516171819202122232425262728293031323334353637 38
      ****N M N N M L M L L L N N N M N N N N N N M N N N N N N N N N N***
        L K L L K 1 K 0 0 0 0 L L L L K L L L L L L L K L L L L L L L L L L L
                           O STATUS SENT
```

f ) BUS OUTPUT GOING TO NODE 251 :
```
      1 2 3 4 5 6 7 8 9101112131415161718192021222324252627282930313233 34353637
      ****N M N N M L M L L L L L N N N M N N N N N N N M N N N N N N N N N N***
        L K L L K 1 K 0 0 0 0 0 L L L K L L L L L L L K L L L L L L L L L L L
                           O STATUS SENT
```

k ) FRAME RETURNING TO GW :
```
      1 2 3 4 5 6 7 8 91011121314151617181920212223242526272829 30
      ****N M N N M L M L L L L L N N N M N N N N N N M N N N N N***
        L K L L K 1 K 0 0 0 0 0 L L L K L L L L L L L K L L L L L
                       O O O O O STATUS READ
```

# FIG. 81

SYNC FIELD　　OUT FIELD　　IN FIELD　　BYTE FIELD

NOTE : L＝L OR N
　　　　　　 N　V　L

```
*****N M N N M X M L L··L N··N M  L L··L N··N M M L L··· L M L L··· L N N··········N*****
     L K L L K   K V V  V L  L K  V V  V L L K K N N   N K N N  N L L          L
```

IN FIELD

CH00 BYTE CH SLOT

TAG ｜ SLAVE SLOT ｜ MASTER SLOT ｜ BAYTE SLOT

CH01 BYTE CH SLOT

```
········N M   M   T S S S S M M M M B B B B B B B B P   M   T S S S···B B B P   N N··N
        L K   K   A S S R R S C C R 7 6 5 4 3 2 1 0 A   K   A S S R    2 1 0 A   L L  L
                  G 1 0 1 0 0 1 0 0                          G 1 0 1
```

1 2 3 4 5 6 7 8 9 10 11 12 13 14 15 16 17 18　19

EP 1 014 273 A2

# FIG. 82

SS: Slave Status: INDICATES VARIOUS SLAVE STATUSES

| SS1 | SS0 | ABBREVIATION | MEANING |
|---|---|---|---|
| LOGIC 0 | LOGIC 0 | N S L V R D Y | SLAVE OUT OF OPERATION |
| LOGIC 0 | LOGIC 1 | S L V R D Y | SLAVE IN OPERATION |
| LOGIC 1 | LOGIC 0 | S L V E R R | SLAVE ERROR DETECTED |
| LOGIC 1 | LOGIC 1 | S L V L P B K | SALVE IN LOOPBACK STATUS |

EP 1 014 273 A2

# FIG. 83

EP 1 014 273 A2

SR: Slave Response: INDICATES SLAVE RESPONSE TO COMMAND FROM MASTER

| S R 1 | S R 0 | ABBREVIATION | MEANING |
|---|---|---|---|
| LOGIC 0 | LOGIC 0 | N S L V R C V | FAILURE OF OR NO PRECEDING RECEPTION BY SLAVE |
| LOGIC 0 | LOGIC 1 | S L V R C V | NORMAL PRECEDING RECEPTION BY SLAVE |
| LOGIC 1 | LOGIC 0 | S L V T R S | PRESENT TRANSMISSION FROM SLAVE |
| LOGIC 1 | LOGIC 1 | S L V R C V T R S | NORMAL PRECEDING RECEPTION BY SLAVE AND PRESENT TRANSMISSION FROM SLAVE |

# FIG. 84

MS: Master Status: INDICATES MASTER STATUS

| M S O | ABBREVIATION | MEANING |
|-------|--------------|---------|
| LOGIC 0 | N M S T R R D Y | MASTER OUT OF OPERATION |
| LOGIC 1 | M S T R R D Y | MASTER IN OPERATION |

# FIG. 85

MC: Master Command: INDICATES VARIOUS COMMANDS FROM MASTER TO SLAVE

| MC1 | MC0 | ABBREVIATION | MEANING |
|---|---|---|---|
| LOGIC 0 | LOGIC 0 | INITISLV | SLAVE INITIALIZING COMMAND |
| LOGIC 0 | LOGIC 1 | ENBSLV | SLAVE STARTING COMMAND |
| LOGIC 1 | LOGIC 0 | MSTRTRS | MASTER TRANSMISSION |
| LOGIC 1 | LOGIC 1 | LOOPBK | LOOPBACK COMMAND |

EP 1 014 273 A2

# FIG. 86

MR: Master Response: INDICATES RESPONSE FROM MASTER TO SLAVE

| MR0 | ABBREVIATION | MEANING |
|---|---|---|
| LOGIC 0 | N M S T R R C V | FAILURE OF OR NO PRECEDING RECEPTION BY SLAVE |
| LOGIC 1 | M S T R R C V | NORMAL PRECEDING RECEPTION BY SLAVE |

EP 1 014 273 A2

# FIG. 87

BYTE SLOT
B7~B0, PA:  IF TAG = LOGIC 1:  IF ALL ARE LOGIC VALUES: MASTER SENT BYTE DATA
                                IF ALL ARE NULL: NO BYTE DATA
         : IF TAG = LOGIC 0:  IF ALL ARE LOGIC VALUES: SLAVE SENT BYTE DATA
                                IF ALL ARE NULL: NO BYTE DATA

        :B7:MSB, B0:LSB
         PA: PARITY BIT

EP 1 014 273 A2

# FIG. 88

```
T S S S S M M M M B B B B B B B B P
A S S R R S C C R 7 6 5 4 3 2 1 0 A
G 1 0 1 0 0 1 0 0
```

SLOT SENT
FROM GW

```
L N N N N L L L L N N N N N N N N
O L L L L O O O O L L L L L L L L
```

↓ · · · · · · · · · · · · · · · ↓

LO : LOGIC 0
L1 : LOGIC 1
LV : LOGIC VALUE (0 OR 1)
NL : NULL
↓ : SENT FROM GW
↑ : SENT FROM SLAVE

# FIG. 89

```
T S S S M M M M B B B B B B B B P
A S S R R S C C R 7 6 5 4 3 2 1 0 A
G 1 0 1 0 0 1 0 0
```

SLOT SENT
FROM GW

```
L N N N N L L L L N N N N N N N N
O L L L L O O O O L L L L L L L L
```

↓ . . . . . . . . . . . . . . . ↓

LO : LOGIC 0
L1 : LOGIC 1
LV : LOGIC VALUE (0 OR 1)
NL : NULL
↓ : SENT FROM GW
↑ : SENT FROM SLAVE

# FIG. 90

```
T S S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L N N N N N N N N N
L 0 0 0 0 0 0 0 0 0 L L L L L L L L L
```

↑ · · · · · · · ↑

L0 : LOGIC 0
L1 : LOGIC 1
LV : LOGIC VALUE (0 OR 1)
NL : NULL
↓ : SENT FROM GW
↑ : SENT FROM SLAVE

# FIG. 91

```
T S S S M M M M B B B B B B B B P
A S S R R S C C R 7 6 5 4 3 2 1 0 A
G 1 0 1 0 0 1 0 0
```

SLOT SENT
FROM GW

```
L N N N N L L L L N N N N N N N N
0 L L L L 1 0 1 0 L L L L L L L L
```

↓ · · · · · · · · · · · · · · · ↓

LO : LOGIC 0
L1 : LOGIC 1
LV : LOGIC VALUE (0 OR 1)
NL : NULL
↓ : SENT FROM GW
↑ : SENT FROM SLAVE

# FIG. 92

```
T S S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L N N N N N N N N N
L 0 0 0 0 1 0 1 0 L L L L L L L L L
```

↑ · · · · · · ↑

LO : LOGIC 0
L1 : LOGIC 1
LV : LOGIC VALUE (0 OR 1)
NL : NULL
↓ : SENT FROM GW
↑ : SENT FROM SLAVE

# FIG. 93

```
T S S S M M M M B B B B B B B B P
A S S R R S C C R 7 6 5 4 3 2 1 0 A
G 1 0 1 0 0 1 0 0
```

| SLOT RETURN FROM GW | N L L L L L L L L N N N N N N N N N  L 0 1 0 0 1 0 1 0 L L L L L L L L L |

↑ · · · · · · ↑

LO : LOGIC 0
L1 : LOGIC 1
LV : LOGIC VALUE (0 OR 1)
NL : NULL
↓ : SENT FROM GW
↑ : SENT FROM SLAVE

# FIG. 94

```
T S S S S M M M M B B B B B B B B P
A S S R R S C C R 7 6 5 4 3 2 1 0 A
G 1 0 1 0 0 1 0 0
```

SLOT SENT
FROM GW

```
L N N N N L L L L L L L L L L L L L
0 L L L L 1 0 1 0 V V V V V V V V V
```

↓ · · · · · · · · · · · · · · · ↓

L0 : LOGIC 0
L1 : LOGIC 1
LV : LOGIC VALUE (0 OR 1)
NL : NULL
↓ : SENT FROM GW
↑ : SENT FROM SLAVE

# FIG. 95

```
T S S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L N N N N N N N N N
L 0 1 0 1 1 1 1 0 0 L L L L L L L L L
```

↑ · · · · · · ↑

LO : LOGIC 0
L1 : LOGIC 1
LV : LOGIC VALUE (0 OR 1)
NL : NULL
↓ : SENT FROM GW
↑ : SENT FROM SLAVE

# FIG. 96

```
T S S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L L L L L L L L L L
L 0 1 0 0 1 1 0 0 V V V V V V V V V
```

↑ · · · · · · · ↑

LO : LOGIC 0
L1 : LOGIC 1
LV : LOGIC VALUE (0 OR 1)
NL : NULL
↓ : SENT FROM GW
↑ : SENT FROM SLAVE

# FIG. 97

```
T S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L L L L L L L L L
L 0 1 1 1 1 1 0 0 V V V V V V V V V
```

↑ · · · · · · · · · · · · · · · · ↑

L0 : LOGIC 0
L1 : LOGIC 1
LV : LOGIC VALUE (0 OR 1)
NL : NULL
↓ : SENT FROM GW
↑ : SENT FROM SLAVE

# FIG. 98

```
T S S S S M M M M B B B B B B B B P
A S S R R S C C R 7 6 5 4 3 2 1 0 A
G 1 0 1 0 0 1 0 0
```

SLOT SENT
FROM GW

```
L N N N N L L L L L L L L L L L L L L
O L L L L 1 1 0 1 V V V V V V V V V V
```

↓ · · · · · · · · · · · · · · · ↓

LO : LOGIC 0
L1 : LOGIC 1
LV : LOGIC VALUE (0 OR 1)
NL : NULL
↓ : SENT FROM GW
↑ : SENT FROM SLAVE

# FIG. 99

```
T S S S S M M M M B B B B B B B B P
A S S R R S C C R 7 6 5 4 3 2 1 0 A
G 1 0 1 0 0 1 0 0
```

SLOT SENT
FROM GW

```
L N N N N L L L L N N N N N N N N
O L L L L 1 0 1 0 L L L L L L L L L
```

↓ . . . . . . . . . . . . . . . . ↓

LO : LOGIC 0
L1 : LOGIC 1
LV : LOGIC VALUE (0 OR 1)
NL : NULL
↓ : SENT FROM GW
↑ : SENT FROM SLAVE

# FIG. 100

```
T S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L L L L L L L L L L
L 0 1 1 0 1 0 1 0 V V V V V V V V V
```

↑ · · · · · · · · · · · · · · · ↑

LO : LOGIC 0
L1 : LOGIC 1
LV : LOGIC VALUE (0 OR 1)
NL : NULL
↓ : SENT FROM GW
↑ : SENT FROM SLAVE

# FIG. 101

```
T S S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L N N N N N N N N N
L 0 1 0 0 1 0 1 0 L L L L L L L L L
```

↑ · · · · · · ↑

LO : LOGIC 0
L1 : LOGIC 1
LV : LOGIC VALUE (0 OR 1)
NL : NULL
↓ : SENT FROM GW
↑ : SENT FROM SLAVE

# FIG. 102

```
T S S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L N N N N N N N N N
L 1 0 0 0 1 1 0 0 L L L L L L L L L
```

↑ · · · · · · · ↑

LO : LOGIC 0
L1 : LOGIC 1
LV : LOGIC VALUE (0 OR 1)
NL : NULL
↓ : SENT FROM GW
↑ : SENT FROM SLAVE

# FIG. 103

```
T S S S M M M M B B B B B B B B P
A S S R R S C C R 7 6 5 4 3 2 1 0 A
G 1 0 1 0 0 1 0 0
```

SLOT SENT | L N N N N L L L L N N N N N N N N
FROM GW | O L L L L O O O O L L L L L L L L L

↓ · · · · · · · · · · · · · · · · ↓

LO : LOGIC 0
L1 : LOGIC 1
LV : LOGIC VALUE (0 OR 1)
NL : NULL
↓ : SENT FROM GW
↑ : SENT FROM SLAVE

# FIG. 104

```
T S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L N N N N N N N N N
L 0 0 0 0 0 0 0 0 0 L L L L L L L L L
```

↑ · · · · · · · ↑

LO : LOGIC 0
L1 : LOGIC 1
LV : LOGIC VALUE (0 OR 1)
NL : NULL
↓ : SENT FROM GW
↑ : SENT FROM SLAVE

150

# FIG. 105

```
T S S S M M M M B B B B B B B B P
A S S R R S C C R 7 6 5 4 3 2 1 0 A
G 1 0 1 0 0 1 0 0
```

SLOT SENT
FROM GW

| L N N N N L L L L N N N N N N N N |
| O L L L L 1 1 1 0 L L L L L L L L L |

↓ · · · · · · · · · · · · · · · ·

LO : LOGIC 0
L1 : LOGIC 1
LV : LOGIC VALUE (0 OR 1)
NL : NULL
↓ : SENT FROM GW
↑ : SENT FROM SL

# FIG. 106

```
T S S S S M M M M B B B B B B B B P
A S S R R S C C R 7 6 5 4 3 2 1 0 A
G 1 0 1 0 0 1 0 0
```

**SLOT RETURN**
**FROM GW**

```
N L L L L L L L L N N N N N N N N N
L 1 1 0 0 1 1 1 0 L L L L L L L L L
```

↑ · · · · · · · ↑

```
L0 : LOGIC 0
L1 : LOGIC 1
LV : LOGIC VALUE (0 OR 1)
NL : NULL
 ↓ : SENT FROM GW
 ↑ : SENT FROM SLAVE
```

# FIG. 107

```
T S S S M M M M B B B B B B B B P
A S S R R S C C R 7 6 5 4 3 2 1 0 A
G 1 0 1 0 0 1 0 0
```

SLOT SENT
FROM GW

```
L N N N N L L L L L L L L L L L L L
O L L L L 1 1 0 0 V V V V V V V V V
```

↓ · · · · · · · · · · · · · · · ↓

LO : LOGIC 0
L1 : LOGIC 1
LV : LOGIC VALUE (0 OR 1)
NL : NULL
↓ : SENT FROM GW
↑ : SENT FROM SLAVE

# FIG. 108

```
T S S S S M M M M B B B B B B B B P
A S S R R S C C R 7 6 5 4 3 2 1 0 A
G 1 0 1 0 0 1 0 0
```

SLOT RETURN | N L L L L L L L L N N N N N N N N N |
FROM GW | L 1 1 0 1 1 1 0 0 L L L L L L L L L |

↑ · · · · · · · · · · · · · · · ↑

LO : LOGIC 0
L1 : LOGIC 1
LV : LOGIC VALUE (0 OR 1)
NL : NULL
↓ : SENT FROM GW
↑ : SENT FROM SLAVE

154

# FIG. 109

```
T S S S M M M M B B B B B B B B P
A S S R R S C C R 7 6 5 4 3 2 1 0 A
G 1 0 1 0 0 1 0 0
```

SLOT SENT
FROM GW

```
L N N N N L L L L N N N N N N N N N
0 L L L L 1 0 1 0 L L L L L L L L L
```

↓ · · · · · · · · · · · · · · · · ↓

```
L0 : LOGIC 0
L1 : LOGIC 1
LV : LOGIC VALUE (0 OR 1)
NL : NULL
↓ : SENT FROM GW
↑ : SENT FROM SLAVE
```

## FIG. 110

```
T S S S S M M M M B B B B B B B B P
A S S R R S C C R 7 6 5 4 3 2 1 0 A
G 1 0 1 0 0 1 0 0
```

SLOT RETURN
FROM GW

```
N L L L L L L L L L L L L L L L L L
L 1 1 1 0 1 0 1 0 V V V V V V V V V
```

↑ · · · · · · · · · · · · · · · · ↑

L0 : LOGIC 0
L1 : LOGIC 1
LV : LOGIC VALUE (0 OR 1)
NL : NULL
↓ : SENT FROM GW
↑ : SENT FROM SLAVE

# FIG. 111

```
T S S S M M M M B B B B B B B B P
A S S R R S C C R 7 6 5 4 3 2 1 0 A
G 1 0 1 0 0 1 0 0
```

SLOT SENT
FROM GW

```
L N N N N L L L L L L L L L L L L L
0 L L L L 1 1 0 1 V V V V V V V V V
```

↓ · · · · · · · · · · · · · · · ↓

LO : LOGIC 0
L1 : LOGIC 1
LV : LOGIC VALUE (0 OR 1)
NL : NULL
↓ : SENT FROM GW
↑ : SENT FROM SLAVE

# FIG. 112

# FIG. 113

REQBOUTL

ACKBINL

REQBINL

ACKBOUTL

I03～0H

I03H
I02H
I01H
I00H

| SS0 | D7 | D3 | PS1 |
|-----|----|----|----|
| SC1 | D6 | D2 | PS0 |
| SC0 | D5 | D1 | PC0 |
| PA  | D4 | D0 | PA  |

SLAVE
CHIP    MICROCOMPUTER

# FIG. 114

INPUT AND OUTPUT MESSAGE FRAME UPON FAILURE: IF THERE ARE TWO BYTE DATA TRANSMISSION SLAVES

a) FRAME SENT FROM GW :

```
··· N N N M M L N N N N L L L L L L L L L L L L M L N N N N L L L L N N ···N··N****
    L L L K K O L L L L L 1 1 0 0 V V V V V V V V K O L L L L L 0 0 0 0 L L    L L
          |         CHOO              |         CHO1           |
             BYTE DATA SENT              INITIALIZED STATUS
```

EP 1 014 273 A2

# FIG. 115

EP 1 014 273 A2

k ) FRAME RETURNED TO GW :

```
···N N N M M N L L L L L L L L L L L L L L L L M L N N N N L L L L N N ···N··N****
   L L L K K L 0 0 0 0 1 1 0 0 V V V V V V V V V K 0 L L L L 0 0 0 0 L L    L L
         |          C H 0 0                    |         C H 0 1            |
```

2ND BYTE DATA TRANSMISSION    IN NORMAL SLOT FOR SECOND SLAVE,
SLAVE RECEIVES SLOT FOR       SENT VALUE IS RETURNED WITH TAG = 1.
FIRST SLAVE. ERROR IS
DETECTED UPON BYTE DATA
RECEPTION DURING INITIALIZATION

# FIG. 116

TEST MESSAGE FRAME OF SELF-DIAGNOSTIC MODE :

k ) FRAME RETURNED TO GW :

```
****N M N N M L M L L L L L L L · L L L···L N··· N M N N N·· N M N N ··· N *****
    L K L L K 1 K 0 0 0 0 1 0 0   0 1 0   0 L   L K L L L   L K L L     L
                        ↑           ↑
                    NODE 251    SECOND BYTE TRANSMISSION
                    ABNORMAL    SLAVE ABNORMAL CONDITION
                    CONDITION   DETECTED
                    DETECTED
```

# FIG. 117

| | 1100 | | 1102 | | 1103 | | |
|---|---|---|---|---|---|---|---|

HOST COMPUTER — COMMUNICATION CONTROLLER

COMMUNICATION LINE

TERMINAL 1 — 1101₁

TERMINAL 1 — 1101₂

TERMINAL 1 — 1101n

MASTER STATION

SLAVE STATIONS

# FIG. 118

| 1201 | 1203 | 1202 |
|---|---|---|

COMMUNICATION LINE

| COMPUTER | | COMPUTER |
|---|---|---|

MASTER STATION

FIG. 119

# FIG. 120

CODE SCHEME        : 7-BIT CODE
VERTICAL PARITY    : EVEN PARITY
NUMBER OF STOP BITS : 1 BIT
INTERFRAME SPACE   : ZERO

# FIG. 121

BIT TIME
(UNIT LENGTH)

BIT CONFIGURATION: STR:START BIT : 1

b1~b7:7-BIT CODE : 7

(b1:LSB, b7:MSB)

PA :PARITY BIT : 1

STP :STOP BIT : 1

TOTAL 10

# FIG. 122

EP 1 014 273 A2

## FIG. 123

FRAME START BIT

RTR BIT

DELIMITER BIT

ACK SLOT

| 1 | 11 | 1 | 6 | 0, 8, 16, 24, 32, ······64 | 15 | 1 | 1 | 7 | 3 |

OBJECT

OPERATION
FIELD

DATA FIELD

CRC

FRAME
END

INTER
FRAME
SPACE

ARBITRATION
FIELD

CRC
FIELD

DATA FRAME

EP 1 014 273 A2

FIG. 124

EP 1 014 273 A2

FIG. 125